# EUROPEAN PATENT SPECIFICATION

(11) **EP 4 436 687 B1**
(45) Date of publication and mention of the grant of the patent: **03.06.2026**
(21) Application number: 22722643.8
(22) Date of filing: 22.04.2022
(51) Int. Cl.: B01D 46/00, B01D 46/24, B01D 46/64

(54) **SAFETY FILTER ELEMENT, FILTER SYSTEM, FILTER ASSEMBLY**
SICHERHEITSFILTERELEMENT, FILTERSYSTEM, FILTERANORDNUNG
ÉLÉMENT FILTRANT DE SÉCURITÉ, SYSTÈME FILTRANT, ENSEMBLE FILTRANT

(30) Priority: 23.11.2021 US 202163282621 P
(43) Date of publication of application: 02.10.2024
(73) Proprietor: Donaldson Company, Inc., Bloomington, MN 55431 (US)
(72) Inventor: VERSTRAETE, Mathijs, Bloomington, MN 55431 (US); VAN DE POEL, Günther, Bloomington, MN 55431 (US); CATOOR, Bart, Bloomington, MN 55431 (US); DECOSTER, Kristof, Bloomington, MN 55431 (US)
(74) Representative: Oryon NV
(86) International application number: PCT/US2022/026034
(87) International publication number: WO 2023/096662

(56) References cited:
- EP-A1- 3 881 922
- GB-A- 1 499 922
- US-A- 4 135 899
- US-A1- 2020 155 988

## Description

### Technical Field

The disclosure relates to filter arrangements, typically for use in filtering air, such as intake air for internal combustion engines, and more particularly relates to filter assemblies arranged in a housing to provide desired filtering capabilities.

### Background

Air or other gas filtering is desirable, or necessary, in various systems. Examples of such systems may include the air intake to internal combustion engines and crankcase ventilation filter assemblies. These filter assemblies may include one or more filter cartridges. For example, a first (main) filter cartridge may be a primary filtration element and a second (safety) filter cartridge may be used in connection with the first filter cartridge, such as by inserting the second filter cartridge within the first filter cartridge. When the first and second filter cartridges have such a nested configuration, the cartridges are configured to align and seal to each other and/or to an air cleaner housing/clean air duct/housing cover for operation, such as on a vehicle.

From US 10,682,597 B2 a filter assembly is known that comprises a safety filter element (referred to as second filter media pack 1064 in the context of Fig. 3 of said reference) and a main filter element (referred to as the filter media pack 1026).

From WO 2017/106752 A1, an air filter cartridge comprising a media pack having a media pack outer perimeter and including media having opposite inlet and outlet flow ends is known. A seal arrangement circumscribing the media pack outer perimeter is provided, the seal arrangement including a radially directed first seal segment in at least one joining radially directed deviation seal segment extending away from the first seal segment in a direction towards one of the inlet and outlet flow ends.

From WO 2021/188967 A1, a filter element for insertion into a housing of a filter system is known, whereby the filter element comprises a filter media pack for filtering a fluid, having an outer circumferential face extending between a first outer axial face and a second outer axial face opposite the first outer axial face. The filter element further comprises a seal receiver sealingly attached to the filter medium pack and wherein the seal receiver comprises a closed-loop surface for receiving a removable circumferential seal member, whereby said closed-loop surface forms a contour shape with single-fold rotational symmetry.

A filter assembly as described in US 10,682,597 B2 uses the safety filter element to protect elements, like for example a combustion engine or a turbine, which are arranged downstream of the filter assembly in the instances, when the main filter element needs to be exchanged. When a main filter element is removed from the housing of the filter assembly, there is a risk of debris passing through the housing and leaving the housing via an outlet opening of the housing to then travel further towards the elements arranged downstream of the filter assembly with the risk of causing substantial damage to these elements, if a safety filter element is missing that prevents exactly this. With the safety filter element in place, the main filter element can be removed from the housing and replaced with a new main filter element without the risk existing that debris passing through the housing of the filter assembly and exits the housing at the outlet opening. Such debris will be caught by the safety filter element.

US4135899A discloses an improved air cleaner having a filter specially adapted for ready insertion and removal without tools, and for improvement of the seal against direct air flow between the inlet and outlet of the cleaner.

EP3881922A1 relates to a filter element for insertion into a housing of a filter system. The filter element comprises a filter medium pack and a seal receiver. The filter medium pack has an outer circumferential face extending between a first outer axial face and a second outer axial face, opposite the first outer axial face. The filter element further comprises a seal receiver sealingly attached to the filter medium pack. The seal receiver comprises a closed-loop surface suitable for receiving a removeable circumferential seal member, and the closed-loop surface is forming a contour shape with single-fold rotational symmetry.

### Summary

It is an object of the present disclosure to provide a safety filter element according to claim 1, a tool catcher according to claim 8, and a filter system according to claim 9.

Given the above-described background, the problem to be solved by the disclosure is to provide a safety filter element and a filter system, that increase the security of preventing unfiltered fluid to leave the filter assembly and/or can be manufactured more environmentally friendly.

This problem is solved by a safety filter element according to claim 1 a filter system according to claim 9. Preferred embodiments are discussed in the subordinate claims and the description following hereafter.

The disclosure is based on the general concept to provide the safety filter element with a sealing component that is suitable to seal against the main filter element and a housing sealing component that is suitable to seal against the housing. Hence, instead of providing the main filter element with a seal that seals against the safety filter element, according to the disclosure, the safety filter element has one sealing component that seals against the main filter element.

This general concept of the disclosure can especially be implemented by way of providing at least one safety filter element endcap, whereby the safety filter element endcap comprises a safety filter element circumferential support structure, whereby a sealing component is arranged on the safety filter element circumferential support structure and extends along the safety filter element circumferential support structure, and to provide the safety filter element endcap additionally with a housing sealing component.

A filter element that is designed in such a manner can be used to seal against a main filter element, especially in embodiments where the safety filter element is arranged at least partially inside the main filter element. Hence, for those designs, where a safety filter element is at least partially arranged inside a main filter element, the sealing component that can be used to seal the main filter element against the safety filter element is provided on the safety element and remains with the safety filter element, even if the main filter element is exchanged.

The disclosure makes use of the idea that a sealing component that seals a main filter element against a safety filter element can be made of material that is much more longer lasting than the main filter media. The disclosure is based on the concept that in typical use cases, the main filter media and hence the main filter element needs to be exchanged more frequently than the sealing component. Typically, the main filter element needs to be exchanged because of the main filter media being defective or being clogged up much earlier than would be the need to exchange the sealing component. Typically, a sealing component is much more longer lasting than a main filter media. The disclosure now works with the concept to place the sealing component that seals the main filter element against the safety filter element on the safety filter element rather than on the main filter element. In doing so, the sealing component remains with the safety filter element in the filter assembly even in the situations, where the main filter element needs to be exchanged. This has cost advantages and ecological advantages. In the prior art, where the sealing component is arranged on the main filter element, a well functional sealing component is exchanged and typically thrown away with the main filter element, because the main filter media has reached its maximum lifetime. The sealing component in these situations typically is, however, still functional and would not have needed to be exchanged. Hence, in the prior art, sealing components that are still well functional are being thrown away, which leads to higher costs and is less ecological. The disclosure does away with these problems, because it allows the sealing component to be used longer, as the sealing component remains in the filter assembly together with the safety filter element.

The disclosure pertains to a safety filter element. A safety filter element as such is a marketable object that can be sold to customers that have a filter assembly in order for these customers to newly implement the disclosure. The disclosure manifests itself already in the safety filter element itself.

The disclosure also pertains to a filter system that comprises the safety filter element according to the disclosure and a main filter element that comprises a main filter media. A filter system that comprises a main filter element and the safety filter element is a marketable system that can be sold to customers that already have a filter assembly in order to newly implement the disclosure. Hence, the filter system also is a way of implementing the disclosure and an object that manifests the disclosure.

The disclosure also pertains to a filter assembly that comprises the safety filter element according to the disclosure and a housing. Such a filter assembly in itself is a marketable good. It can be sold to customers that already have a main filter element and that can place this already existing main filter element into such a filter assembly.

The safety filter element extends along a longitudinal axis. In a preferred embodiment, the longitudinal axis is an axis of symmetry for at least one element that makes up the safety filter element, for example for a safety filter media. However, designs are also feasible, where the longitudinal axis is not an axis of symmetry for any of the elements that make up the safety filter element.

The safety filter element according to one aspect of the disclosure comprises a safety filter media. This filter media at least partially surrounds a safety filter media inner space. In a preferred embodiment, the safety filter media extends between first and second opposite media ends and. First media end may be engaged by a first end piece (e.g., endcap). The second media end may be engaged by a second end piece (e.g., endcap). Thus, the safety filter media may extend between opposite end caps (e.g., end pieces). The safety filter media can be pleated media, although alternatives are possible. The safety filter media can be configured in a cylindrical pattern, although alternatives are possible. For example, the safety filter media can be somewhat conical in extension between the opposite ends. Also, the safety filter media can be configured with non-circular inner and/or outer perimeters; for example oblong, oval or other cross-sectional configurations are possible. In some embodiments, the safety filter media is arranged around a central plenum to achieve these various configurations.

In a preferred embodiment, for example in a cylindrical pleated safety filter element, the flow generally makes a substantial turn as its passes into and out of the safety filter media. That is, the flow enters the cylindrical safety filter element through a cylindrical side, and then turns to exit through an open end of the safety filter media (in forward-flow systems). In a typical reverse-flow system, the flow enters the cylindrical pleated safety filter element through an open end of the safety filter media and then turns to exit through a side of the cylindrical filter media.

The safety filter media can be provided as any type of media, such as media commonly used in secondary filter elements. Exemplary media include pleated and non-pleated media (such as non-woven media) and multilayer laminate.

In a preferred embodiment, the safety filter media has the shape of a hollow cylinder or a hollow truncated cone. In a preferred embodiment, the safety filter media surrounds the safety filter media inner space at the sides, while the safety filter media inner space is delimited at the top by a safety filter element endcap and/or is delimited at the bottom by a safety filter element endcap. In a preferred embodiment the safety filter media inner space is delimited at the top by a closed safety filter element endcap and is delimited at the bottom by a safety filter element endcap that has an outlet opening.

The main filter element used as part of the filter system and/or the filter assembly comprises a main filter media. In a preferred embodiment, the main filter media extends between first and second opposite media ends and. First media end may be engaged by a first end piece (e.g., endcap). The second media end may be engaged by a second end piece (e.g., endcap). Thus, the main filter media may extend between opposite end caps (e.g., end pieces). The main filter media can be pleated media, although alternatives are possible. The main filter media can be configured in a cylindrical pattern, although alternatives are possible. For example, the main filter media can be somewhat conical in extension between the opposite ends. Also, the main filter media can be configured with non-circular inner and/or outer perimeters; for example oblong, oval or other cross-sectional configurations are possible. In some embodiments, the main filter media is arranged around a central plenum to achieve these various configurations.

In a preferred embodiment, for example in a cylindrical pleated main filter element, the flow generally makes a substantial turn as its passes into and out of the main filter media. That is, the flow enters the cylindrical main filter element through a cylindrical side, and then turns to exit through an open end of the main filter media (in forward-flow systems). In a typical reverse-flow system, the flow enters the cylindrical pleated main filter element through an open end of the main filter media and then turns to exit through a side of the cylindrical filter media.

The main filter media can be provided as any type of media, such as media commonly used in secondary filter elements. Exemplary media include pleated and non-pleated media (such as non-woven media) and multilayer laminate.

In a preferred embodiment the safety filter media and the main filter media are made from the same material. In an alternative, the safety media and the main filter media are made from different material. The difference in material may be:

a difference in the chemical composition, while other parameters like density or porosity or number of layers may be the same or may be different;

a difference in the number of layers, while other parameters like density or porosity or chemical composition may be the same or may be different;

a difference in the density, while other parameters like number of layers or porosity or chemical composition may be the same or may be different;

a difference in porosity, while other parameters like density or number of layers or chemical composition may be the same or may be different.

In a preferred embodiment, the safety filter media is comprising fibers and the main filter media comprises fibers and the difference in chemical composition is achieved by way of choosing different fibers for the safety filter media and the main filter media.

In a preferred embodiment, the safety filter media comprises a pleated filter media and the main filter media comprises a pleated filter media, whereby the difference in material is obtained either solely or possibly in combination with other differences by a difference in pleat depth and/or pleat count and/or pleat spacers.

In a preferred embodiment, the main filter media has the shape of a hollow cylinder or a hollow truncated cone.

The safety filter element according to the disclosure has a safety filter element circumferential support structure. The term "circumferential support structure" is understood to refer to a support structure that is a closed-loop in any shape or form. Starting from any point on a circumferential support structure, one can follow a path along the circumferential support structure to then return to the starting point. In a preferred embodiment, starting from any point on the safety filter element circumferential support structure, one can follow a path along the safety filter element circumferential support structure said path circulating around an axis of the safety filter element, which axis does not dissect the safety filter element circumferential support structure to then return to the starting point. Preferably the axis is the longitudinal axis of the safety filter element.

In a preferred embodiment the safety filter element circumferential support structure is a safety filter element circumferential surface. The term "circumferential surface" is understood to refer to a surface that is a closed-loop in any shape or form. Starting from any point on a circumferential surface, one can follow a path along the circumferential surface to then return to the starting point. In a preferred embodiment, starting from any point on the safety filter element circumferential surface, one can follow a path along the safety filter element circumferential surface said path circulating around an axis of the safety filter element, which axis does not dissect the safety filter element circumferential surface to then return to the starting point. Preferably the axis is the longitudinal axis of the safety filter element.

This description speaks of a safety filter element circumferential support structure, because embodiments are feasible, where the sealing component that is arranged on the safety filter element circumferential support structure and extends along the safety filter element circumferential support structure cannot be lifted of the safety filter element circumferential support structure to reveal a surface. This is the case for embodiments where the sealing component has been glued or welded onto the safety filter element circumferential support structure. This is however also the case in embodiments where the safety filter element circumferential support structure and the sealing component have been produced by way of co-injection, especially by way of 2k injection molding (two-shot injection). In such an embodiment the safety filter element circumferential support structure is provided by injecting a first material into the mold, while the sealing component is provided by injecting a second material into the mold. In such an embodiment, the safety filter element circumferential support structure and the sealing component can be identified by dissecting the endcap. The material transition between the material that forms the safety filter element circumferential support structure and the material that forms the sealing component will become visible in the cross section. Typically, the material used for the safety filter element circumferential support structure has the higher shore strength compared to the material that is used for the sealing component.

In order to better describe the possible geometric shapes of the safety filter element circumferential surface according to one aspect of the disclosure the safety filter element circumferential surface is described to comprise several surface sections. This way of describing the safety filter element circumferential surface is simply used as a means to describe the possible shapes of the safety filter element circumferential surface. The reference to surface sections does not necessarily mean that the individual surface sections are distinguishable elements of the safety filter element circumferential surface. While such designs are feasible, it is not necessary for a surface section to terminate in an edge, a latch, a ridge, a crest or any other clearly distinguishable object that distinguishes a first surface section from a second, neighboring surface section. The disclosure also has embodiments, where the safety filter element circumferential surface is described to comprise several surface sections, but where these surface sections are not distinguishable from one another, for example in cases where the safety filter element circumferential surface has the shape of the outer surface of a cylinder, which can be said to be made up of a multitude, possibly even an infinite number of surface sections that are not distinguishable from one another. The same rationale goes for a safety filter element circumferential surface that has the shape of the outward facing surface of a truncated cone, which also is a possible embodiment for a safety filter element circumferential surface according to the disclosure.

In other embodiments of the safety filter element circumferential surface, at least one surface section is, however, clearly distinguishable from other surface sections. This might be the case, because the specific surface section terminates in a ridge with a neighboring surface section terminating at the same ridge. Alternatively, a surface section might become distinguishable, because the terminal line that is understood to be the line that describes the one end of the surface section has a discrete change in its shape, for example a kink.

The shape of the safety filter element circumferential surface preferably is chosen in view of the sealing component that according to the disclosure is provided to extend along the safety filter element circumferential surface. Especially, the safety filter element circumferential surface can be chosen in its shape to corporate with a sealing component that is intended to primarily function as a radial seal. If the sealing component is chosen to primarily function as an axial seal, the shape of the safety filter element circumferential surface can be adapted appropriately.

According to the disclosure, at least one of the surface sections is arranged such that the normal vector to the surface section is orientated either along the axis or parallel to the axis or arranged to point to the outside of the safety filter element. The normal vector is a vector that starts on the surface section and is orientated perpendicular to the surface section. A normal vector that points to the outside of the safety filter element is considered to be a vector that starting from the surface of the surface section extends to the outside of the safety filter element and does not pass through the filter element to the opposite side of the filter element.

In a preferred embodiment, the majority of the surface sections that make up the safety element circumferential surface are arranged such that a normal vector to the respective surface section is orientated either along the axis or parallel to the axis or arranged to point to the outside of the safety filter element. In a preferred embodiment, the overwhelming majority of the surface sections (more than 75%) that make up the safety element circumferential surface are arranged such that a normal vector to the respective surface section is orientated either along the axis or parallel to the axis or arranged to point to the outside of the safety filter element.

In a preferred embodiment, the safety filter element circumferential surface is provided by a circular ring-shaped surface that is arranged in a plane that is perpendicular to the longitudinal axis of the safety filter element. The circular ring-shaped safety filter element circumferential surface preferably is arranged as a ring around the longitudinal axis. If a sealing component is provided to extend along such a safety filter element circumferential surface, the sealing component would preferably be used to work as an axial seal. Such a circular circumferential ring-shaped safety filter element circumferential surface can for example be provided by a ring-shaped wall or rim that protrudes radially over other parts of the safety filter element. Such a design provides additional advantages, because the opposite side of such a circumferential wall or rim, that likewise could be circular and ring-shaped and is pointing in the opposite direction, can be used to provide a housing sealing component to extend along this surface, which housing sealing component in this design could also work as an axial seal. In such a design, all surface sections of the safety filter element circumferential surface would be arranged such that the normal vector to the respective surface section is orientated parallel to the axis of the safety filter element.

As a modification of the above-described design, the radially extending circumferential wall or rim can be adapted to have a surface section that is offset from the remainder of the wall/rim in the direction of the axis of the safety filter element. In such a design, several surface sections that make up the safety filter element circumferential surface would be arranged in the same plane, while a further surface section would for example be arranged in a different, but parallel plane, while a first angled surface section would connect the several surface sections with the one, offset surface section on the one side, while a second angled surface section would connect the several surface sections and the one, offset surface section on the other side. The angled surface sections would hence appear like a ramp leading from the plane in which the several surface sections are arranged up to the offset surface section on the one side and down from the offset surface section back to the plane, in which the several surface sections are arranged. In such a design, the several surface sections would each be arranged such that the normal vector to the respective surface section is orientated parallel to the axis. The surface section that is offset from the several surface sections would also be a surface section that is arranged such that the normal vector to this offset surface section is orientated parallel to the axis. Only the angularly arranged surface sections would not be arranged such that their respective normal vector would be arranged parallel to the axis. Their normal vector would be orientated at an angle to a plane that contains the axis.

If in the above-described design the offset surface section is considered to be a peak and if several such peaks are provided as part of the safety filter element circumferential surface, the safety filter element circumferential surface can be described to be undulating between peaks and valleys with angular orientated surface sections arranged between the peaks and the valleys. The maximum peak-valley-structure would be a wave-like structure, where the respective surface section on the peak, that has a normal vector parallel to the axis becomes infinitesimally small and the surface section that forms the valley and also has a normal vector that is parallel to the axis also becomes infinitesimally small.

In a preferred embodiment, the peak-valley-design or the wave design can be made symmetrical in the sense that the peaks/tip of the waves are distributed at equal distance around the safety filter element circumferential surface. In a preferred embodiment, the safety filter element circumferential surface forms a contour shape with a single fold rotational symmetry. In such a design, only one hill (peak) would be provided for example or if several hills (peaks) are provided, they would be distributed around the safety filter element circumferential surface at unequal distances.

In an alternative, the safety filter element circumferential surface would be designed to work together with a sealing component that extends along the safety filter element circumferential surface and is intended to be used primarily as a radial seal. In such a design, at least one surface section of the safety filter element circumferential surface would be arranged such that the normal vector to the surface section is orientated to point to the outside of the safety filter element, preferably to point radially outward from the safety filter element. In a preferred embodiment, the safety filter element circumferential surface is made up of surface sections that each form part of the outside surface of a cylinder. In the most simple way, all surface sections would be arranged at the same height of the cylinder making the safety filter element circumferential surface a ring-shaped surface on the outside of a cylinder.

As a modification of the above-described design, a safety filter element circumferential surface that is ring-shaped surface on the outside of a cylinder can be adapted to have a surface section that is offset from the remainder of surface sections in the direction of the axis of the safety filter element. In such a design, several surface sections that make up the safety filter element circumferential surface would be arranged to form a part of a ring-shaped surface on the outside of a cylinder, while a further surface section would for example be arranged to form a part of a different ring-shaped surface on the outside of the cylinder, while a first angled surface section would connect the several surface sections with the one, offset surface section on the one side, while a second angled surface section would connect the several surface sections and the one, offset surface section on the other side. The angled surface sections would hence appear like a ramp leading from the ring on which the several surface sections are arranged up to the offset surface section on the one side and down from the offset surface section back to the ring, in which the several surface sections are arranged. In such a design, all normal vectors to the respective surface section would be orientated to point to the outside of the safety filter element.

If in the above-described design the offset surface section is considered to be a peak, and if several such peaks are provided as part of the safety filter element circumferential surface, the safety filter element circumferential surface can be described to be undulating between peaks and valleys with angular orientated surface sections arranged between the peaks and the valleys. The maximum peak-valley-structure would be a wave-like structure, where the respective surface section on the peak becomes infinitesimally small and the surface section that forms the valley also becomes infinitesimally small.

In a preferred embodiment, the peak-valley-design or the wave design can be made symmetrical in the sense that the peaks/tip of the waves are distributed at equal distance around the safety filter element circumferential surface. In a preferred embodiment, the safety filter element circumferential surface forms a contour shape with a single fold rotational symmetry. In such a design, only one hill (peak) would be provided for example or if several hills (peaks) are provided, they would be distributed around the safety filter element circumferential surface at unequal distances.

As a modification of the above-described design, a safety filter element circumferential surface that is a ring-shaped surface on the outside of a cylinder can be adapted to have a surface section that is offset from the remainder of surface sections in the radial direction. In such a design, several surface sections that make up the safety filter element circumferential surface would be arranged to form a part of a ring-shaped surface on the outside of a cylinder, while a further surface section would for example be arranged on a bump or protrusion that protrudes radially from the ring-shaped surface on the outside of the cylinder or a further surface section would for example be arranged more radially inward, e.g. on a concave portion or in a recess. A first angled surface section could connect the several surface sections with the one, offset surface section on the one side, while a second angled surface section could connect the several surface sections and the one, offset surface section on the other side. The angled surface sections would hence appear like a ramp leading from the ring on which the several surface sections are arranged radially outwards (or inwards, depending on the placement of the offset surface section) to the offset surface section on the one side and radially inwards (or outwards) from the offset surface section back to the ring, in which the several surface sections are arranged. In such a design, all normal vectors to the respective surface section would be orientated to point to the outside of the safety filter element.

If in the above-described design the offset surface section is considered to be a peak, and if several such peaks are provided as part of the safety filter element circumferential surface, the safety filter element circumferential surface can be described to be undulating between peaks and valleys with angular orientated surface sections arranged between the peaks and the valleys. The maximum peak-valley-structure would be a wave-like structure, where the respective surface section on the peak becomes infinitesimally small and the surface section that forms the valley also becomes infinitesimally small.

In a preferred embodiment, the peak-valley-design or the wave design can be made symmetrical in the sense that the peaks/tip of the waves are distributed at equal distance around the safety filter element circumferential surface. In a preferred embodiment, the safety filter element circumferential surface forms a contour shape with a single fold rotational symmetry. In such a design, only one hill (peak) would be provided for example or if several hills (peaks) are provided, they would be distributed around the safety filter element circumferential surface at unequal distances.

In a preferred embodiment, the several surface sections that make up the safety filter element circumferential surface are arranged in the same plane, such that the safety filter element circumferential surface is arranged in said plane.

In a preferred embodiment, the several surface sections that make up the safety filter element circumferential surface are designed to jointly form the outer surface of a cone, such that the safety filter element circumferential surface is designed to form the outer surface of a cone.

In a preferred embodiment, the several surface sections that make up the safety filter element circumferential surface are designed to jointly form the outer surface of a cylinder, such that the safety filter element circumferential surface is designed to form the outer surface of a cylinder.

In a preferred embodiment, the several surface sections that make up the safety filter element circumferential surface are designed to jointly form the outer surface of a cylinder that has a triangular or quadratic or pentagonal, hexagonal, heptagonal octagonal, polygonal, preferably polygonal but symmetrical cross-section cylinder.

In a preferred embodiment, a first surface section that belongs to the several surface sections that make up the safety filter element circumferential surface is arranged in a plane, such that at least that part of the safety filter element circumferential surface that is made up of the first surface section is arranged in said plane and a second surface section that belongs to the several surface sections that make up the safety filter element circumferential surface is arranged in a different plane.

In a preferred embodiment, a first surface section that belongs to the several surface sections that make up the safety filter element circumferential surface is designed to form a section of the outer surface of a cone, such that at least that part of the safety filter element circumferential surface that is made up of the first surface section is designed to form a section of the outer surface of a cone, and a second surface section that belongs to the several surface sections that make up the safety filter element circumferential surface is designed to form a section of the outer surface of a different cone.

In a preferred embodiment, a first surface section that belongs to the several surface sections that make up the safety filter element circumferential surface is designed to form a section of the outer surface of a cylinder, such that at least that part of the safety filter element circumferential surface that is made up of the first surface section is designed to form a section of the outer surface of a cylinder, and a second surface section that belongs to the several surface sections that make up the safety filter element circumferential surface is designed to form a section of the outer surface of a different cylinder.

For surface sections that are not flat but curved, the respective surface section is considered to be arranged such that the normal vector is orientated to point to the outside of the safety filter element, especially radially outward from the safety filter element, if the normal vector to at least one infinitesimally small subsection of such a surface section is orientated to point to the outside of the safety filter element.

Safety filter element circumferential surfaces can also be designed such that several surface sections, preferably the majority of the surface sections, preferably all surface sections that make up the safety filter element circumferential surface, are arranged in the same plane. Safety filter element circumferential surfaces can also be designed such that several surface sections, preferably the majority of the surface sections, preferably all surface sections that make up the safety filter element circumferential surface, are arranged on the outside surface of a cylinder, preferably at the same height. Safety filter element circumferential surfaces can also be designed such that several surface sections, preferably the majority of the surface sections, preferably all surface sections that make up the safety filter element circumferential surface, are arranged on a cone.

According to one embodiment of the disclosure, at least one sealing component extends along the safety filter element circumferential surface. This sealing component is a circumferential object, which is understood to refer to an object that is a closed loop, whereby starting from any point on said object, one can follow a path along said object to then return to the starting point, especially one can follow a path along said object circulating around an axis of the safety filter element, which axis does not dissect the object to then return to the starting point, the axis preferably being the longitudinal axis of the safety filter element.

The sealing component can be provided by material that is attached to the safety filter element circumferential surface. The sealing component hence does not need to be a standalone or independent object. While the sealing component can, for example, be an O-ring and hence would be a standalone, independent object, a sealing component that is provided by sealing material being attached to the safety filter element circumferential surface, for example sealing material galvanized onto the safety filter element circumferential surface would not be considered to be a standalone, independent object.

The sealing component can be a PU (polyurethan) seal, which in its sealing state preferably is compressed. The PU seal could be overmolded over a structure, for example an endcap. The overmolding can take place by way of potting. Also, TPE (thermoplastic elastomer) seals, Thixo seals (silicone) could be used. Also seal using the material FERMAPOR K31-A-9308-5-VP5 / K31-B-4 from Sonderhof / Henkel can be used.

The sealing component can be part of a larger object. In a preferred embodiment, the sealing component is part of a sleeve-like element, in which certain parts of the sleeve make up the sealing component, while in a preferred embodiment, other parts can make up a further sealing component, for example a housing sealing component.

In a preferred embodiment, the safety filter element has a first safety filter element circumferential surface as described above and has a second safety filter element circumferential surface, whereby a first sealing component extends along the first safety filter element circumferential surface and a second sealing component extends along the second safety filter element circumferential surface. The first sealing component and the second sealing component can be parts of the same standalone, independent object, for example of a sleeve. In such a design, the first sealing component can be used as an axial seal, while the second sealing component could be used as a radial seal.

The sealing component can be attached to the safety filter element circumferential surface by being galvanized to it, by way of being glued to it, by way of being welded to it. The sealing component, especially if it is a standalone, independent elastic object can hold itself to the safety filter element circumferential surface by way of its resilience. If the sealing component is, for example, provided by an O-ring, the resilience of the O-ring could hold the O-ring to the safety filter element circumferential surface.

The safety filter element circumferential surface can be provided with a groove, especially with a circumferential groove and the sealing component, especially if it is a standalone, independent object, can be arranged partially inside the groove. For example, an O-ring can be arranged to be partially inside a groove.

In a preferred embodiment, the sealing component is a lip seal. Preferably, the lip seal comprises a thermoplastic elastomer (TPE) or another flexible material suitable for providing the effect of sealing. Generally, the sealing direction of a lip seal on a filter element corresponds to the direction of the dominant component selected from the radial and axial components of the lip.

Preferably, the lip seal comprises an elongate base, having a front and a back surface, and an elongate lip structure or lip extending from the front surface of the base. Preferably, it comprises a T-shaped transversal cross-section. The base is preferably planar in nature and makes an angle with the lip. The angle is preferably within the range of 30° to 90°. The angle is more preferably close to 90°, for instance within the range of 75° to 89°. According to preferred embodiment, the lip forms an oblique angle with respect to the axis of the safety filter element. This "symmetry-breaking" bias of the lip seal causes the lip seal to move in the right direction in use, for the lip seal to be optimally resistant to a difference in air pressure to which it is typically exposed. According to preferred embodiments, wherein the support structure comprises a smooth, continuous, band surface that follows the seal, the base of the lip seal is preferably attached to the band surface. Preferably, it is in direct or indirect contact with said band surface. The base of the lip seal is preferably substantially parallel or parallel to the smooth, continuous, band surface that follows it. In such embodiments, the angle between the lip and the band surface preferably corresponds to the angle between the lip and the base.

According to preferred embodiments, the angle between the lip seal and the base is constant along the closed loop trajectory. According to alternative embodiments, the angle between the lip seal and the base is not constant along the closed loop trajectory

In a preferred embodiment, in addition to the one sealing component, a housing sealing component is provided on the safety filter element. In a preferred embodiment, the safety filter element has a housing sealing element circumferential surface.

In a preferred embodiment the housing sealing component is arranged on and extends along a housing sealing element circumferential support structure. The term "circumferential support structure" is understood to refer to a support structure that is a closed-loop in any shape or form. Starting from any point on a circumferential support structure, one can follow a path along the circumferential support structure to then return to the starting point. In a preferred embodiment, starting from any point on the safety filter element circumferential support structure, one can follow a path along the safety filter element circumferential support structure said path circulating around an axis of the safety filter element, which axis does not dissect the safety filter element circumferential support structure to then return to the starting point. Preferably the axis is the longitudinal axis of the safety filter element.

In a preferred embodiment the housing sealing element circumferential support structure is a housing sealing element circumferential surface. The term "circumferential surface" is understood to refer to a surface that is a closed-loop in any shape or form. Starting from any point on a circumferential surface, one can follow a path along the circumferential surface to then return to the starting point. In a preferred embodiment, starting from any point on the safety filter element circumferential surface, one can follow a path along the safety filter element circumferential surface said path circulating around an axis of the safety filter element, which axis does not dissect the safety filter element circumferential surface to then return to the starting point. Preferably the axis is the longitudinal axis of the safety filter element.

This description speaks of a housing sealing element circumferential support structure, because embodiments are feasible, where the housing sealing component that is arranged on the housing sealing element circumferential support structure and extends along the housing sealing element circumferential support structure cannot be lifted of the housing sealing element circumferential support structure to reveal a surface. This is the case for embodiments where the housing sealing component has been glued or welded onto the housing sealing element circumferential support structure. This is however also the case in embodiments where the housing sealing element circumferential support structure and the housing sealing component have been produced by way of co-injection, especially by way of 2k injection molding (two-shot injection). In such an embodiment the housing sealing element circumferential support structure is provided by injecting a first material into the mold, while the housing sealing component is provided by injecting a second material into the mold. In such an embodiment, the housing sealing element circumferential support structure and the housing sealing component can be identified by dissecting the endcap. The material transition between the material that forms the housing sealing element circumferential support structure and the material that forms the sealing component will become visible in the cross section. Typically, the material used for the housing sealing element circumferential support structure has the higher shore strength compared to the material that is used for the housing sealing component.

In order to better describe the possible geometric shapes of the housing sealing element circumferential surface according to one aspect of the disclosure the housing sealing element circumferential surface is described to comprise several surface sections. This way of describing the housing sealing element circumferential surface is simply used as a means to describe the possible shapes of the housing sealing element circumferential surface. The reference to surface sections does not necessarily mean that the individual surface sections are distinguishable elements of the housing sealing element circumferential surface. While such designs are feasible, it is not necessary for a surface section to terminate in an edge, a latch, a ridge, a crest or any other clearly distinguishable object that distinguishes a first surface section from a second, neighboring surface section. The disclosure also has embodiments, where the housing sealing element circumferential surface is described to comprise several surface sections, but where these surface sections are not distinguishable from one another, for example in cases where the housing sealing element circumferential surface has the shape of the outer surface of a cylinder, which can be said to be made up of a multitude, possibly even an infinite number of surface sections that are not distinguishable from one another. The same rationale goes for a housing sealing element circumferential surface that has the shape of the outward facing surface of a truncated cone, which also is a possible embodiment for a housing sealing element circumferential surface according to the disclosure.

In other embodiments of the housing sealing element circumferential surface, at least one surface section is, however, clearly distinguishable from other surface sections. This might be the case, because the specific surface section terminates in a ridge with a neighboring surface section terminating at the same ridge. Alternatively, a surface section might become distinguishable, because the terminal line that is understood to be the line that describes the one end of the surface section has a discrete change in its shape, for example a kink.

The shape of the housing sealing element circumferential surface preferably is chosen in view of the housing sealing component that according to the disclosure is provided to extend along the housing sealing element circumferential surface. Especially, the housing sealing element circumferential surface can be chosen in its shape to corporate with a housing sealing component that is intended to primarily function as a radial seal. If the housing sealing component is chosen to primarily function as an axial seal, the shape of the housing sealing element circumferential surface can be adapted appropriately.

According to the disclosure, at least one of the surface sections is arranged such that the normal vector to the surface section is orientated either along the axis or parallel to the axis or arranged to point to the outside of the safety filter element. The normal vector is a vector that starts on the surface section and is orientated perpendicular to the surface section. A normal vector that points to the outside of the safety filter element is considered to be a vector that starting from the surface of the surface section extends to the outside of the safety filter element and does not pass through the filter element to the opposite side of the filter element.

In a preferred embodiment, the majority of the surface sections that make up the safety element circumferential surface are arranged such that a normal vector to the respective surface section is orientated either along the axis or parallel to the axis or arranged to point to the outside of the safety filter element. In a preferred embodiment, the overwhelming majority of the surface sections (more than 75%) that make up the safety element circumferential surface are arranged such that a normal vector to the respective surface section is orientated either along the axis or parallel to the axis or arranged to point to the outside of the safety filter element.

In a preferred embodiment, the housing sealing element circumferential surface is provided by a circular ring-shaped surface that is arranged in a plane that is perpendicular to the axis of the safety filter element. The circular ring-shaped housing sealing element circumferential surface preferably is arranged as a ring around the axis. If a housing sealing component is provided to extend along such a housing sealing element circumferential surface, the housing sealing component would preferably be used to work as an axial seal. Such a circular circumferential ring-shaped housing sealing element circumferential surface can for example be provided by a ring-shaped wall or rim that protrudes radially over other parts of the safety filter element. Such a design provides additional advantages, because the opposite side of such a circumferential wall or rim, that likewise could be circular and ring-shaped and is pointing in the opposite direction, can be used to provide a sealing component to extend along this surface, which sealing component in this design could also work as an axial seal. In such a design, all surface sections of the housing sealing element circumferential surface would be arranged such that the normal vector to the respective surface section is orientated parallel to the axis of the safety filter element.

As a modification of the above described design, the radially extending circumferential wall or rim can be adapted to have a surface section that is offset from the remainder of the wall/rim in the direction of the axis of the safety filter element. In such a design, several surface sections that make up the housing sealing element circumferential surface would be arranged in the same plane, while a further surface section would for example be arranged in a different, but parallel plane, while a first angled surface section would connect the several surface sections with the one, offset surface section on the one side, while a second angled surface section would connect the several surface sections and the one, offset surface section on the other side. The angled surface sections would hence appear like a ramp leading from the plane in which the several surface sections are arranged up to the offset surface section on the one side and down from the offset surface section back to the plane, in which the several surface sections are arranged. In such a design, the several surface sections would each be arranged such that the normal vector to the respective surface section is orientated parallel to the axis. The surface section that is offset from the several surface sections would also be a surface section that is arranged such that the normal vector to this offset surface section is orientated parallel to the axis. Only the angularly arranged surface sections would not be arranged such that their respective normal vector would be arranged parallel to the axis. Their normal vector would be orientated at an angle to a plane that contains the axis.

If in the above-described design the offset surface section is considered to be a peak and if several such peaks are provided as part of the housing sealing element circumferential surface, the housing sealing element circumferential surface can be described to be undulating between peaks and valleys with angular orientated surface sections arranged between the peaks and the valleys. The maximum peak-valley-structure would be a wave-like structure, where the respective surface section on the peak, that has a normal vector parallel to the axis becomes infinitesimally small and the surface section that forms the valley and also has a normal vector that is parallel to the axis also becomes infinitesimally small.

In a preferred embodiment, the peak-valley-design or the wave design can be made symmetrical in the sense that the peaks/tip of the waves are distributed at equal distance around the housing sealing element circumferential surface. In a preferred embodiment, the housing sealing element circumferential surface forms a contour shape with a single fold rotational symmetry. In such a design, only one hill (peak) would be provided for example or if several hills (peaks) are provided, they would be distributed around the housing sealing element circumferential surface at unequal distances.

In an alternative, the housing sealing element circumferential surface would be designed to work together with a housing sealing component that extends along the housing sealing element circumferential surface and is intended to be used primarily as a radial seal. In such a design, at least one surface section of the housing sealing element circumferential surface would be arranged such that the normal vector to the surface section is orientated to point to the outside of the safety filter element, preferably to point radially outward from the safety filter element. In a preferred embodiment, the housing sealing element circumferential surface is made up of surface sections that each form part of the outside surface of a cylinder. In the most simple way, all surface sections would be arranged at the same height of the cylinder making the housing sealing element circumferential surface a ring-shaped surface on the outside of a cylinder.

As a modification of the above-described design, a housing sealing element circumferential surface that is ring-shaped surface on the outside of a cylinder can be adapted to have a surface section that is offset from the remainder of surface sections in the direction of the axis of the safety filter element. In such a design, several surface sections that make up the housing sealing element circumferential surface would be arranged to form a part of a ring-shaped surface on the outside of a cylinder, while a further surface section would for example be arranged to form a part of a different ring-shaped surface on the outside of the cylinder, while a first angled surface section would connect the several surface sections with the one, offset surface section on the one side, while a second angled surface section would connect the several surface sections and the one, offset surface section on the other side. The angled surface sections would hence appear like a ramp leading from the ring on which the several surface sections are arranged up to the offset surface section on the one side and down from the offset surface section back to the ring, in which the several surface sections are arranged. In such a design, all normal vectors to the respective surface section would be orientated to point to the outside of the safety filter element.

If in the above-described design the offset surface section is considered to be a peak, and if several such peaks are provided as part of the housing sealing element circumferential surface, the housing sealing element circumferential surface can be described to be undulating between peaks and valleys with angular orientated surface sections arranged between the peaks and the valleys. The maximum peak-valley-structure would be a wave-like structure, where the respective surface section on the peak becomes infinitesimally small and the surface section that forms the valley also becomes infinitesimally small.

In a preferred embodiment, the peak-valley-design or the wave design can be made symmetrical in the sense that the peaks/tip of the waves are distributed at equal distance around the housing sealing element circumferential surface. In a preferred embodiment, the housing sealing element circumferential surface forms a contour shape with a single fold rotational symmetry. In such a design, only one hill (peak) would be provided for example or if several hills (peaks) are provided, they would be distributed around the housing sealing element circumferential surface at unequal distances.

In a preferred embodiment, the several surface sections that make up the housing sealing element circumferential surface are arranged in the same plane, such that the housing sealing element circumferential surface is arranged in said plane.

In a preferred embodiment, the several surface sections that make up the housing sealing element circumferential surface are designed to jointly form the outer surface of a cone, such that the housing sealing element circumferential surface is designed to form the outer surface of a cone.

In a preferred embodiment, the several surface sections that make up the housing sealing element circumferential surface are designed to jointly form the outer surface of a cylinder, such that the housing sealing element circumferential surface is designed to form the outer surface of a cylinder.

In a preferred embodiment, a first surface section that belongs to the several surface sections that make up the housing sealing element circumferential surface is arranged in a plane, such that at least that part of the housing sealing element circumferential surface that is made up of the first surface section is arranged in said plane and a second surface section that belongs to the several surface sections that make up the housing sealing element circumferential surface is arranged in a different plane.

In a preferred embodiment, a first surface section that belongs to the several surface sections that make up the housing sealing element circumferential surface is designed to form a section of the outer surface of a cone, such that at least that part of the housing sealing element circumferential surface that is made up of the first surface section is designed to form a section of the outer surface of a cone, and a second surface section that belongs to the several surface sections that make up the housing sealing element circumferential surface is designed to form a section of the outer surface of a different cone.

In a preferred embodiment, a first surface section that belongs to the several surface sections that make up the housing sealing element circumferential surface is designed to form a section of the outer surface of a cylinder, such that at least that part of the housing sealing element circumferential surface that is made up of the first surface section is designed to form a section of the outer surface of a cylinder, and a second surface section that belongs to the several surface sections that make up the housing sealing element circumferential surface is designed to form a section of the outer surface of a different cylinder.

For surface sections that are not flat but curved, the respective surface section is considered to be arranged such that the normal vector is orientated to point to the outside of the safety filter element, especially radially outward from the safety filter element, if the normal vector to at least one infinitesimally small subsection of such a surface section is orientated to point to the outside of the safety filter element.

Housing sealing element circumferential surfaces can also be designed such that several surface sections, preferably the majority of the surface sections, preferably all surface sections that make up the housing sealing element circumferential surface, are arranged in the same plane. Housing sealing element circumferential surfaces can also be designed such that several surface sections, preferably the majority of the surface sections, preferably all surface sections that make up the housing sealing element circumferential surface, are arranged on the outside surface of a cylinder, preferably at the same height. Housing sealing element circumferential surfaces can also be designed such that several surface sections, preferably the majority of the surface sections, preferably all surface sections that make up the housing sealing element circumferential surface, are arranged on a cone.

According to one embodiment of the disclosure, at least one housing sealing component extends along the housing sealing element circumferential surface. This housing sealing component is a circumferential object, which is understood to refer to an object that is a closed loop, whereby starting from any point on said object, one can follow a path along said object to then return to the starting point, especially one can follow a path along said object circulating around an axis of the safety filter element, which axis does not dissect the object to then return to the starting point, the axis preferably being the longitudinal axis of the safety filter element.

The housing sealing component can be provided by material that is attached to the housing sealing element circumferential surface. The housing sealing component hence does not need to be a standalone or independent object. While the housing sealing component can, for example, be an O-ring and hence would be a standalone, independent object, a housing sealing component that is provided by sealing material being attached to the housing sealing element circumferential surface, for example sealing material galvanized onto the housing sealing element circumferential surface would not be considered to be a standalone, independent object.

The housing sealing component can be a PU (polyurethan) seal, which in its sealing state preferably is compressed. The PU seal could be overmolded over a structure, for example an endcap. The overmolding can take place by way of potting. Also, TPE (thermoplastic elastomer) seals, Thixo seals (silicone) could be used. Also seal using the material FERMAPOR K31-A-9308-5-VP5 / K31-B-4 from Sonderhof / Henkel can be used.

The housing sealing component can be part of a larger object. In a preferred embodiment, the housing sealing component is part of a sleeve-like element, in which certain parts of the sleeve make up the housing sealing component, while in a preferred embodiment, other parts can make up a further sealing component, for example a sealing component to seal against the main filter element.

In a preferred embodiment, the safety filter element has a first housing sealing element circumferential surface as described above and has a second housing sealing element circumferential surface, whereby a first housing sealing component extends along the first housing sealing element circumferential surface and a second housing sealing component extends along the second housing sealing element circumferential surface. The first housing sealing component and the second housing sealing component can be parts of the same standalone, independent object, for example of a sleeve. In such a design, the first housing sealing component can be used as an axial seal, while the second housing sealing component could be used as a radial seal.

The safety filter element endcap has a circular rim that encircles the longitudinal axis of the safety filter element, whereby
- the safety filter element circumferential support structure is provided above the circular rim or on an upward facing surface of the rim; and
- the housing sealing element circumferential support structure is provided below the circular rim or on a downward facing surface of the rim.

In a preferred embodiment, the safety filter element has a safety filter element endcap that is arranged on one end of the safety filter media, wherein a safety filter element circumferential surface, preferably the safety filter element circumferential surface described above by way of the several surface sections, but possible also a differently designed safety filter element circumferential surface is arranged on the safety filter element endcap. In a preferred embodiment the safety filter media has a safety filter media inner space and the safety filter element endcap has an outlet opening that leads to the safety filter media inner space. In a preferred embodiment, the safety filter element only has one outlet opening that leads to the safety filter media inner space.

In a preferred embodiment, the safety filter media has a safety filter media inner space, whereby a safety filter element endcap is provided that has an outlet opening that leads to the safety filter media inner space. In a preferred embodiment, the safety filter element endcap that has the outlet opening is provided on one side of the safety filter media and a further safety filter element endcap that has no opening and closes the safety filter media on one end is provided on an opposite end.

In embodiments, where in addition to the one sealing component a housing sealing component is provided, an especially preferred embodiment provides for the housing sealing component to also be arranged on the safety filter element endcap.

The safety filter element circumferential surface forms a contour shape with a single fold rotational symmetry. A closed-loop surface with a contour shape with single-fold rotational symmetry is construed as a contour shape configured such that when rotating the closed-loop surface, only after a rotation of 360° the contour shape matches up with the initial contour shape when starting the rotation. In other words, only after a 360° rotation the contour shape looks the same as at the start of the rotation. A contour shape with single-fold rotational symmetry has no axis of rotational symmetry. In contrast, contour shapes with rotational symmetry have an axis of rotational symmetry such that after rotating around an angle of 180° or less around the axis of rotational symmetry, the contour shape matches up with the initial contour shape at the start of the rotation.

In a preferred embodiment the safety filter element endcap that has the safety filter element circumferential support structure is designed mirror-symmetrical about one plane, especially only about one plane that contains the longitudinal axis.

The disclosure also has application in a safety filter element/tool catcher that rather than filtering debry out of a fluid "filters out" tools that have been dropped into the housing. Instead of having a safety filter media, such designs have a safety cage, whereby the safety cage has a safety cage inner space. Otherwise the design can be the same. Hence, in such an embodiment at least on safety filter element endcap is provided, whereby the safety filter element endcap has an outlet opening that leads to the safety cage inner space. Likewise, the safety filter element endcap comprises a safety filter element/tool catcher circumferential support structure, whereby a sealing component is arranged on the safety filter element circumferential support structure and extends along the safety filter element circumferential support structure, whereby the safety filter element endcap additionally comprises a housing sealing component. The tool catcher circumferential support surface forms a contour shape with a single-fold rotational symmetry, construed as a contour shape configured such that when rotating the closed-loop surface along axis (A), only after a rotation of 360° the contour shape matches up with the initial contour shape when starting the rotation; and
the tool catcher endcap has a circular rim that encircles the longitudinal axis (A) of the tool catcher, wherein
- the tool catcher circumferential support structure is provided above the circular rim or on an upward facing surface of the rim; and
- the housing sealing component is provided below the circular rim or on a downward facing surface of the rim.

The disclosure also pertains to a filter system. In one embodiment the filter system according to the disclosure comprises a safety filter element according to the disclosure and a main filter element, whereby the main filter element comprises a main filter media.

In a preferred embodiment, the main filter media has a main filter media inner space and the safety filter media is at least partially arranged inside the main filter media inner space. In a preferred embodiment, more than 50%, preferably more than 75%, preferably more than 90%, preferably more than 95% of the longitudinal extend of the safety filter media is arranged inside the main filter media inner space.

According to a further aspect of the disclosure, the filter system according to the disclosure comprises
- a safety filter element, which may be a safety filter element according to the disclosure, but may - in an alternative embodiment - also be designed differently, and
- a main filter element comprising a main filter media, wherein the main filter media has a main filter media inner space and the safety filter media is at least partially arranged inside the main filter media inner space,
wherein a sealing component is arranged on the safety filter element and wherein the main filter element has a main filter element circumferential surface, whereby the sealing component of the safety filter element is in sealing contact with the main filter element circumferential surface. In a preferred embodiment, more than 50%, preferably more than 75%, preferably more than 90%, preferably more than 95% of the longitudinal extend of the safety filter media is arranged inside the main filter media inner space.

In a preferred embodiment the main filter element comprises
- a main filter element circumferential surface, said main filter element circumferential surface comprising several surface sections, whereby at least one of the surface sections is arranged such that the normal vector to the surface section is orientated along the longitudinal axis or parallel to the longitudinal axis or into the inside of the main filter element; and
- the one sealing component of the safety filter element being in sealing contact with the main filter element circumferential surface.

In a preferred embodiment, the main filter element circumferential surface has the same geometric shape than the safety filter element circumferential surface, but is arranged offset to the safety filter element circumferential surface to allow the placement of the sealing component between the main filter element circumferential surface and the safety filter element circumferential surface.

In a preferred embodiment, the main filter element has a main filter element endcap that is arranged on one end of the main filter media, wherein the main filter element circumferential surface is arranged on the main filter element endcap. In a preferred embodiment the main filter media has a main filter media inner space and the main filter element endcap has an outlet opening that leads to the main filter media inner space. In a preferred embodiment, the main filter element only has one outlet opening that leads to the main filter media inner space.

In a preferred embodiment, an engagement arrangement is provided between the safety filter element and the main filter element. In a preferred embodiment, the engagement arrangement has a first protrusion, which may for example be a wing or a rib that projects radially, and has a second protrusion, which also may be a wing or a rib that projects radially, whereby the first projection is smaller than the second projection. Furthermore, the engagement arrangement has a first recess and has a second recess, whereby the first recess can accommodate the first protrusion but not the second protrusion and the second recess can accommodate the second protrusion. The engagement arrangement can be arranged such that the safety filter element has the first protrusion and the second protrusion, whereby the main filter element has the first recess and has the second recess. Alternatively, the engagement arrangement can be provided such that the main filter element has the first protrusion and the second protrusion, whereby the safety filter element has the first recess and the second recess.

In a preferred embodiment the safety filter element has a radially extending safety filter element abutment surface and the main filter element has a main filter element abutment surface that can come into contact with the safety filter element abutment surface, the abutment of the main filter element abutment surface with the safety filter element abutment surface limiting the relative movement of the main filter element relative to the safety filter element along the longitudinal axis.

The disclosure also pertains to a filter assembly. The filter assembly comprises a safety filter element and a housing. In one embodiment of the filter assembly, the safety filter element is a safety filter element according to the disclosure.

In one embodiment, a filter assembly according to the disclosure comprises a housing and a safety filter element, which may be a safety filter element according to the disclosure, but must not be a safety filter element according to the disclosure, and a main filter element comprising a main filter media, wherein the main filter media has a main filter media inner space and the safety filter media is at least partially arranged inside the main filter media inner space, wherein a sealing component is arranged on the safety filter element and wherein the main filter element has a main filter element circumferential surface, whereby the sealing component of the safety filter element is in sealing contact with the main filter element circumferential surface. In a preferred embodiment, more than 50%, preferably more than 75%, preferably more than 90%, preferably more than 95% of the longitudinal extend of the safety filter media is arranged inside the main filter media inner space.

In a preferred embodiment of the filter assembly, in addition to the one sealing component a housing sealing component is provided on the safety filter element. In a preferred embodiment, the housing has a housing sealing circumferential surface, said housing sealing circumferential surface comprising several surface sections, whereby at least one of the surface sections is arranged such that the normal vector to the surface section is orientated (1) along the longitudinal axis or (2) parallel to the longitudinal axis or (3) to towards the inside of the housing whereby the housing sealing component of the safety filter element is in sealing contact with the housing sealing circumferential surface.

In a preferred embodiment, the housing sealing circumferential surface on the housing has the same geometric shape than the housing sealing element circumferential surface on the safety filter element, but is arranged offset to the housing sealing element circumferential surface to allow the placement of the housing sealing component between the housing sealing circumferential surface and the housing sealing element circumferential surface.

In a preferred embodiment the safety filter element is fixedly connected to the housing or exchangeably connected to the housing. In a preferred embodiment the housing has a housing lid and the safety filter element is fixedly connected to the housing lid or exchangeably connected to the housing lid.

In a preferred embodiment the housing has a housing inner space and the safety filter element is arranged inside the housing inner space, wherein the housing has a housing outlet and wherein the safety filter media has a safety filter media inner space and wherein the safety filter media inner space is in direct flow connection with the housing outlet.

In a preferred embodiment of the filter assembly, a housing engagement arrangement is provided between the safety filter element and the housing, wherein the engagement arrangement has a first protrusion arranged on either the safety filter element or the housing and wherein the engagement arrangement has a bayonet channel arranged on that part of the safety filter element or the housing that the protrusion is not arranged on, whereby the protrusion can engage the bayonet channel to exchangeably connect the safety filter element to the housing in a bayonet manner. In a preferred embodiment, the first protrusion is arranged on the safety filter element and the bayonet channel is arranged on the housing. In a preferred embodiment, the bayonet channel is arranged on the safety filter element and the first protrusion is arranged on the housing. In a preferred embodiment, the housing engagement arrangement comprises more than one protrusion, preferably two, three or four protrusions. In a preferred embodiment the housing engagement arrangement has the same number of bayonet channels as protrusions. In a preferred embodiment the protrusions are equally spaced around the safety filter element and the bayonet channels are equally space around the housing. In a preferred embodiment the protrusions are equally spaced around the housing and the bayonet channels are equally spaced around the safety filter element. Equally spacing the protrusions and the bayonet channels means that there are as many relative rotational positions for exchangeably connecting the safety filter element to the housing as there are protrusions. If it is desired to only have one relative rotational position of the safety filter element relative to the housing for exchangeably connecting the safety filter element to the housing, this can be achieved by offsetting at least one protrusion and the corresponding bayonet channel.

In a preferred embodiment of the filter assembly a main filter element comprising a main filter media is provided. In a preferred embodiment the housing has a housing inner space and the main filter element is arranged inside the housing inner space.

In a preferred embodiment an unfiltered fluid space is provided between an inward facing surface of the housing and an outward facing surface of the main filter element and whereby the housing has an inlet that is in direct flow connection with the unfiltered fluid space.

The disclosure also pertains to a method for assembly of a filter assembly according to the disclosure. The method comprising the steps of
- inserting the safety filter element into the housing,
- after the safety filter element has been inserted into the housing, inserting a main filter element into the housing.

In a preferred embodiment the sealing component and/or the housing sealing component is compressed during the method. Compressing the sealing component and/or the housing sealing component while installing the safety filter element and/or while installing the main filter element enhances the working of the seal.

The disclosure also pertains to a method for exchanging a main filter element in a filter assembly according to the disclosure. The method comprising the steps of
- extracting a first main filter element out of the housing while leaving the safety filter element in the housing,
- inserting a second main filter element into the housing.

In a preferred embodiment the disclosure is used in safety element sealing components for air cleaner assemblies, and more specifically, to sealing components fixed to, or carried by, a safety element endcap.

In addition or as an alternative, the disclosure can be described to be a second (safety) filter cartridge including one or more sealing components to seal the safety filter cartridge (or element) to one or more of a first, main filter cartridge and a cover for the air cleaner housing.

In a preferred embodiment the main (or primary) filter element, that might have endcaps, and the safety (or secondary) filter element, that might have endcaps, can be installed in an air cleaner housing. A cover can contain a clean-air outlet which can connect to a turbo via a duct and can be removably attached onto the main air cleaner body or housing.

Two sets of seals can be fixed to or carried by the safety element endcap. The main element can be designed to have a sealing surface only and to not carry or have any seals fixed to it. The first seal or set of seals on the safety can prevent dirty air from passing between the safety and the cover. The second seal or set of seals can prevent dirty air from passing between the safety and the main element.

A third seal or set of seals is also possible in which the third set would prevent dirty air from passing between the safety and the air cleaner body or cover which would provide an additional back up seal.

In a preferred embodiment the seals (e.g., flexible or compressible members that can create a seal when pressed against a separate component) are outwardly directed thermoplastic elastomer seals in a wiper configuration. The seals could be any suitable sealing material and could seal either inwardly, outwardly, axially, or in a pinch configuration. The seals can be round or non-round and can deviate from an axial plan (e.g., have a wave or step-type configuration).

The safety outlet, the main element sealing surface, and the cover can each be either round or non-round. For example, any of the aforementioned components could have an irregular shape that would require a specific installation orientation (e.g., single fold symmetry or some other asymmetric shape). The asymmetry could be achieved as a result of the seals or sealing surface being non-round or by some axial deviation in the seal or sealing perimeter (e.g., one or more of a non-symmetrical wave, an undulation, and a stepped configuration) or both non-round and with axial deviation in the sealing perimeter.

In a preferred embodiment, the media for the main element is pleated. Other media configurations for the main and/or safety elements are possible such as, for example, fluted, corrugated, or a media wrap are possible. The media can be cellulose or synthetic and may or may not have additional layers such as a support layer, a liner, or other filter layers to enhance filtration such as fine fiber or nanofiber.

While in a preferred embodiment the first set of seals and second set of seals are aligned vertically, they may also be offset (e.g., when the circumferential outer surface of the endcap has a different sized diameter at different portions along the length of the endcap. Also, although the first and second sets of seals in a preferred embodiment can be symmetrical, the seals in the first and/or second set may be asymmetric (e.g., as a result of asymmetry of the safety outlet, the main element sealing surface, and/or the cover).

Having described the preferred aspects and implementations of the present disclosure, modifications and equivalents of the disclosed concepts may readily occur to one skilled in the art. However, it is intended that such modifications and equivalents be included within the scope of the claims which are appended hereto.

The disclosure is also directed to:
A safety element comprising:
an endcap comprising a circumferential outer surface; and
at least one sealing component extending along the circumferential outer or inner surface and configured to seal the endcap to a main element and/or to a cover, wherein the main element does not comprise a sealing component fixed to the main element.

In a preferred embodiment the endcap comprises a first seal configured to form a seal with the main element and a second seal to form a seal with the cover.

In a preferred embodiment the endcap comprises a single seal configured to form a seal with the main element and with the cover.

In a preferred embodiment at least one seal has a single-fold rotational symmetry.

An air cleaner assembly comprising the safety element of the disclosure or the safety filter element of the disclosure or the filter system according to the disclosure or the filter assembly according to the disclosure.

### Brief Description of the Drawings

In the following the invention will be described with reference to Figures that only show exemplary embodiments of the disclosure. The Figures show the following:
Fig. 1 is a schematic perspective view of a safety filter element according to the disclosure;
Fig. 2 is a schematic perspective view of the safety filter element of Fig. 1 from a different viewpoint;
Fig. 3 is a schematic side view onto the safety filter element of Fig. 1;
Fig. 4 is a further schematic side view onto the safety filter element of Fig. 1 viewed along the direction of the arrow D in Fig. 3;
Fig. 5 is a schematic sectional view of the safety filter element of Fig. 1 along the line G-G in Fig. 4;
Fig. 6 is a top schematic view onto the safety filter element of Fig. 1 viewed along the direction of the arrow E in Fig. 3;
Fig. 7 is a bottom view onto the safety filter element of Fig. 1 viewed along the direction of the arrow F in Fig. 3;
Fig. 8 is an enlarged, schematic side view of the bottom part of the safety filter element as shown in Fig. 4;
Fig. 9 is an enlarged, schematic sectional view of the bottom part of the safety filter element as shown in Fig. 5;
Fig. 10 is a schematic side view onto an endcap that is used as part of the safety filter element according to Fig. 1;
Fig. 11 is a schematic side view onto an endcap of Fig. 10 from a different viewpoint viewed along the arrow B in Fig. 10;
Fig. 12 is a schematic perspective view onto the endcap of Fig. 10;
Fig. 13 is a schematic perspective view onto the endcap of Fig. 10 from a different viewpoint;
Fig. 14 is a schematic sectional view onto the endcap of Fig. 10 along the line C-C in Fig. 15;
Fig. 15 is a schematic top view onto the endcap of Fig. 10 viewed along the arrow A in Fig. 10;
Fig. 16 is a schematic side view onto an endcap that is used as part of the safety filter element according to Fig. 1, but without sealing material arranged on it;
Fig. 17 is a schematic side view onto the endcap of Fig. 16 from a different viewpoint viewed along the arrow B in Fig. 16;
Fig. 18 is a schematic perspective view onto the endcap of Fig. 16;
Fig. 19 is a schematic perspective view onto the endcap of Fig. 16 from a different viewpoint;
Fig. 20 is a schematic sectional view onto the endcap of Fig. 10 along the line C-C in Fig. 21;
Fig. 21 is a schematic top view onto the endcap of Fig. 10 viewed along the arrow A in Fig. 16;
Fig. 22 is a schematic top view onto a part of a first housing lid of the housing of the filter assembly of Fig. 37 to 41 viewed along the arrow W in Fig. 26
Fig. 23 is a schematic sectional view onto the part of a first housing lid of Fig. 22 along the line Y-Y in Fig. 22;
Fig. 24 is a schematic perspective view onto the part of a first housing lid of Fig. 22
Fig. 25 is a schematic perspective view onto the part of a first housing lid of Fig. 22 from a different viewpoint;
Fig. 26 is a schematic sideview onto the part of a first housing lid of Fig. 22;
Fig. 27 is a schematic bottom view onto the part of a first housing lid of Fig. 22 viewed along the arrow X in Fig. 26;
Fig. 28 is a schematic bottom view onto an interface ring that together with the part of the first housing lid of Fig. 22 forms the first housing lid of the housing of the filter assembly of Fig. 37 to 41 viewed along the arrow A in Fig. 33;
Fig. 29 is a schematic perspective view onto the interface ring of Fig. 28;
Fig. 30 is an enlarged schematic perspective view onto a detail of the interface ring of Fig. 28 as shown in Fig. 29;
Fig. 31 is a schematic sectional view onto the interface ring of Fig. 28 along the line C-C in Fig. 32;
Fig. 32 is a schematic top view onto the interface Fig. 28 viewed along the arrow B in Fig. 33
Fig. 33 is a schematic sideview onto the interface ring of Fig. 29;
Fig. 34 is a schematic perspective view onto the first housing lid of the filter assembly of Fig. 37 to 41 with the part of a first housing lid of Fig. 22 and the interface ring of Fig. 29;
Fig. 35 is a schematic perspective view onto the first housing lid of Fig. 34 from a different viewpoint;
Fig. 36 is a schematic sectional view of the first housing lid of Fig. 34;
Fig. 37 is a schematic top view onto a filter assembly according to the disclosure;
Fig. 38 is a schematic side view onto the filter assembly of Fig. 37
Fig. 39 is a schematic sectional view of the filter assembly of Fig. 37 viewed along the line C-C in Fig. 37;
Fig. 40 is an enlarged detail of the top part of the schematic sectional view of Fig. 39;
Fig. 41 is an enlarged detail of the top part of the schematic sectional view of Fig. 39;
Fig. 42 is a schematic bottom view of a main filter element of the filter assembly of Fig. 37 to 41 viewed along the arrow B in Fig. 44
Fig. 43 is a schematic sectional view of the main filter element of Fig. 42 viewed along the line E-E in Fig. 42;
Fig. 44 is a schematic side view of the main filter element of Fig. 42;
Fig. 45 is a schematic sectional view of the main filter element of Fig. 42 viewed along the line C-C in Fig. 44;
Fig. 46 is a schematic perspective view of the main filter element of Fig. 42;
Fig. 47 is a schematic top view of a main filter element of Fig. 42 viewed along the arrow A in Fig. 44;
Fig. 48 is a schematic sectional view onto a further embodiment of a main filter element;
Fig. 49 is a schematic perspective view of the main filter element of Fig. 48;
Fig. 50 is a schematic sectional view onto a further embodiment of a main filter element;
Fig. 51 is a schematic perspective view of the main filter element of Fig. 50;
Fig. 52 is a schematic sectional view of a further embodiment of a filter assembly viewed along the line C-C in Fig. 54;
Fig. 53 is a schematic side view onto the filter assembly of Fig. 52;
Fig. 54 is a schematic top view onto the filter assembly of Fig. 52 viewed along the arrow B in Fig. 53;
Fig. 55 is an enlarged schematic sectional view of the bottom part of the filter assembly according to Fig. 52;
Fig. 56 is a schematic sectional view onto a further embodiment of a safety filter element placed in a housing;
Fig. 57 is an enlarged detail of the schematic sectional view of Fig. 56;
Fig. 58 is a schematic sectional view onto a further embodiment of a safety filter element placed in a further embodiment of a main filter element placed in a housing;
Fig. 59 is an enlarged detail of the schematic sectional view of Fig. 58
Fig. 60 is a schematic sectional view onto the main filter element used in Fig. 58;
Fig. 61 is a schematic sectional view onto the safety filter element used in Fig. 58;
Fig. 62 is an enlarged detail of the schematic sectional view of Fig. 61;
Fig. 63 is a schematic sectional view onto a further embodiment of a safety filter element placed in a further embodiment of a main filter element placed in a housing;
Fig. 64 is an enlarged detail of the schematic sectional view of Fig. 63;
Fig. 65 is a schematic sectional view onto a further embodiment of a safety filter element placed in a housing;
Fig. 66 is an enlarged detail of the schematic sectional view of Fig. 65;
Fig. 67 is a schematic side view onto a further embodiment of a safety seal element according to the disclosure placed in a housing;
Fig. 68 is a schematic sectional view onto the safety filter element of Fig. 67;
Fig. 69 is an enlarged detail of the schematic sectional view of Fig. 67;
Fig. 70 is a schematic sectional view onto a further embodiment of a safety filter element placed in a housing;
Fig. 71 is an enlarged detail of the schematic sectional view of Fig. 70;
Fig. 72 is a schematic sectional view onto the safety filter element used in Fig. 70;
Fig. 73 is an enlarged detail of the schematic sectional view of Fig. 72;
Fig. 74 is a schematic top view onto a further embodiment of a main filter element;
Fig. 75 is a schematic side view onto the main filter element of Fig. 74 viewed in the direction of the arrow F in Fig. 79;
Fig. 76 is a schematic sectional view onto the main filter element of Fig. 74 along the line H-H in Fig. 79;
Fig. 77 is a schematic perspective view onto the main filter element of Fig. 74;
Fig. 78 is a schematic perspective view onto the main filter element of Fig. 74 from a different viewpoint;
Fig. 79 is a schematic bottom view onto the main filter element of Fig. 74;
Fig. 80 is an enlarged detail of the schematic perspective of Fig. 77;
Fig. 81 is an enlarged detail of the schematic sectional view of Fig. 76;
Fig. 82 is a schematic top view onto a further embodiment of a safety filter element;
Fig. 83 is a schematic side view onto the safety filter element of Fig. 82 viewed in the direction of the arrow F in Fig. 87;
Fig. 84 is a schematic sectional view onto the safety filter element of Fig. 82 along the line G-G in Fig. 87;
Fig. 85 is a schematic perspective view onto the safety filter element of Fig. 82;
Fig. 86 is a schematic perspective view onto the safety filter element of Fig. 82 from a different viewpoint;
Fig. 87 is a schematic bottom view onto the main filter element of Fig. 82;
Fig. 88 is an enlarged detail of the schematic sectional of Fig. 84;
Fig. 89 is an enlarged detail of the schematic perspective view of Fig. 85;
Fig. 90 is a schematic side view onto a further embodiment of a filter assembly according to the disclosure;
Fig. 91 is a schematic top view onto the filter assembly according to Fig. 90;
Fig. 92 is a schematic sectional view onto the filter assembly of Fig. 90 along the line A-A in Fig. 91;
Fig. 93 is a schematic perspective view onto a filter system according to the disclosure;
Fig. 94 is a schematic perspective view onto the filter system of Fig. 93 from a different viewpoint;
Fig. 95 is a schematic sectional view onto the filter system of Fig. 93 along the line A-A in Fig. 96;
Fig. 96 is a schematic bottom view onto the filter system of Fig. 93;
Fig. 97 is a schematic side view onto the filter system of Fig. 93;
Fig. 98 is a schematic top view onto the filter system of Fig. 93;
Fig. 99 is an enlarged detail of the schematic sectional view of Fig. 95;
Fig. 100 is an enlarged detail of the schematic sectional view of Fig. 92;
Fig. 101 is a schematic sectional view onto a further embodiment of a filter assembly according to the disclosure, which has not been claimed;
Fig. 102 is a schematic sectional view onto the bottom part of the safety filter element of the filter assembly of Fig. 101, which has not been claimed;
Fig. 103 is a schematic perspective view onto a safety filter element according to a further embodiment of the disclosure;
Fig. 104 is a schematic perspective view onto a safety filter element of Fig. 103 from a different perspective;
Fig. 105 is a schematic sectional view of a top of a further embodiment of a filter assembly according to the disclosure;
Fig. 106 is a schematic sectional view of a further embodiment of a filter assembly according to the disclosure;
Fig. 107 is a schematic exploded sectional view of the filter assembly of Fig. 106;
Fig. 108 is a schematic enlarged sectional view of the bottom part of the filter assembly of Fig. 106;
Fig. 109 is a schematic enlarged sectional view of the top part of the filter assembly of Fig. 106;
Figs. 110A and 110B are schematic perspective views from the top and from the bottom onto an endcap of the safety filter element of the filter assembly of Fig. 106;
Figs. 111A and 111B are schematic perspective views from the top and from the bottom onto a further endcap of the safety filter element of the filter assembly of Fig. 106;
Fig. 112 is a schematic perspective view onto the safety filter element of the filter assembly of Fig. 106;
Fig. 113 is a schematic perspective onto an endcap of the main filter element of the filter assembly of Fig. 106;
Fig. 114 is a schematic perspective onto a further endcap of the main filter element of the filter assembly of Fig. 106;
Fig. 115 is a schematic perspective view onto the main filter element of the filter assembly of Fig. 106;
Fig. 116 is a schematic, perspective sectional view onto the bottom end of the housing and the safety filter element inserted into the housing of the filter assembly of Fig. 106;
Fig. 117 is a schematic, perspective sectional view onto the top end of the housing and the safety filter element inserted into the housing of the filter assembly of Fig. 106 with the main filter element beginning to be inserted.
Fig. 118 is a schematic, perspective sectional view onto the bottom end of the housing and the safety filter element inserted into the housing of the filter assembly of Fig. 106 with the main filter element being in its end position;
Fig. 119 is a schematic, perspective sectional view onto the top end of the housing and the safety filter element inserted into the housing of the filter assembly of Fig. 106 with the main filter element being inserted and the housing lid in the process of being closed;
Fig. 120 is a schematic, perspective sectional view of the housing lid of the filter assembly of Fig. 106;
Fig. 121 is a schematic perspective view of the housing lid of the filter assembly of Fig. 106;
Fig. 122 is a schematic, perspective, sectional view of the filter assembly of Fig. 106 in an improperly installed state;
Fig. 123 is a schematic sectional view of a further embodiment of a filter assembly according to the disclosure;
Fig. 124 is a schematic exploded view of the filter assembly of Fig. 123;
Fig. 125 is a schematic enlarged sectional view of the bottom part of the filter assembly of Fig. 123;
Figs. 126A and 126B are schematic perspective views from the top and from the bottom onto an endcap of the safety filter element of the filter assembly of Fig. 123;
Fig. 127A and 127B are schematic perspective views from the top and a from the bottom onto a further endcap of the safety filter element of the filter assembly of Fig. 123;
Fig. 128 is a schematic enlarged sectional view of the bottom part of the filter assembly of Fig. 123;
Fig. 129 is a schematic perspective view onto the safety filter element of the filter assembly of Fig. 123;
Figs. 130A and 13B are schematic perspective views from the top and from the bottom onto an endcap of the main filter element of the filter assembly of Fig. 123;
Figs. 131A and 131B are schematic perspective views from the top and from the bottom onto a further endcap of the safety filter element of the filter assembly of Fig. 123;
Fig. 132 is a schematic perspective view onto the main filter element of the filter assembly of Fig. 123;
Fig. 133 is a schematic perspective view onto the main filter element of the filter assembly of Fig. 123 from a different viewpoint;
Fig. 134 is the schematic sectional view of the top of the further embodiment of the filter assembly according to the disclosure of Fig. 105 in a correctly installed state and
Fig. 135 is the schematic sectional view of the top of the further embodiment of the filter assembly according to the disclosure of Fig. 105 in an incorrectly installed state (with the safety filter element missing).

### Detailed Description

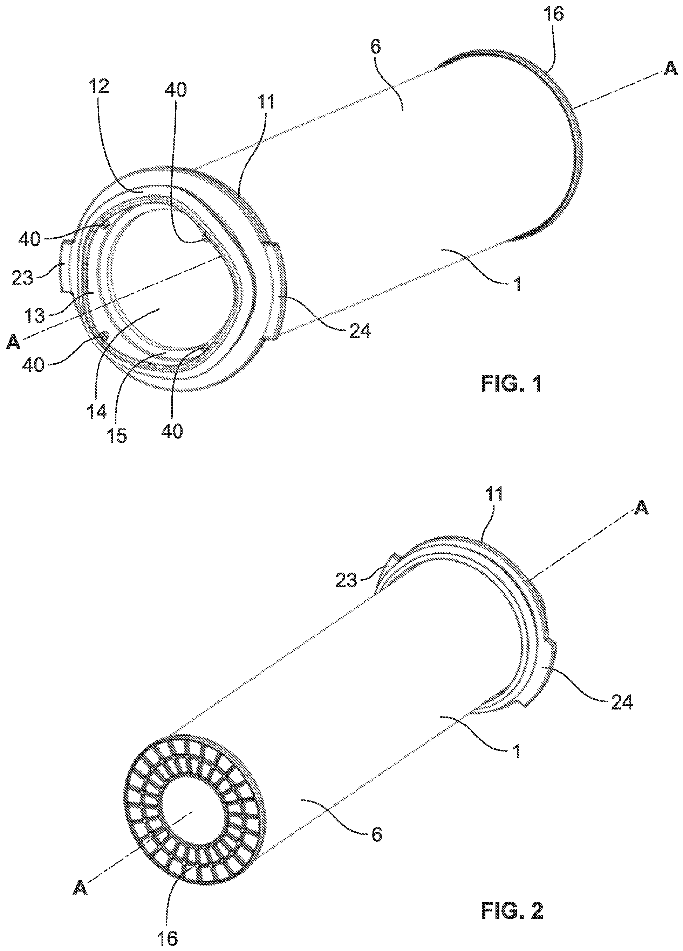

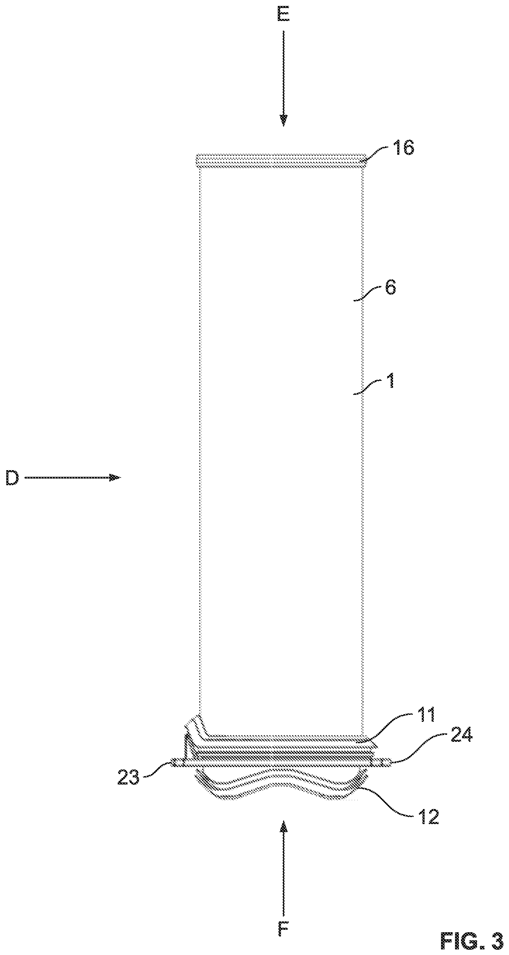

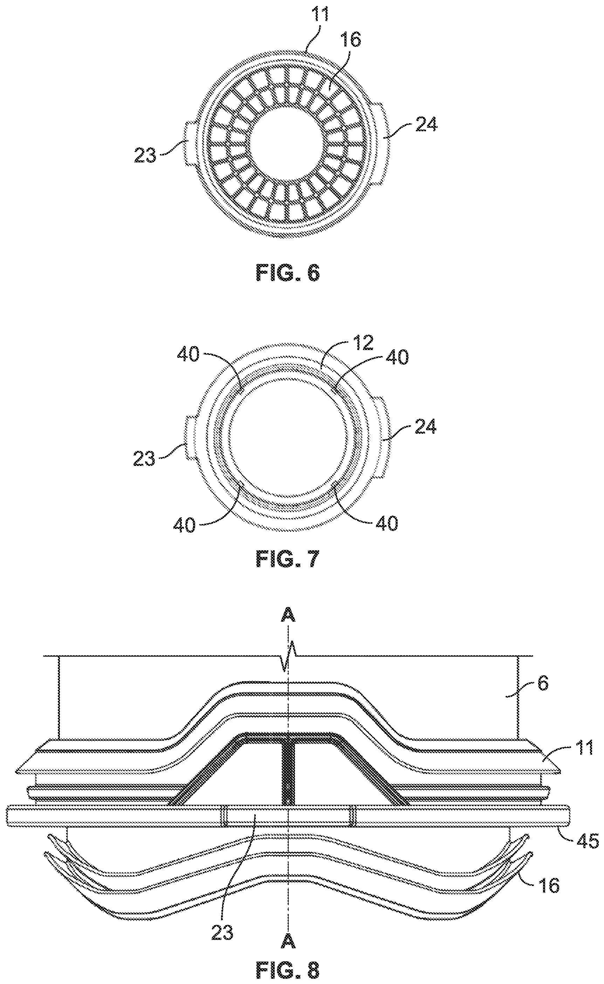

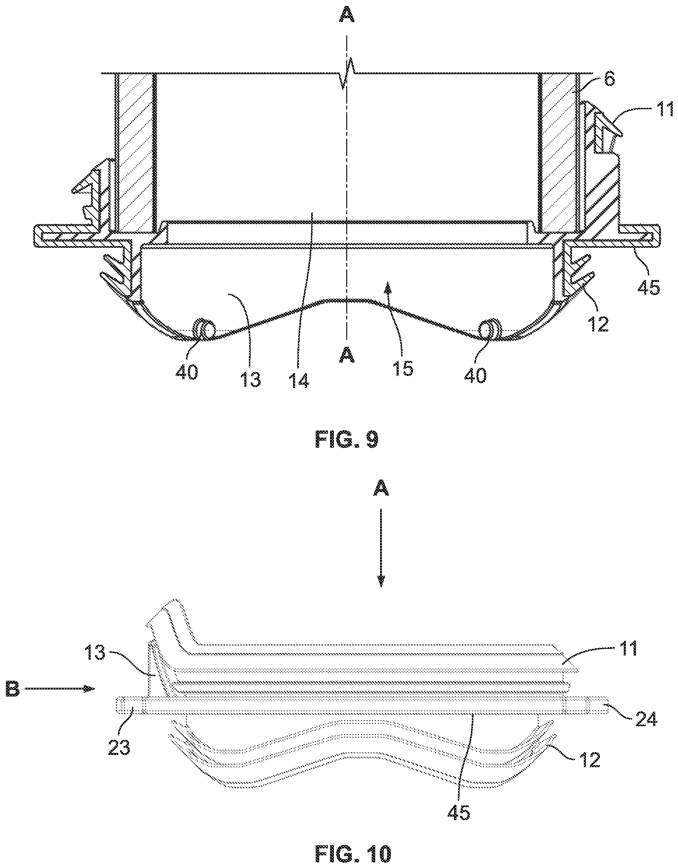

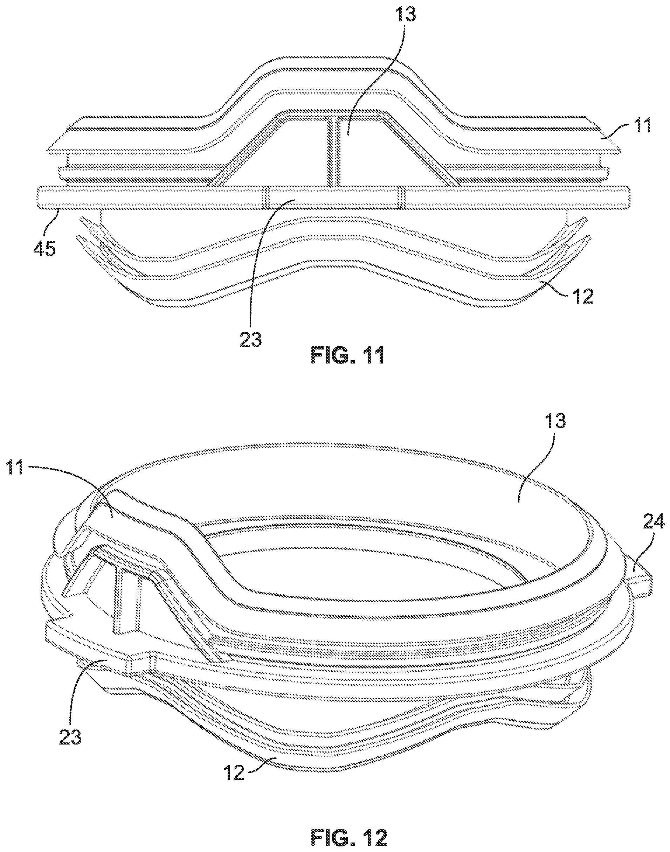

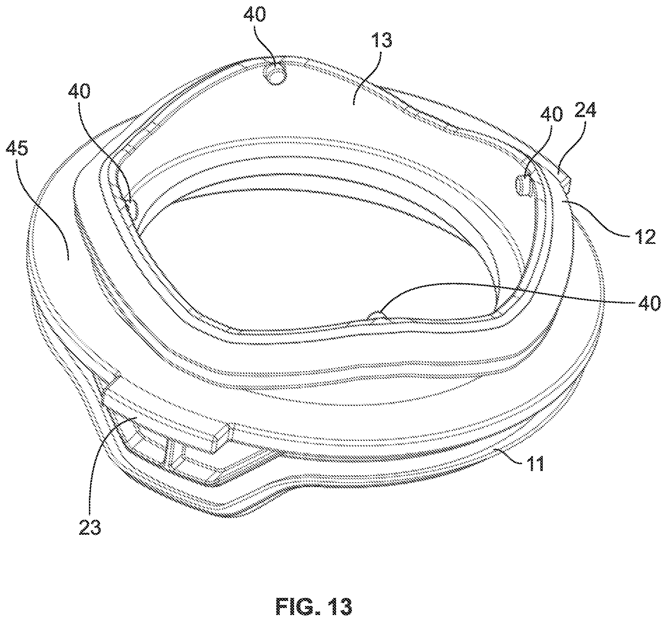

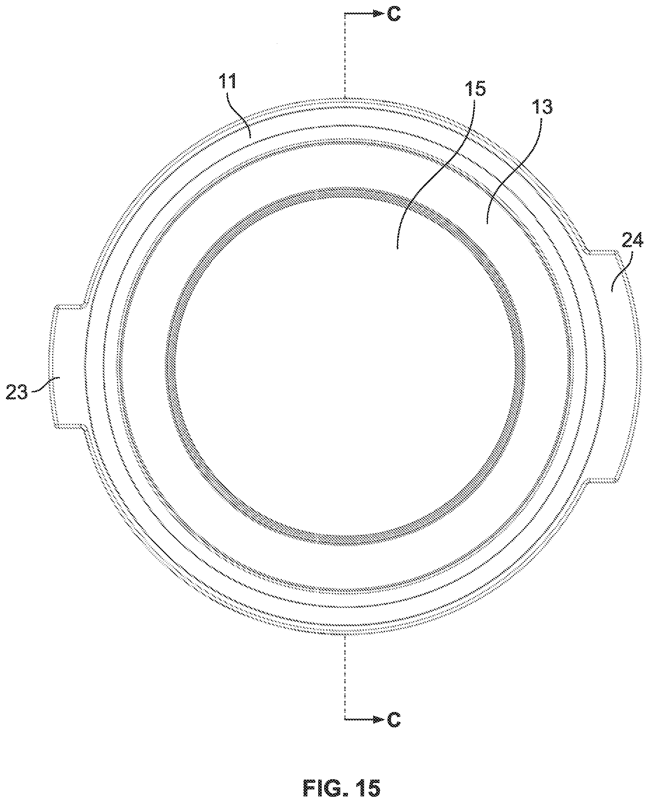

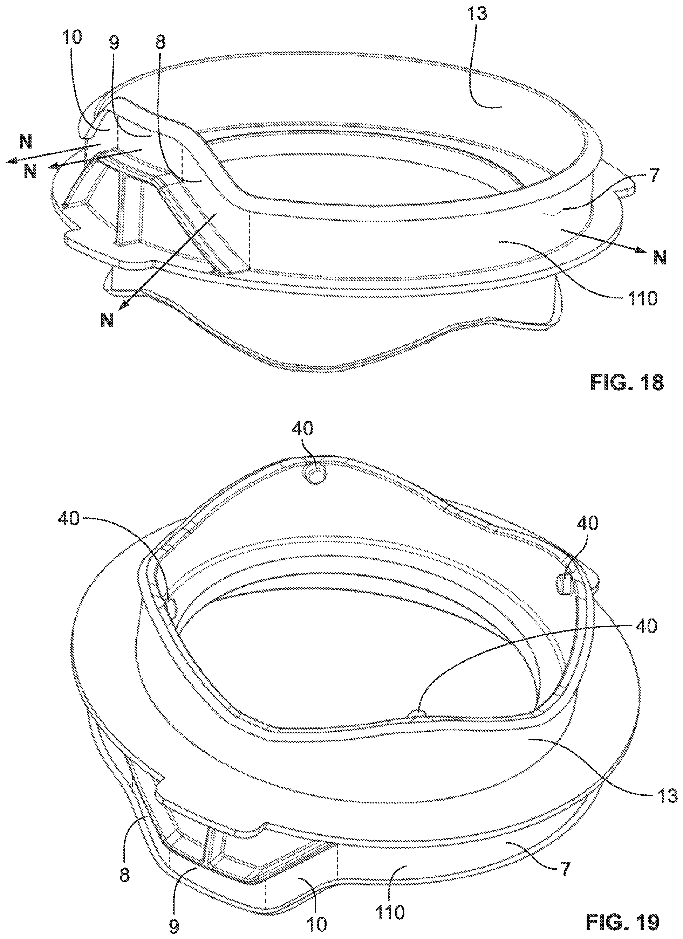

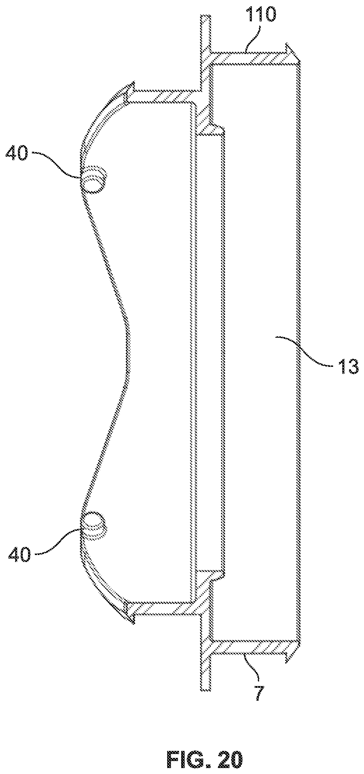

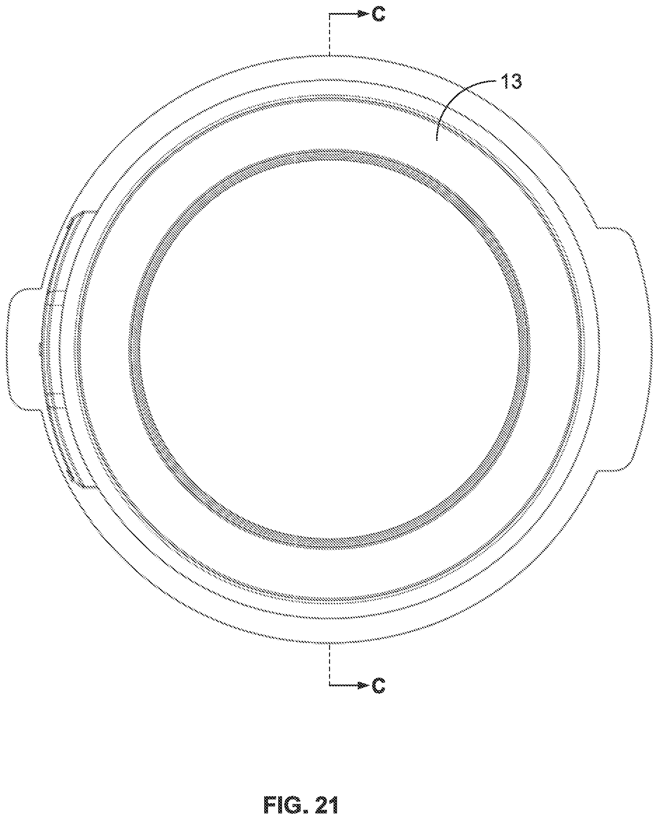

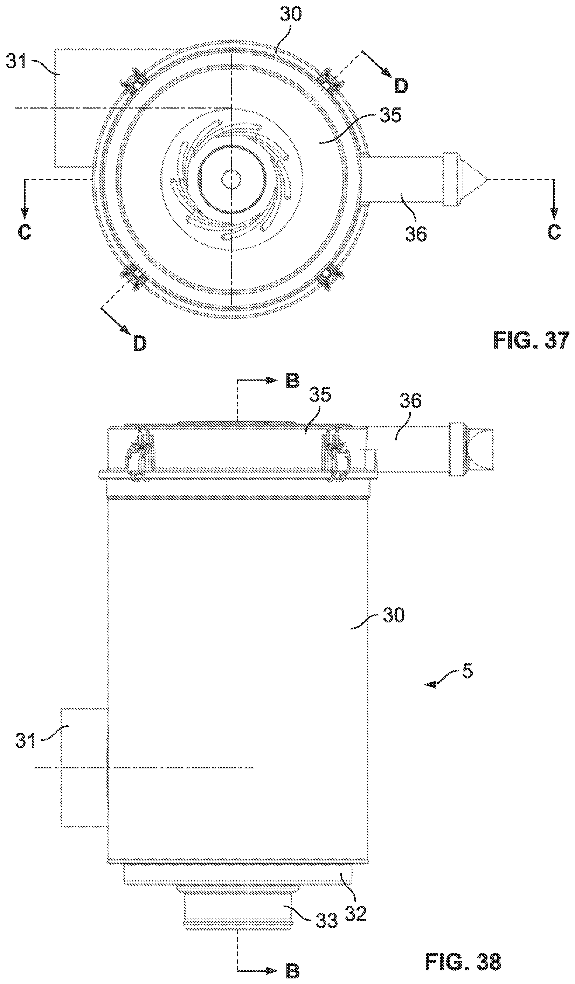

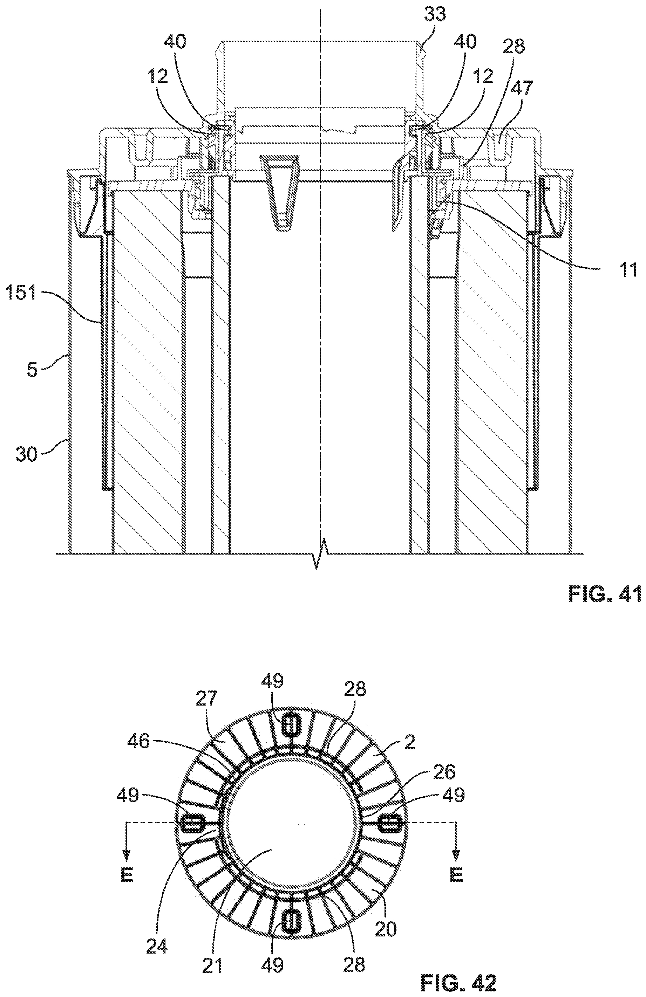

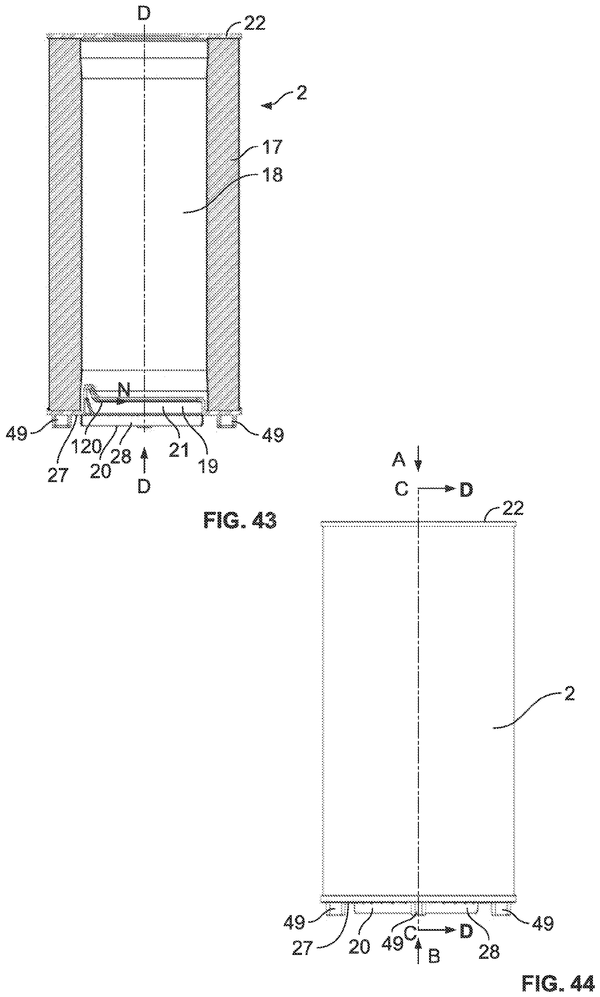

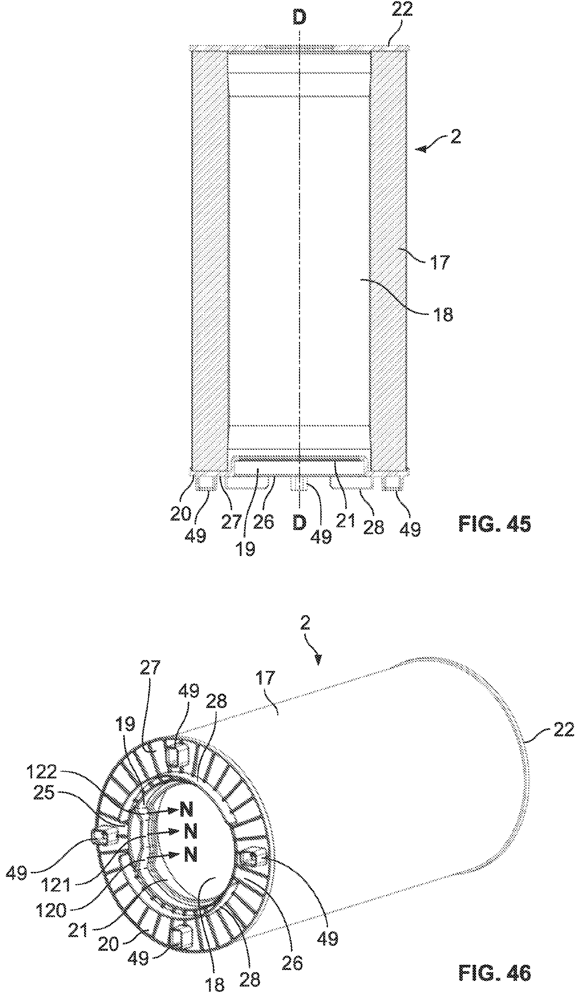

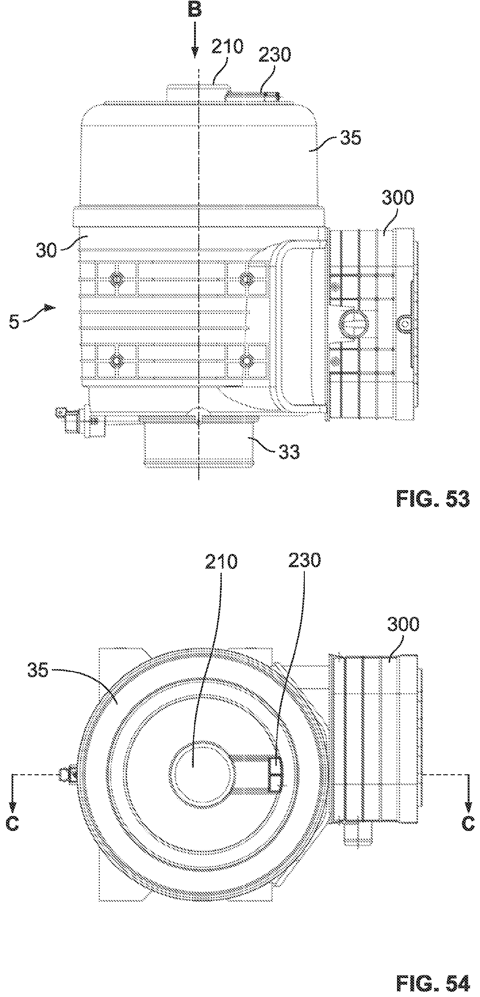

Fig. 1 to 21 shows a safety filter element 1. Together with the main filter element 2 shown in Fig. 42 to 47, the safety filter element 1 can form a filter system according to the disclosure. Together with the housing 5 shown in Fig. 37 to 41 or Fig. 52 to 55 the filter system can form a filter assembly according to the disclosure.

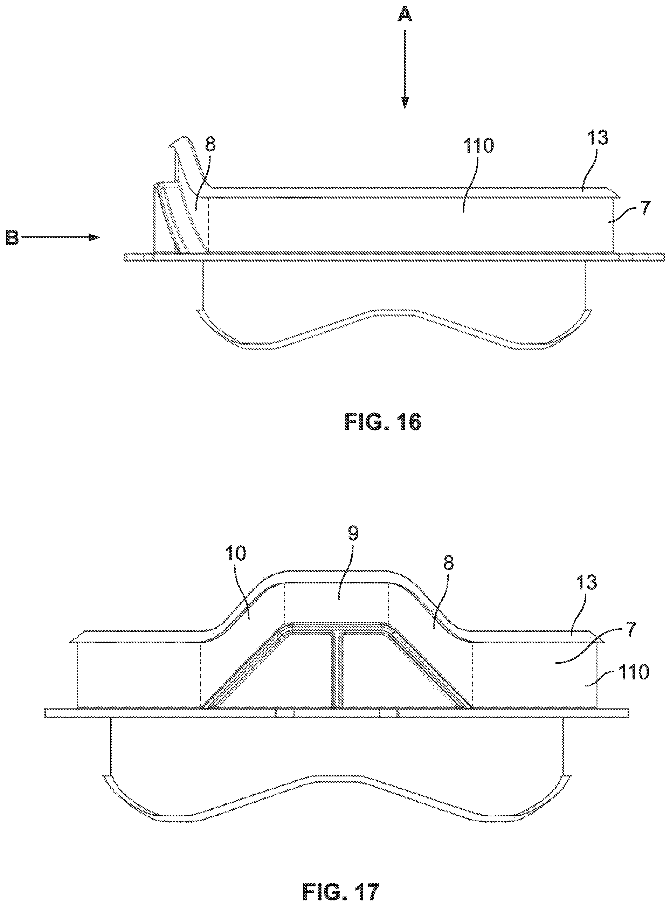

The safety filter element 1 extends along an axis A. The safety filter element 1 comprises
a safety filter media 6. The safety filter element 1 comprises a safety filter element circumferential surface 7, said safety filter element circumferential surface 7 comprises several surface sections 8,9,10, 110. At least one of the surface sections 8,9,10,110 namely the surface sections 8, 9, 10, 110 is arranged such that the normal vector N to the surface section 8, 9, 10, 110 is orientated to point to the outside of the safety filter element 1. At least one sealing component 11 extends along the safety filter element circumferential surface 7. The surface sections 8, 9, 10, 110 and their normal vector N are best seen in Fig. 16 to 21 that shows the endcap 13 of the safety filter element without the sealing component 11. As indicated by the dashed lines in Figs. 16 to 21, the surface sections 8, 9, 10, 110 must not be designed discernible by design features like rim, edges or the like, but can be imaginary surface sections on a homogenous surface. Reference to surface sections 8, 9, 10, 110 is simply made in this description as a means to describe the geometric shape of the safety filter element circumferential surface 7.

In the embodiment shown in Fig. 16 to 21 the safety filter element circumferential surface 7 has a surface section 9 that is offset from the surface section 110 in the direction of the axis A of the safety filter element. The surface sections 110 that makes up a part of the safety filter element circumferential surface is arranged to form a part of a ring-shaped surface on the outside of a cylinder, while the further surface section 9 is arranged to form a part of a different ring-shaped surface on the outside of the cylinder, while a first angled surface section 8 connects the surface section 110 with the one, offset surface section 9 on the one side, while a second angled surface section 10 connects the surface section 110 and the one, offset surface section 9 on the other side. The angled surface sections 8,10 hence appear like a ramp leading from the ring on which the surface section 110 is arranged up to the offset surface section 9 on the one side and down from the offset surface section 9 back to the ring, in which the surface section 110 is arranged. In such a design, all normal vectors N to the respective surface section 8,9,10,110 are orientated to point to the outside of the safety filter element 1.

In the embodiment of Fig. 1, in addition to the one sealing component 11 a housing sealing component 12 is provided on the safety filter element 4. In the embodiment shown in Fig. 1, the housing sealing component 12 has been manufactured as one piece with the sealing component 11.

As shown in Fig. 1, for example, a safety filter element endcap 13 is provided that is arranged on one end of the safety filter media 6. The safety filter element circumferential surface 7 is arranged on the safety filter element endcap 13.

In the embodiment shown in Fig. 1, for example, the safety filter media 6 has a safety filter media inner space 14 and the safety filter element endcap 13 has an outlet opening 15 that leads to the inner space 14.

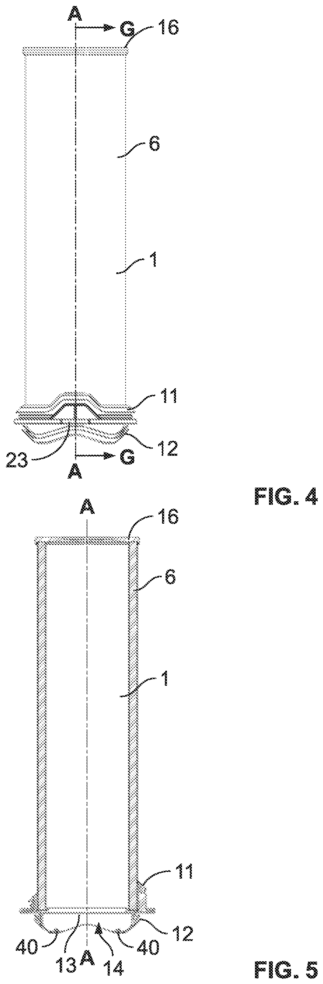

In the embodiment shown in Fig. 1 and 5 the safety filter media 6 has the shape of a hollow cylinder.

In the embodiment shown in Fig. 1 and Fig. 16 to 21 the safety filter element circumferential surface 7 forms a contour shape with a single-fold rotational symmetry.

The safety filter element 1 has a further safety filter element endcap 16, which is of closed design and arranged opposite the safety filter element endcap 13 that has the outlet opening 15.

As shown in Fig. 42 to 47, the main filter element 2 has a main filter media 17. The main filter element 2 extends along a longitudinal axis D, which in the assembled state of the filter system is the same axis as longitudinal axis A.

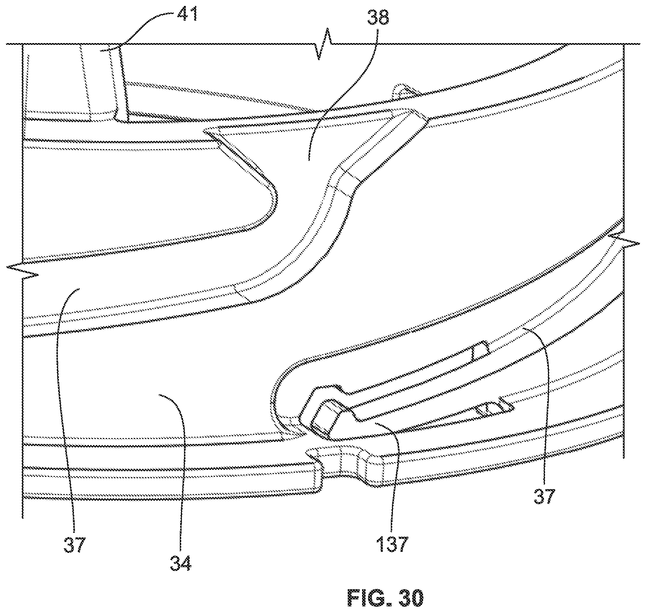

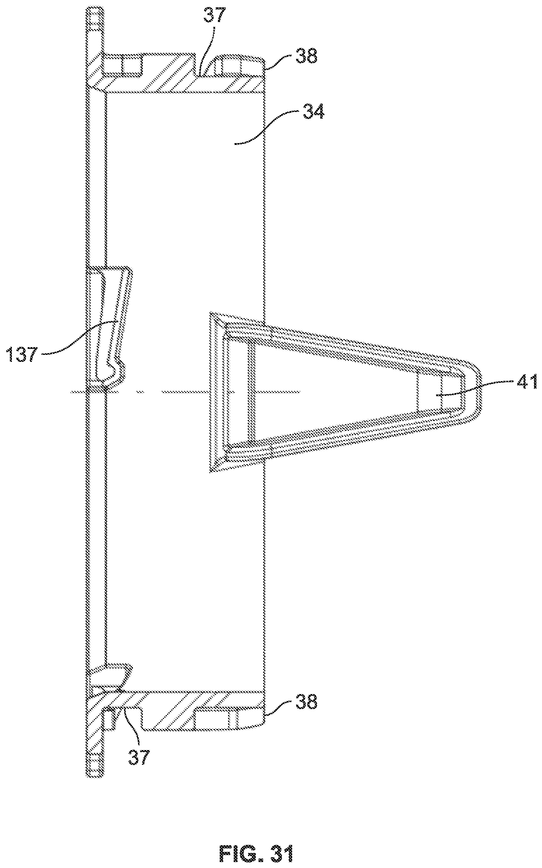

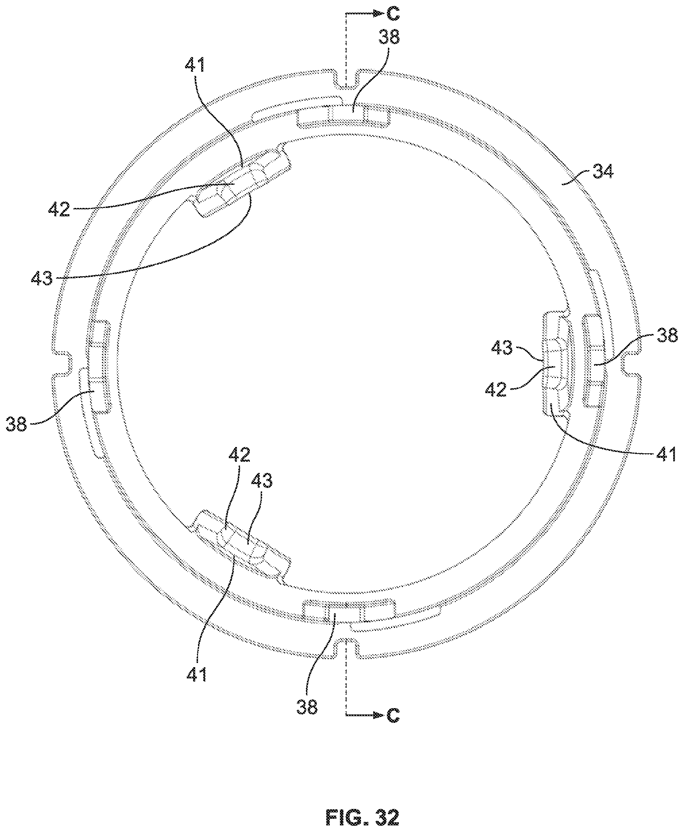

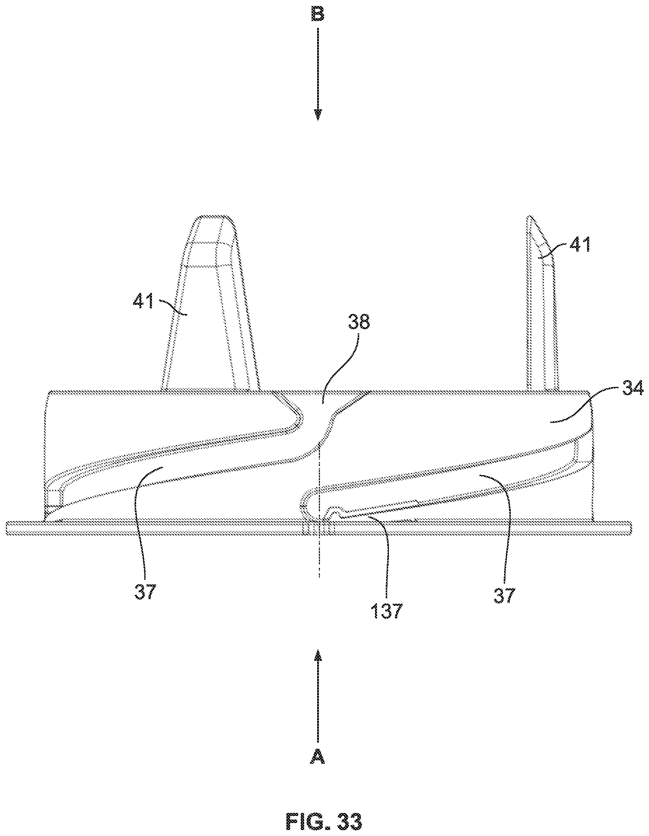

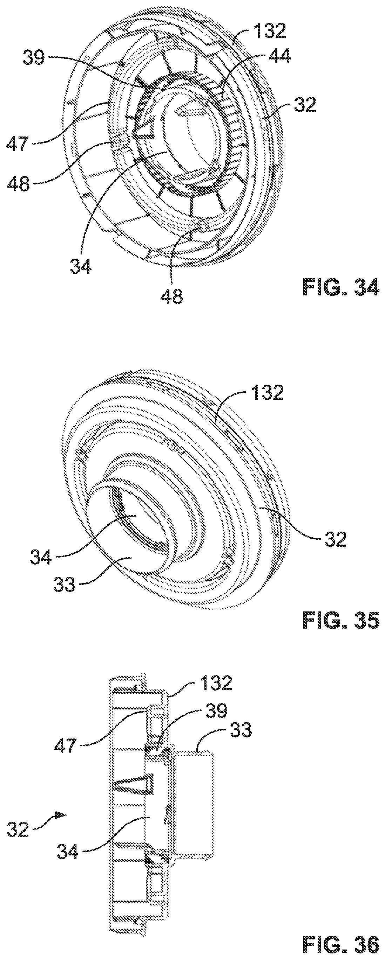

The main filter media 17 has a main filter media inner space 18. When assembled to form the filter system according to the disclosure or when the filter system is fully arranged inside the housing 5 to form the filter assembly according to the disclosure, the safety filter media 6 is at least partially, in the embodiment of Fig. 1 to 47 fully arranged inside the main filter media inner space 18.

In the embodiment of Fig. 1 to 47, the main filter element 2 comprises a main filter element circumferential surface 19. The main filter element circumferential surface 19 comprises several surface sections 120, 121, 122, whereby at least one of the surface sections 120, 121, 122, namely the surface section 120, 121, 122 is arranged such that the normal vector N2 to the surface section 120, 121, 122 is orientated pointing towards the main filter media inner space 18. In the assembled state of the filter system, the sealing component 11 of the safety filter element 1 is in sealing contact with the main filter element circumferential surface 19.

In the embodiment of Fig. 1 to 47, a main filter element endcap 20 is provided that is arranged on one end of the main filter media 17. The main filter element circumferential surface 19 is arranged on the main filter element endcap 20. The main filter element endcap 20 has an outlet opening 21 that leads to the main filter media inner space 18.

The main filter media 17 has the shape of a hollow cylinder. A further main filter element endcap 22 is provided, which is closed and arranged on the opposite end of the main filter media 17 compared to the main filter element endcap 21.

The safety filter element 1 has a first projection in the form of a first wing 23 in form of wing that projects radially and has a second projection in the form of a second wing 24 that projects radially, whereby first wing 23 is smaller than the second wind 24. The main filter element 2 has a first recess 25 and has a second recess 26, whereby first recess 25 can accommodate the first wing 23 but not the second wing 24 and the second recess 25 can accommodate the second wing 24. The first recess 25 and the second recess 26 are formed in a circular wall 28 that projects axially from the bottom surface 27 of the main filter element endcap 21. This design ensures that the safety filter element 1 can only be inserted into its final position in the main filter element 2 in one specific rotational relationship.

In the embodiment shown in Fig. 1 to 47 the housing 5 comprises a central housing part 30. An inlet tube 31 is arranged on the central housing part 30. A fluid to be filtered will enter the housing 5 through the inlet tube 31. The housing 5 further comprises a first housing lid 32 with an outlet tube 33 being formed on the first housing lid 32. Filtered fluid will leave the housing 5 through the outlet tube 33. An interface ring 34 is attached to a part 132 of the first housing lid 32. The housing 5 further comprises a second housing lid 35. The second housing lid 35 in the embodiment shown in Fig. 1 to 47 contains a discharge tube 36 that can be used to discharge debris or liquid collected from the fluid to be filtered before the fluid passes through the main filter element 2.

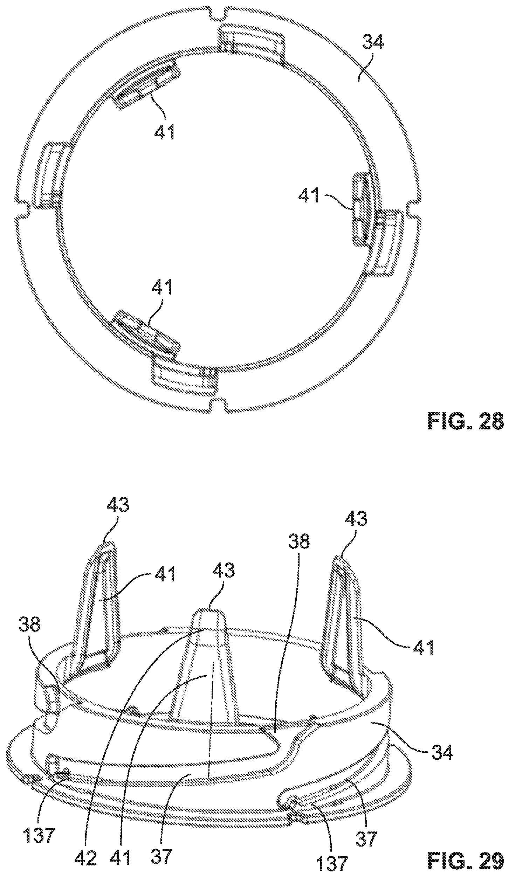

Fig. 1 for example shows that locking pins 40 are provided on the safety filter element endcap 13 that protrude into the outlet opening 15 of the safety filter element endcap 13. Fig. 29 for example shows that the interface ring 34 is provided with a bayonet channel 37 that terminates in a receiving mouth 38. As the safety filter element 1 is inserted into the housing 5, the locking pins 40 can be brought into alignment with the receiving mouth 38 by rotating the safety filter element 1 inside the housing 5 about its axis A. Once in alignment with the receiving mouth 38 the respective locking pin 40 can be made to enter into the bayonet channel 37 by further combined linear and rotational movement of the safety filter element 1 relative to the housing 1 thereby locking the safety filter element 1 to the housing 5. A flexible knob-structure 137 is provided at the end of the bayonet channel 37 to hold the locking pin 40 in the lowest part of the bayonet channel 37.

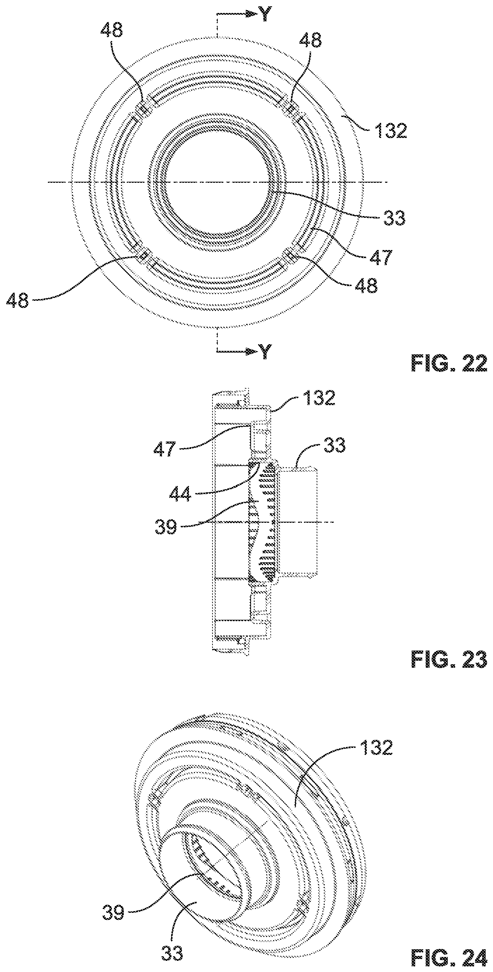

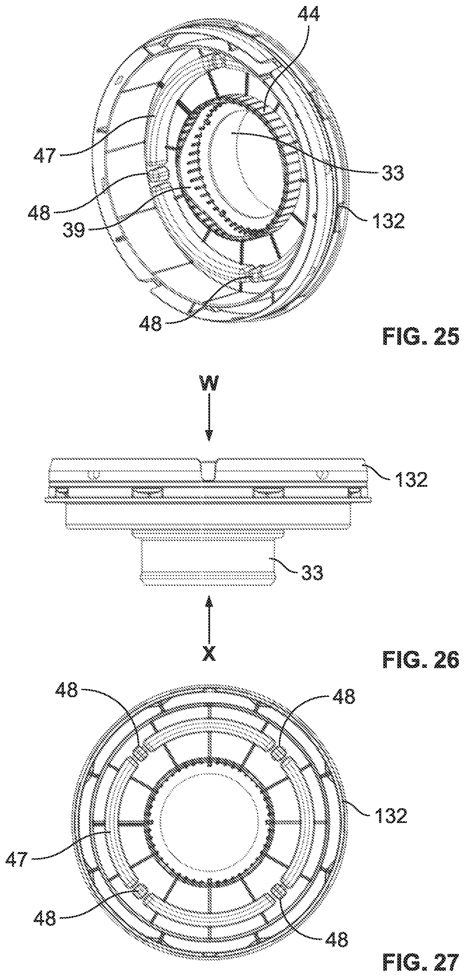

As the safety filter element 1 is locked to the housing 5, the undulating housing sealing component 12 comes into contact with an undulating sealing surface 39 on the interface ring 34 thereby sealing the safety filter element 1 against the housing 5 and preventing any fluid to pass from the outside of the safety filter element 1 past the safety filter element 1 into the outlet tube 33 of the first housing lid 32. Proper alignment of the undulating housing sealing component 12 with the undulating sealing surface 39 of the interface ring 34 can be achieved by appropriate relative positioning of the locking pins 40 relative to the undulating housing sealing component 12 on the one hand and appropriate alignment of the end of the bayonet channel 37 and the undulating sealing surface 39 on the other hand. In the embodiment shown in Fig 23 and 25, the undulating sealing surface 39 is provided by a surface without ribs arranged between a series of ribs that each terminate at the surface without ribs.

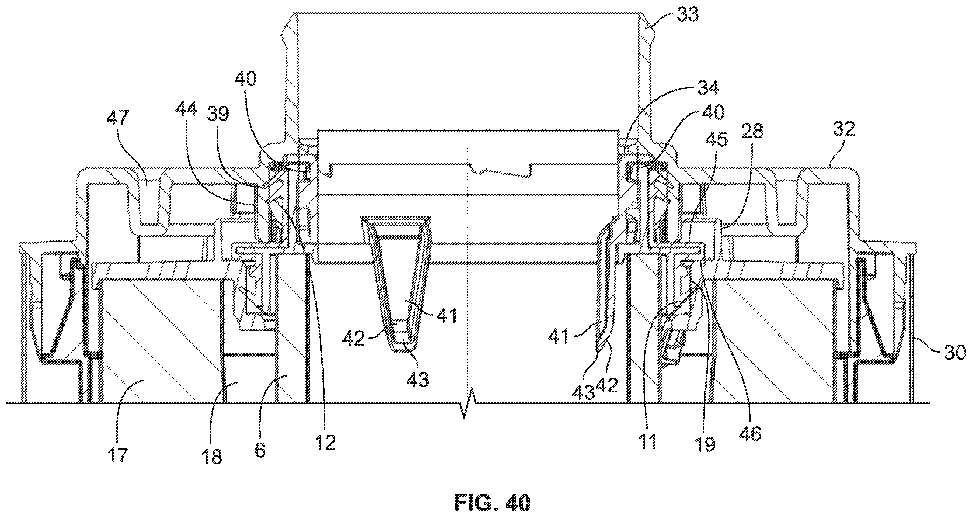

Fig. 28 to 33 show the interface ring 34 to have ribs 41 that point into the direction of the safety filter element inner space 14. Each rib 41 has an angled outward facing surface 42 and a tip 43 that is arranged more inwards than the connection between the respective rib 41 and the remainder of the interface ring 34. The angled outward facing surface 42 of the ribs 41 facilitate the assembly of the safety filter element 1 into the housing 5. Fig. 40 shows that the ribs 41 can be used to engage with the wall surrounding the outlet opening 15 of the safety element 1 and can be used to center the safety filter element 1 as it is moved towards the first housing lid 32.

Starting with an empty housing 5 and the second housing lid 35 removed, first the safety filter element 1 is inserted in a linear motion into the housing 5. If during this linear motion the safety filter element 1 is not perfectly aligned, the ribs 41 can be used to center the safety filter element 1 as it comes closer to the first housing lid 32.

If during this insertion the pins 40 happen to be in alignment with the receiving mouth 38, the safety filter element 1 can be further inserted into the housing 5 by way of combined linear and rotational movement inserting the pins 40 into the bayonet channels 37 and travelling until the end of the bayonet channels 37, which will bring the undulating housing sealing component 12 into contact with the undulating sealing surface 39 on the interface ring 34.

If the pins 40 are not aligned with the receiving mouth 38, the pins will first abut against the wall of the interface ring 34 between the receiving mouths 38. By way of rotation of the safety filter element 1 relative to the housing the pins 40 can be aligned with the receiving mouth 38 and the safety filter element 1 can be further inserted into the housing 5 by way of combined linear and rotational movement inserting the pins 40 into the bayonet channels 37 and travelling until the end of the bayonet channels 37, which will bring the undulating housing sealing component 12 into contact with the undulating sealing surface 39 on the interface ring 34.

Fig 40 shows the final position of the top part of the safety filter element 1 and its cooperation with the interface ring 34 and hence the first housing lid 32. Fig. 40 shows that several sealing effects are created. The housing sealing component 12 is designed as a dual lip-seal (with two lips) that seals with radial sealing force against the undulating sealing surface 39. Furthermore the radially protruding part 45 of the material that forms the sealing component 11, the wings 23, 24 and the housing sealing component 12 abuts against the top rim of the circular wall 44 and hence acts as an additional axial seal.

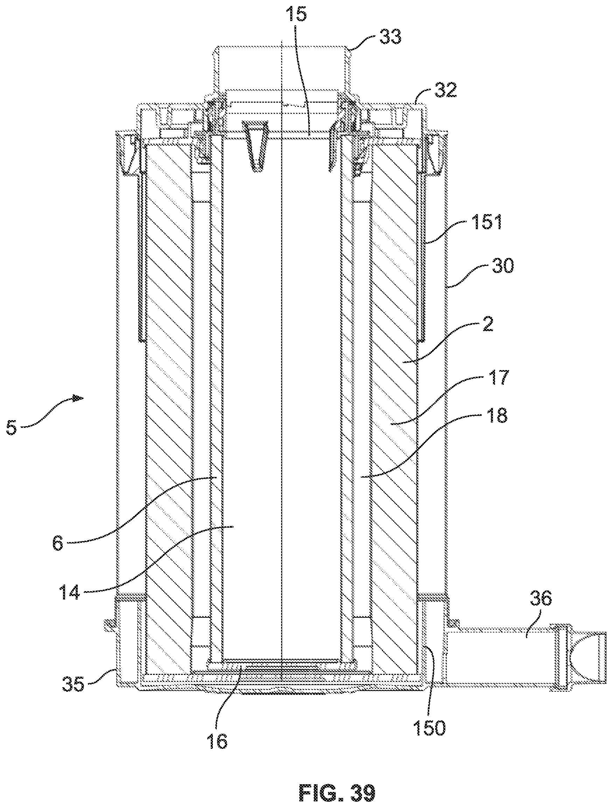

After the safety filter element 1 has been completely inserted, the main filter element 2 is inserted into the housing 5 by way of linear movement. If during this insertion the smaller wing 23 happens to be in alignment with the smaller first recess 25 and the larger wing 24 happens to be in alignment with the larger second recess 26, the linear movement of the main filter element into the housing 5 can be continued until the main filter element reaches its final position shown in Fig. 39. If the smaller wing 23 is not in alignment with the smaller first recess 25 and the larger wing 24 is not in alignment with the larger second recess 26, the wings 23, 24 will abut against the circular wall 28 on the bottom surface 27 of the main filter element 2. By way of rotation of the main filter element 2 relative to the safety filter element 1 housing (see arrow F in Fig. 39) the smaller wing 23 is brought into alignment with the smaller first recess 25 and the larger wing 24 is brought into alignment with the larger second recess 26 and the main filter element 2 can be further inserted into the housing 5 by way of linear movement until it reaches the position shown in Fig 39.

As the main filter element 1 reaches its final position shown in Fig. 39, the sealing component 11 that together with the safety filter element circumferential surface 7 forms a contour shape with a single-fold rotational symmetry comes into contact with the main filter element circumferential surface 19 on the main filter element 2, the main filter element circumferential surface 19 also forming a contour shape with a single-fold rotational symmetry to receive the sealing component 11 thereby sealing the main filter element 1 against the safety filter element 1 and preventing any fluid to pass from the outside of the main filter element 2 past the main filter media 17 into the main filter media inner space 18. Proper alignment of the sealing component 11 with its particular shape with the counter surface on the main filter element 2 can be achieved by appropriate relative positioning of the small wing 23 and the large wing 24 relative to the surface sections 8, 9, 10, 110, that give the sealing component 11 its contour shape with a single-fold rotational symmetry, on the one hand and appropriate alignment of the small first recess 25 and small second recess 26 and the main filter element circumferential surface 19 on the main filter element 2.

Fig 40 shows that several sealing effects are created between the main filter element 2 and the safety filter element 1. The sealing component 7 is designed as a lip-seal that seals with radial sealing force against the main filter element circumferential surface 19 of the main filter element 2. Furthermore the radially protruding part 45 of the material that forms the sealing component 11, the wings 23, 24 and the housing sealing component 12 abuts against the top rim of the circular wall 46 that is arranged radially inside the circular wall 28 on the bottom surface 27 of the main filter element and hence acts as an additional axial seal. The radially protruding part 45 forms a radially extending safety filter element abutment surface. The top rim of the circular wall 46 forms a main filter element abutment surface that can come into contact with the safety filter element abutment surface, the abutment of the main filter element abutment surface with the safety filter element abutment surface limiting the relative movement of the main filter element relative to the safety filter element along the longitudinal axis. The design shown in Fig. 40 can hence be understood to be a design, where the safety filter element 1 has a first safety filter element circumferential surface 7 as described above and has a second safety filter element circumferential surface (the surface of the protruding part 45), whereby a first sealing component 11 (the part of the sealing material on the safety filter element circumferential surface 7) extends along the first safety filter element circumferential surface 7 and a second sealing component (the part of the sealing material on the protruding part 45) extends along the second safety filter element circumferential surface. In the design shown in Fig. 40 the first sealing component and the second sealing component are parts of the same sealing material.

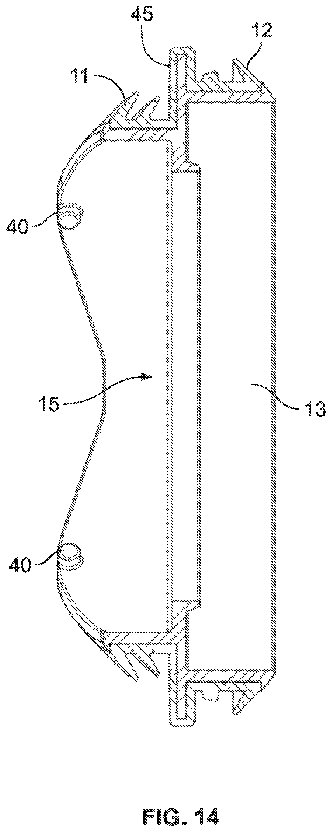

The first housing lid 32 has an inwardly protruding wall 47. As part of the protruding wall 47 knobs 48 are provided that are flush with the protruding wall 47 and are formed by interruptions in the protruding wall 47. Hollow cylinders 49 are provided protruding from the bottom surface 27. The hollow cylinders 49 are formed to take up the knobs 48 once the main filter element 2 has reached its end position as shown in Fig. 14. Given that there is
- a fixed spatial relationship between the first recess 25 and the second recess 26 and the cylinders 49 that are all arranged on the bottom surface 27;
- a fixed spatial relationship between the wings 23, 24 and the locking pins 40 that are arranged on the safety filter element endcap 13;
- the end of the bayonet channel 37 and the knobs 48 that are arranged on the first housing lid 32 and the interface ring 34;
the engagement between the cylinders 49 and the knobs 48 also indicates that the main filter element 2, the safety filter element 1 and the first housing lid 32 all have taken up a predetermined position relative to each other.

Fluid to be filtered will be introduced into via the inlet tube 31 into the housing 5 of the assembled filter assembly 4. The fluid to be filtered will enter into the circumferential space between the inward facing surface of the central housing part 30 and the outward facing surface of the main filter media. Depending on the orientation and placement of the inlet tube, the fluid to be filtered can be made to swirl around the outward facing surface of the main filter media. Making the fluid swirl can aid transporting larger particles in the fluid radially outward towards the inward facing surface of the central housing part 30. A circular baffle 150 arranged on the second housing lid 35 keeps the larger particles that have accumulated in the area of the second housing lid 35 away from the main filter media 17.

The fluid to be filtered will pass through the main filter media 17 and the safety filter media 6 into the safety filter media inner space 14 and out of the outlet opening 15 of the safety filter media endcap 13 through the outlet tube 33 of the first housing lid 32.

The sealing component 11 will prevent any fluid from entering the main filter media inner space 18 by any other way than via the main filter media 17. The housing sealing component 12 will prevent any fluid from entering into the outlet opening 15 of the safety filter media endcap 13 by any other way than via the safety filter media 6.

If the main filter element 2 needs to be exchanged, for example when the main filter media 17 has become clogged, the second housing lid 35 can be opened and the main filter element 2 withdrawn in a linear movement. As the main filter element 2 is withdrawn, the safety filter element 1 prevents any unwanted items, particles or fluid droplets to enter into the outlet tube 33 of the first housing lid 32. A new main filter element 2 is then introduced as describe above.

As can best seen from Fig. 39 and 40, the presence of the safety filter element 1 determines the placement of the main filter element 2 and hence the placement of the second housing lid 35, because the main filter element 2 rests on the radially protruding wall 45 of the safety filter element 1 and the second housing lid 35 rests on the main filter element 2. If the safety filter element 1 would be missing, the main filter element 2 would slide deeper into the central housing part 30 and deeper towards the first housing lid 32 and further away from the second housing lid 35. This misalignment can be made to be noticed by the user, for example if the attachment means for the first housing lid 32 (not shown) can only engage, if the main filter element 2 is in the position shown in Fig. 40 but not deeper in the central housing part 30 (closer to the first housing lid 32).

The baffle 151 prevents fluid that enters the housing via inlet tube 31 to flow directly onto the outward surface of the main filter media 17, but diverts the fluid flow.

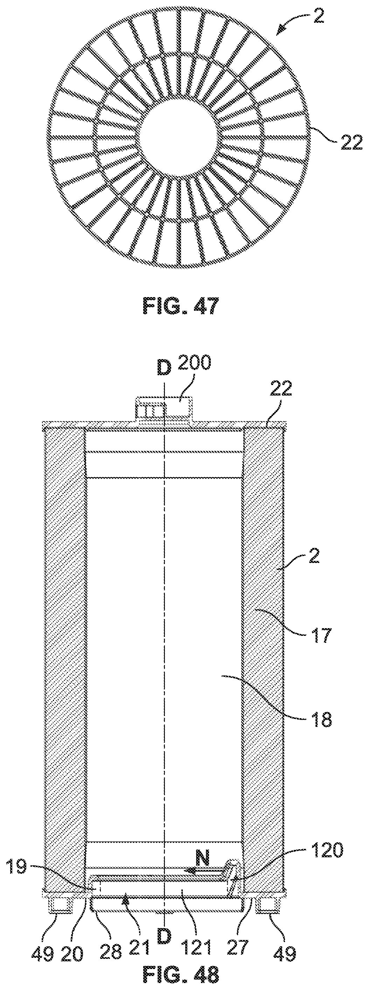

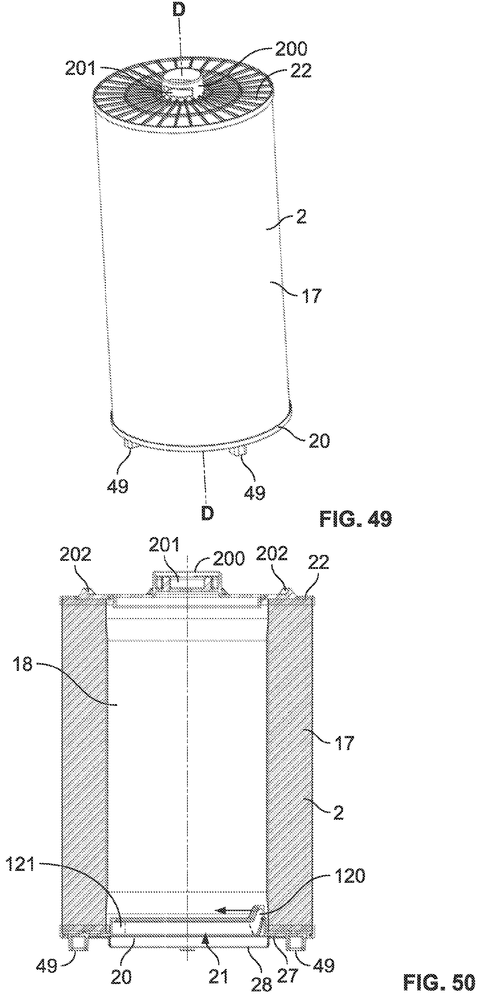

The embodiment of the main filter element 2 shown in Fig. 48 and 49 differs from the one show in Fig. 42 to 47 mainly by the design of the endcap 22. In the design shown in Fig. 48 and 49 a protruding part 200 is provided. A recess 201 is provided in the protruding part 200. The recess 201 is orientated radially to the axis D of the main filter element 2.

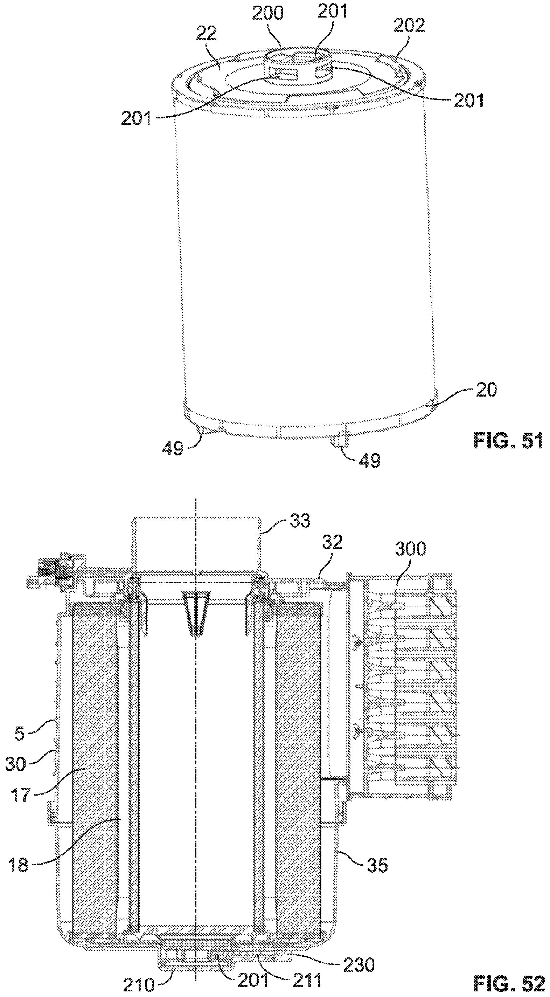

The embodiment of the main filter element 2 shown in Fig. 50 and 51 differs from the one show in Fig. 48 and 49 in the diameter and length of the main filter media 17, which is wider, thicker and shorter in the embodiment of Fig. 50 and 51 compared to the one of Fig. 48 and 49. Also the protruding part 200 has four recess 201 provided in the protruding part 200. Each recess 201 is orientated radially to the axis D of the main filter element 2. In addition the endcap 22 has ledges 202 that are provided to interact with the inside facing surface of the second housing lid 35 to dampen relative movements between the endcap 22 and the second housing lid 35, especially to reduce rattle noises.

The filter assembly 4 shown in Fig. 52 to 55 mainly differs from the filter assembly 4 shown in Fig. 37 to 41 in in the size and shape of the safety filter element 1 and the main filter element 2 and by the arrangement of a prefilter 300. Also, the embodiment of Fig. 52 to 55 has pressure sensor Also the design of the main filter element endcap 22 and the second housing lid 35 is different.

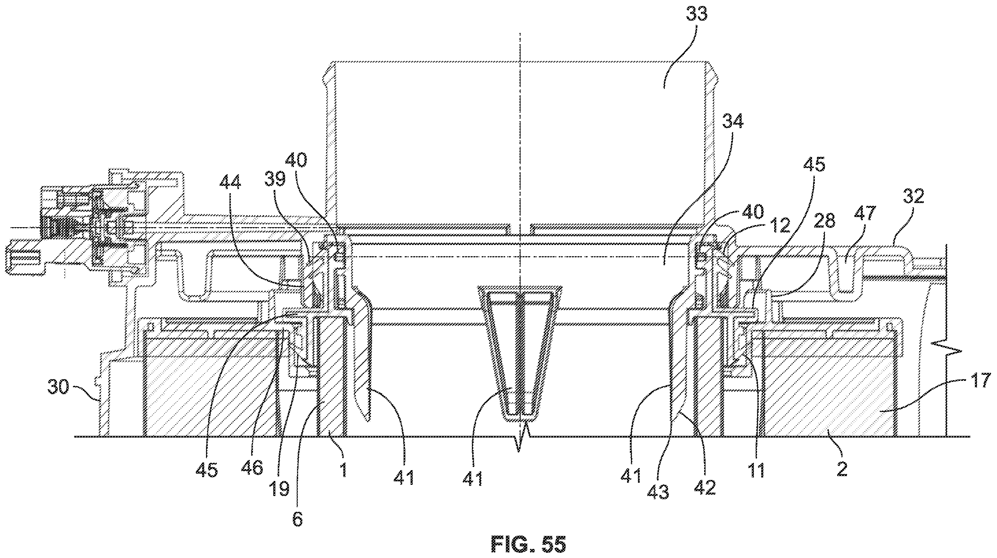

As becomes apparent when comparing Fig. 40 and Fig. 55 the general working of the sealing component 11 and the housing sealing component 12 is the same, however, in both embodiments, which is why for the detailed description of the interaction of the safety filter element 1 and the main filter element 2 and the first housing lid 32 reference is made to the description of Fig. 37 to 41.

Fig. 52 to 54 show that the main filter element endcap 22 is provide with an outwardly protruding part 200. In the assembled state the protruding part 200 engages a dome shaped receiving part 210 on the second housing lid 35. The engagement stabilizes the position of the end of the main filter element 2 that has the endcap 22 relative to the housing 5. The receiving part in the embodiment shown in Fig. 52 to 54 has a through-hole 211. A latch 230 is provided that can be positioned
- in a locking position, whereby in the locking position the latch 230 is arranged in the through-hole 211 and in the recess 201 of the protruding part 200 of the main filter endcap 22 and
- in a release position, whereby in the release position the latch 230 is not arranged in the recess 201.

As can best seen from Fig. 55, the presence of the safety filter element 1 determines the placement of the main filter element 2 and hence the placement of the second housing lid 35, because the main filter element 2 rests on the radially protruding wall 45 of the safety filter element 1 and the second housing lid 35 rests on the main filter element 2. If the safety filter element 1 would be missing, the main filter element 2 would slide deeper into the central housing part 30 and deeper towards the first housing lid 32 and further away from the second housing lid 35. This misalignment can be made to be noticed by the user, for example if latch 230 cannot engage into the recess 201, if the main filter element 2 is too deep in the central housing part.

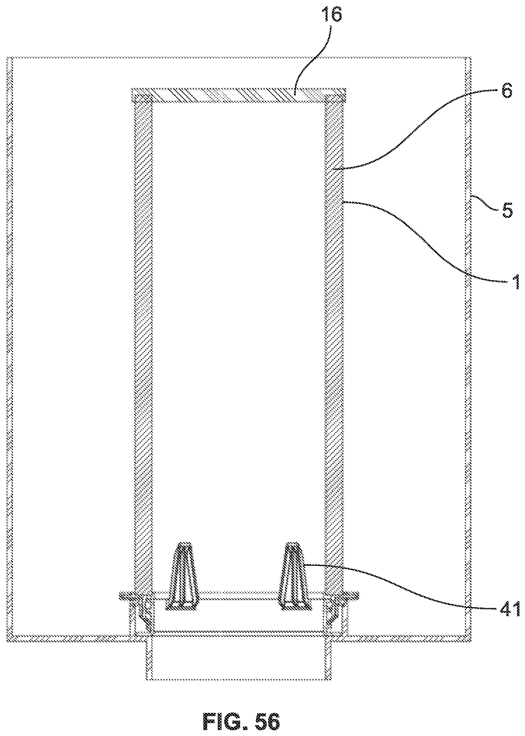

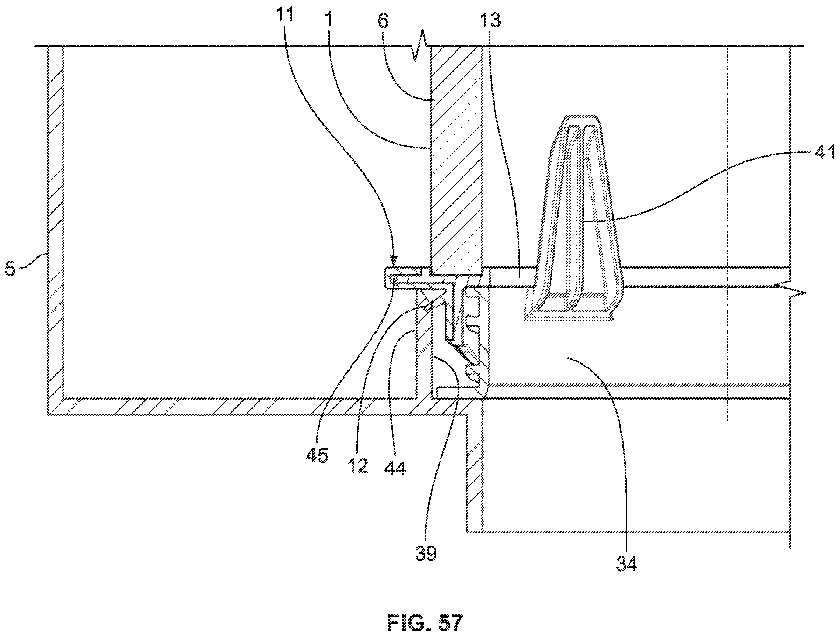

Fig. 56 and 57 show a further embodiment of the safety filter element 1. In the embodiment of Fig. 56 and Fig. 57 the design of the sealing component 11 and the design of the housing sealing component has been changed when compared to the embodiment shown in Fig. 1 to 21. The sealing component 11 in the embodiment of Fig. 56 to 57 is an axial seal and is simply provided by the radially protruding part 45. The main filter element 2 will seal against this sealing component 11 by way of the circular wall 46 that is arranged radially inside the circular wall 28 on the bottom surface 27 of the main filter element sealing against the radially protruding part 45.

In the embodiment of Fig. 56 and 57 the housing sealing component 12 seals against the sealing surface 39 provided on the circular wall 44. The housing sealing component works as a radial-axial seal here. The circular wall 44 is chamfered at its tip. The tip of the circular wall 44 seals against the radially protruding part 45 providing an additional axial seal.

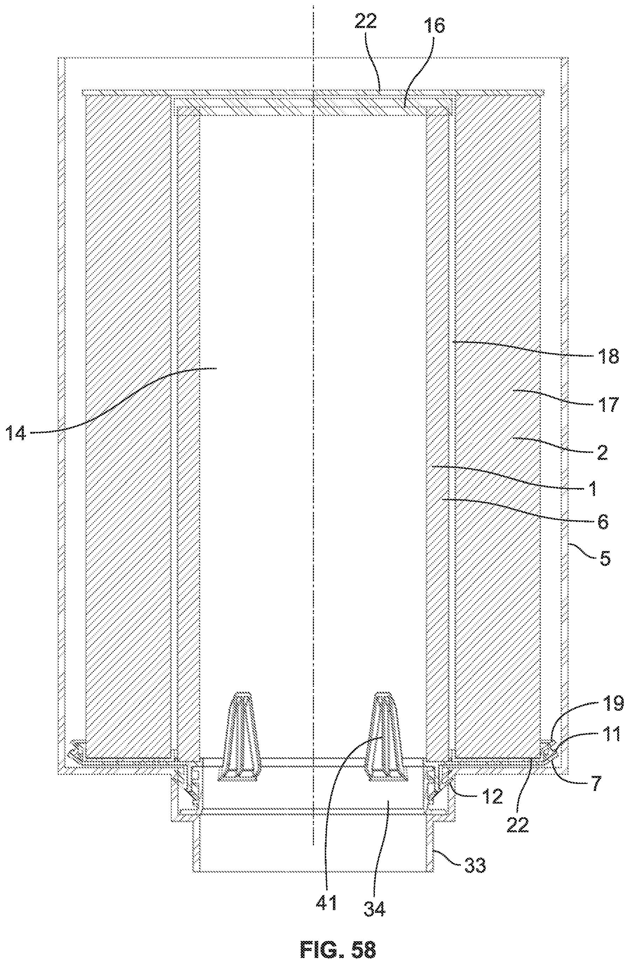

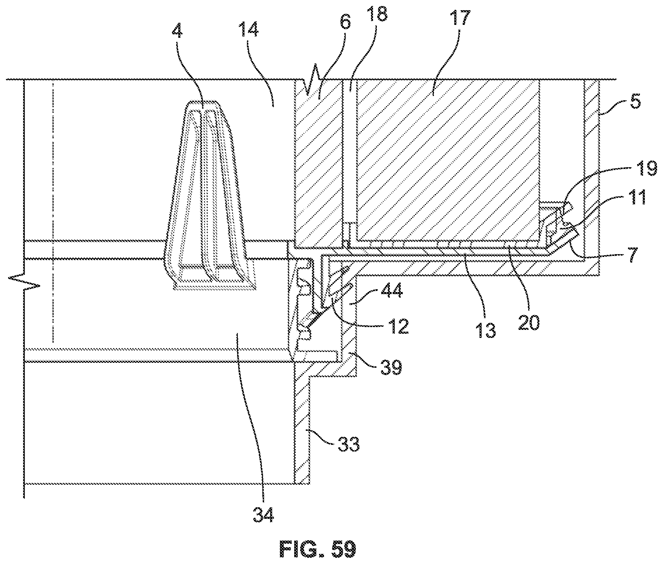

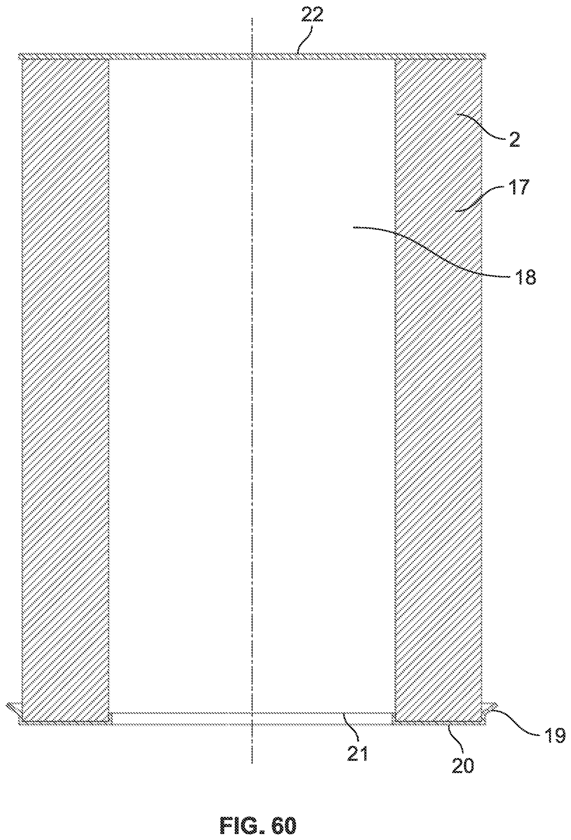

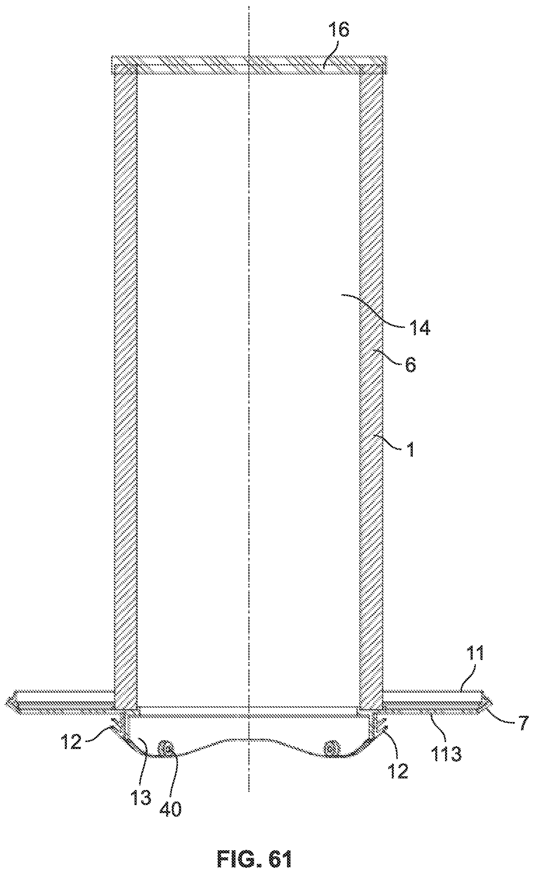

Fig. 58 to 62 show a further embodiment of the safety filter element 1. In the embodiment of Fig. 58 to 62 especially the design of the sealing component 11 and the design of the endcap 13 has been changed when compared to the embodiment shown in Fig. 1 to 21. The safety filter element circumferential surface 7 in the embodiment of Fig. 58 to 62 is placed on a large rim 113 of the endcap 13 that protrudes radially and beyond the outer circumference of the main filter media 17. The safety filter element circumferential surface 7 has surface sections with a normal vector N that is directed towards the safety filter element inner space 14. The main filter element circumferential surface 19 is provided on an angled rim that protrudes from the main filter endcap 20. The embodiment of Fig. 58 to 62 shows a safety filter element 1 suitably to be used in a filter assembly, said filter assembly comprising a main filter element 2 comprising a main filter media 17 and the safety filter element 1, said safety filter element 1 extending along an axis A, the safety filter element 1 comprising:
- a safety filter media 6;
- at least one safety filter element endcap 13, the safety filter element endcap 13 comprising a safety filter element circumferential surface 7, and
- at least one sealing component 11 extending along the safety filter element circumferential surface 7.

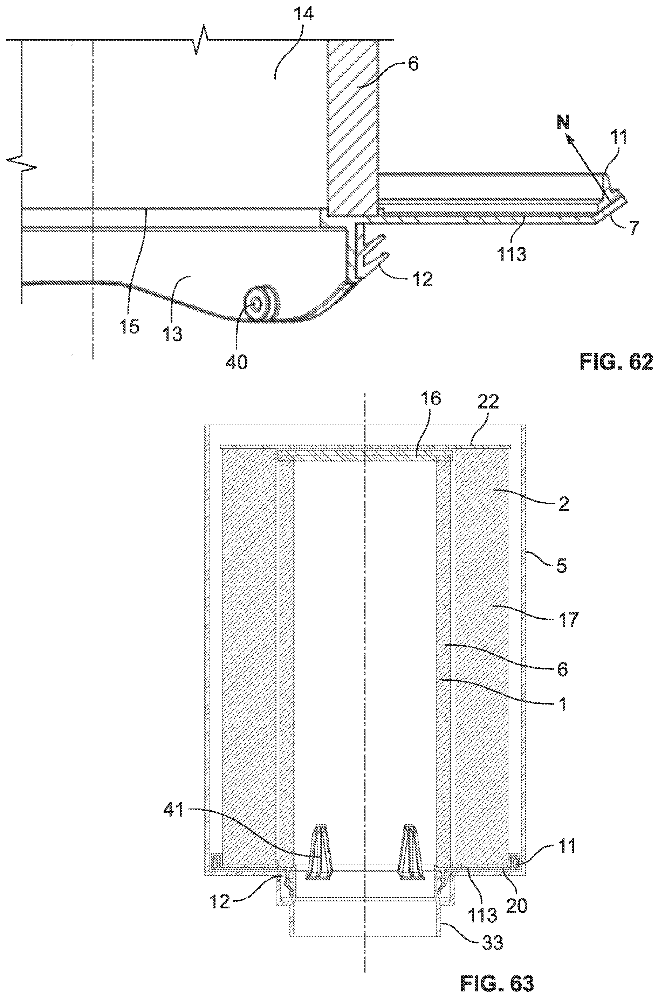

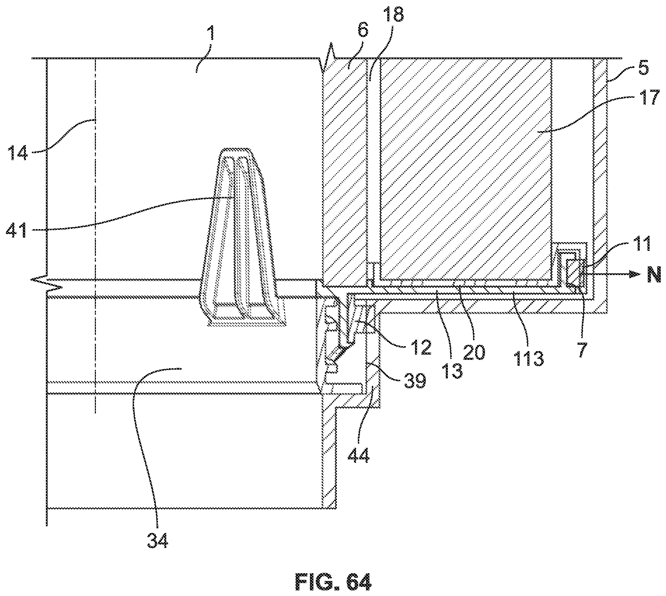

Fig. 63 and 64 a further embodiment of the safety filter element 1. In the embodiment of Fig. 63 and 64 especially the design of the sealing component 11 and the design of the endcap 13 has been changed when compared to the embodiment shown in Fig. 1 to 21. The safety filter element circumferential surface 7 in the embodiment of Fig. 58 to 62 is placed on a large rim 113 of the endcap 13 that protrudes radially and beyond the outer circumference of the main filter media 17. The safety filter element circumferential surface 7 has surface sections with a normal vector N that is directed away from the safety filter element inner space 14. The main filter element circumferential surface 19 is provided on an angled rim that protrudes from the main filter endcap 20. Furthermore while the sealing component 11 in the embodiment of Fig. 58 to 62 is a lip seal, the sealing component 11 in the embodiment of Fig. 63 to 64 is a block seal. Furthermore while the housing sealing component 12 in the embodiment of Fig. 58 to 62 is a lip seal, the housing sealing component 12 in the embodiment of Fig. 63 to 64 is a block seal.

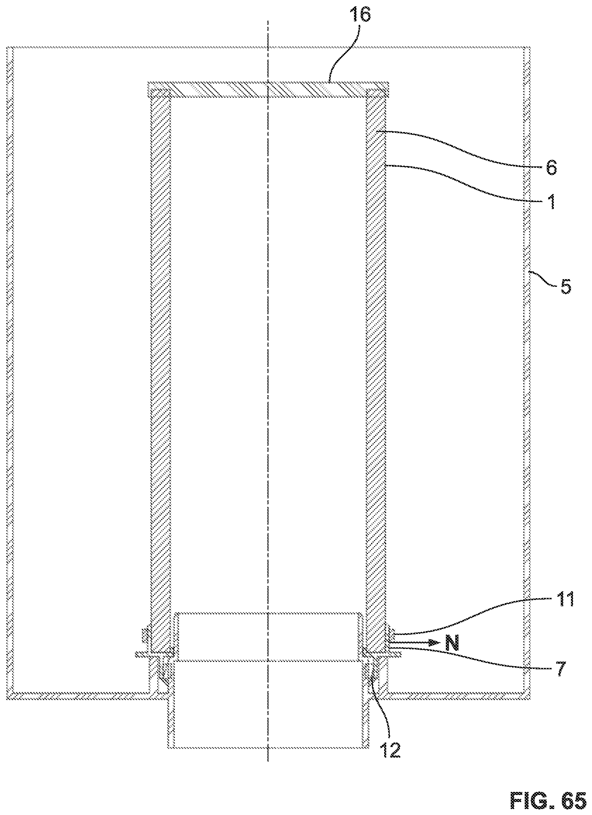

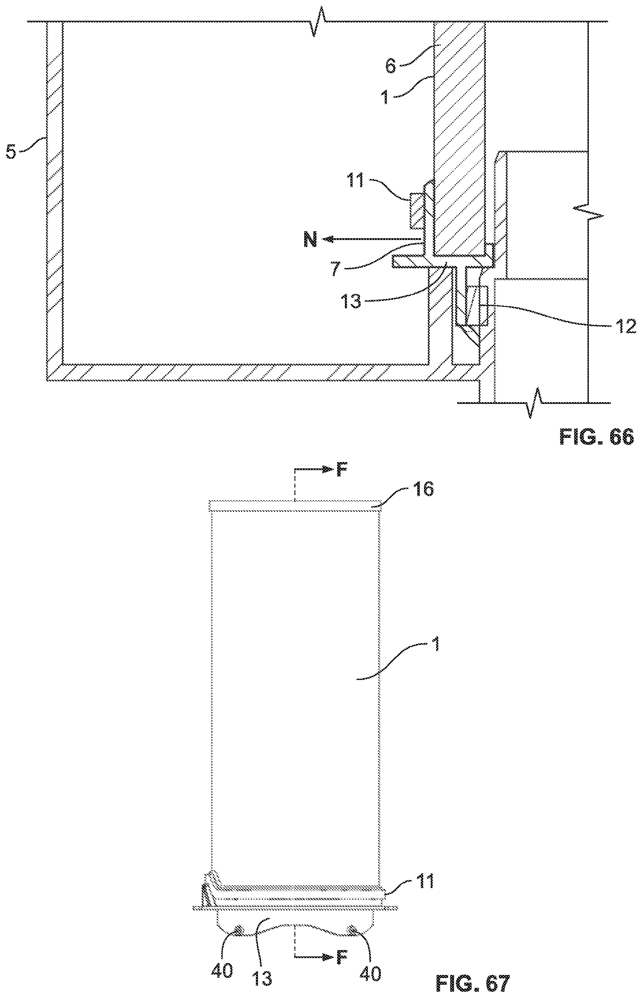

Fig. 65 and 66 show a further embodiment of the safety filter element 1. In the embodiment of Fig. 65 and 66 the design of the sealing component 11 and the design of the housing sealing component has been changed when compared to the embodiment shown in Fig. 1 to 21. The sealing component 11 in the embodiment of Fig. 65 and 66 is a block seal, while in the embodiment of Fig. 1 to 21 it is a lip seal. The housing sealing element 12 also is designed as a block seal. In addition the housing sealing element 12 is arranged facing radially inward, while in the design of Fig. 1 to 21 it is facing radially outward.

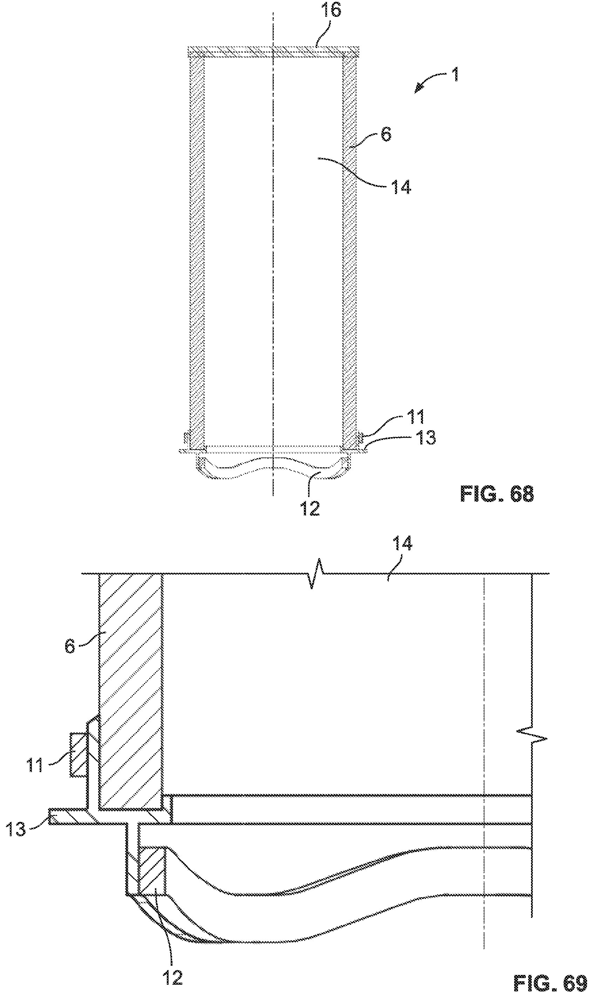

The design of the safety filter element 1 shown in Fig. 67 to 69 is similar to the design of the safety filter element 1 used in the embodiment of Fig. 65 and 66 in the sense the sealing component 11 in the embodiment of Fig. 67 and 69 is a block seal and the housing sealing element 12 also is designed as a block seal arranged facing radially inward. The locking pins 40 are arranged on the outer circumference of the safety filter element endcap 13.

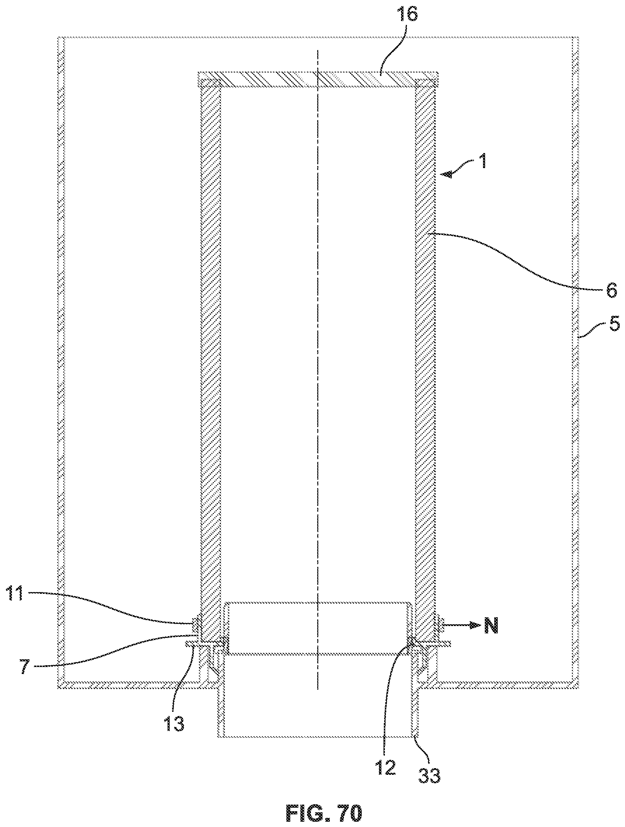

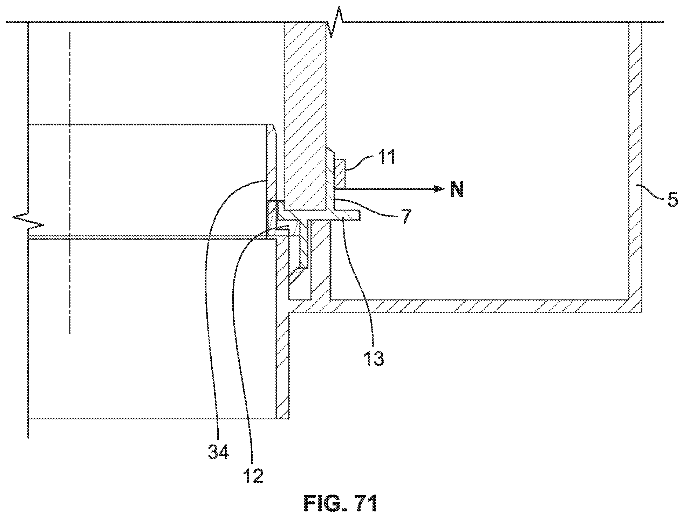

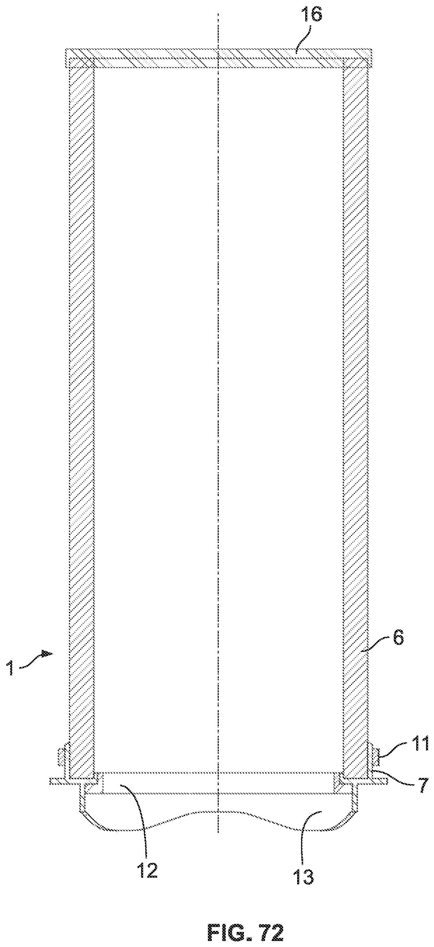

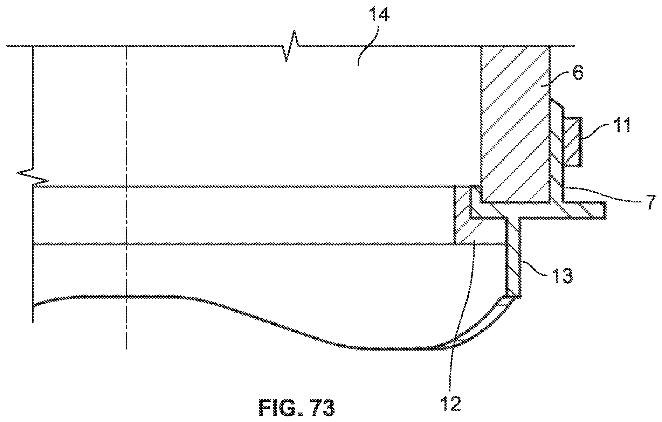

The design of the safety filter element 1 shown in Fig.70 to 73 is similar to the design of the safety filter element 1 used in the embodiment of Fig. 65 and 66 in the sense the sealing component 11 in the embodiment of Fig. 70 and 73 is a block seal. The housing sealing component 12 is designed as a pinch seal (a seal that is axially pushed between two surfaces).

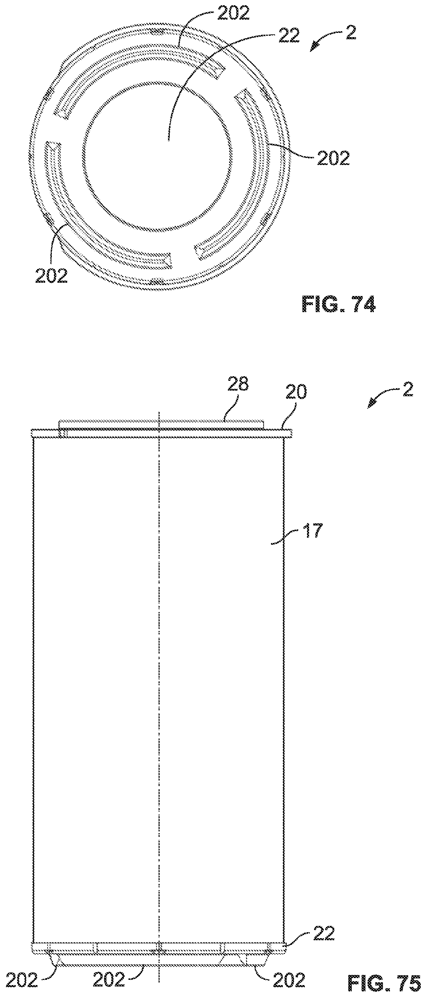

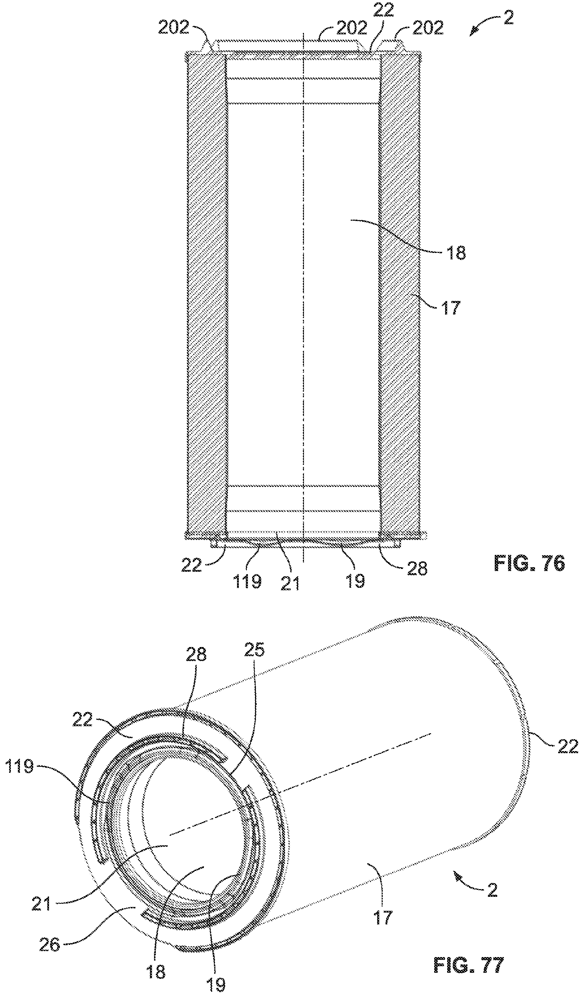

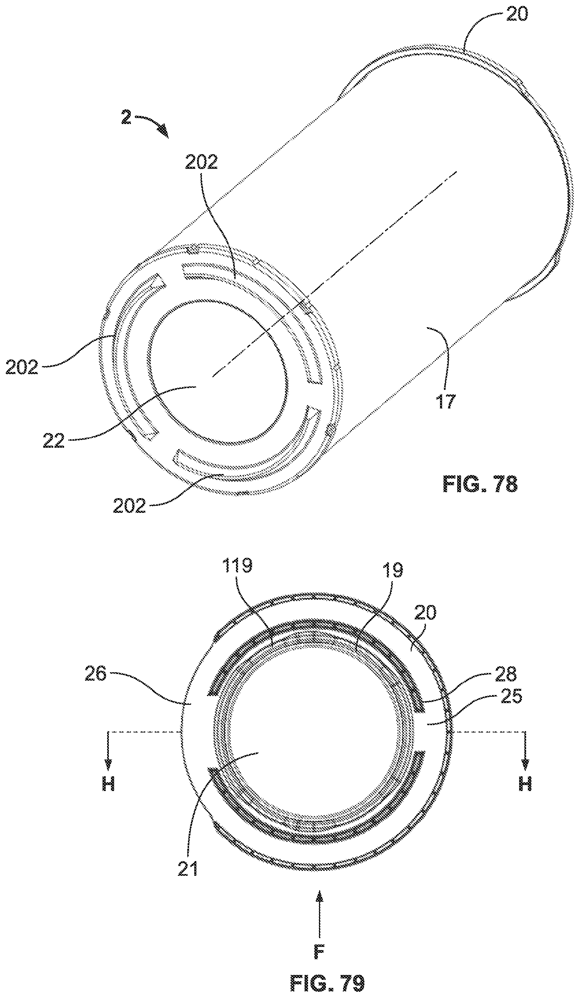

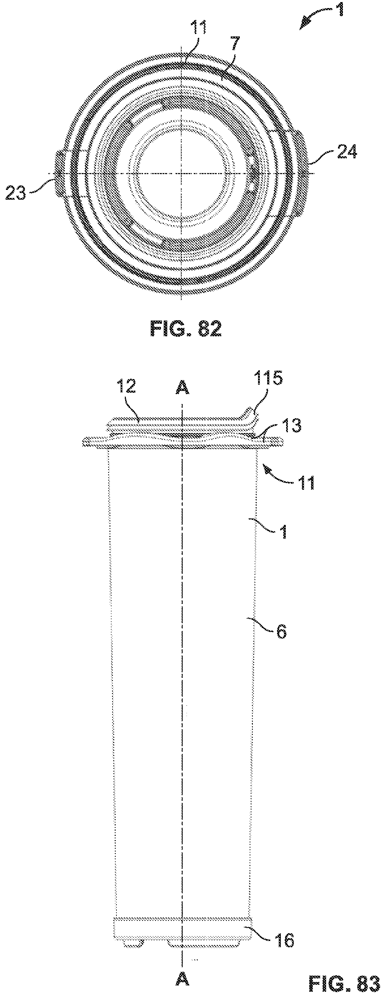

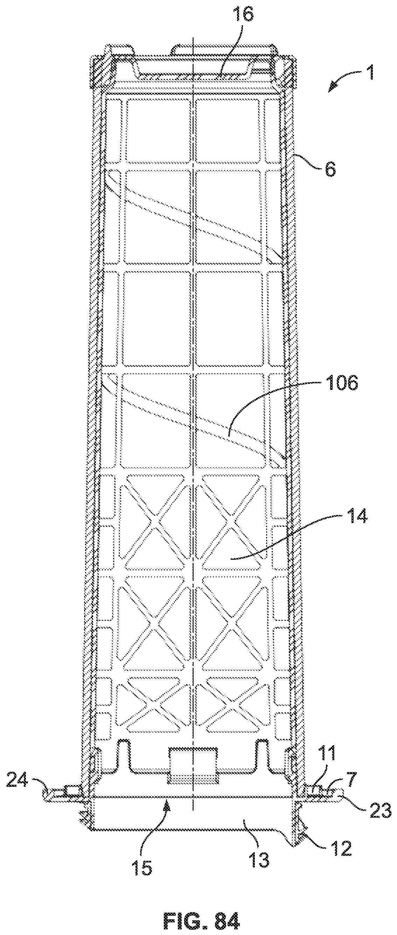

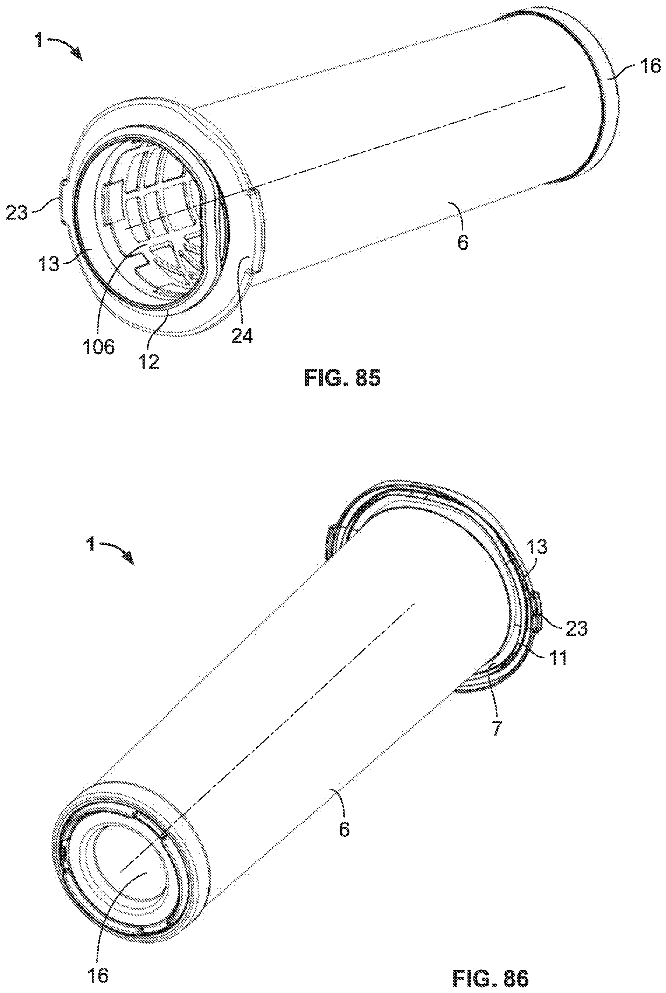

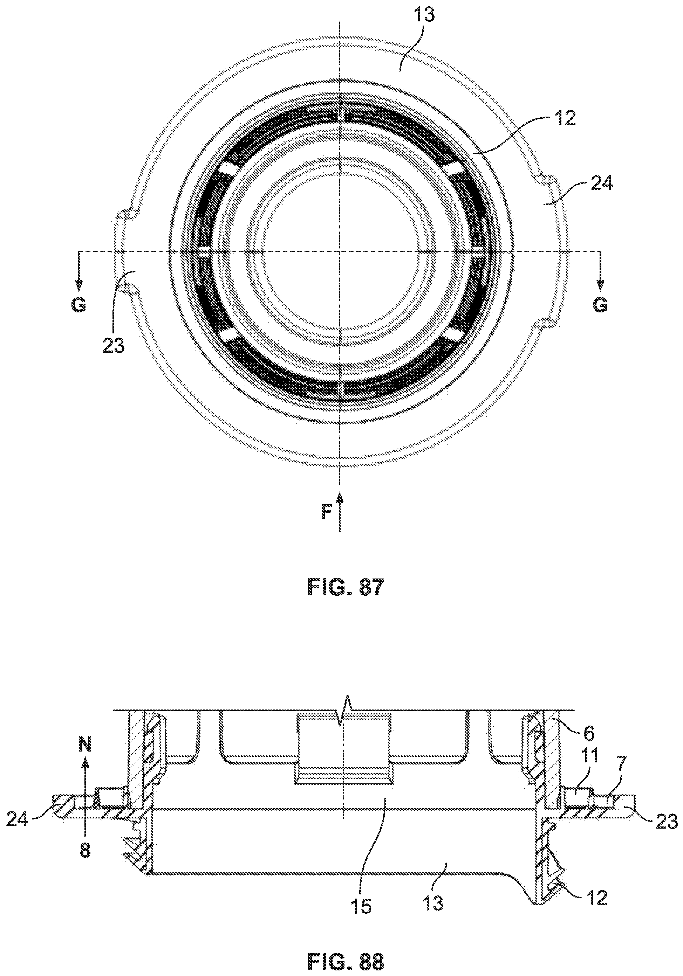

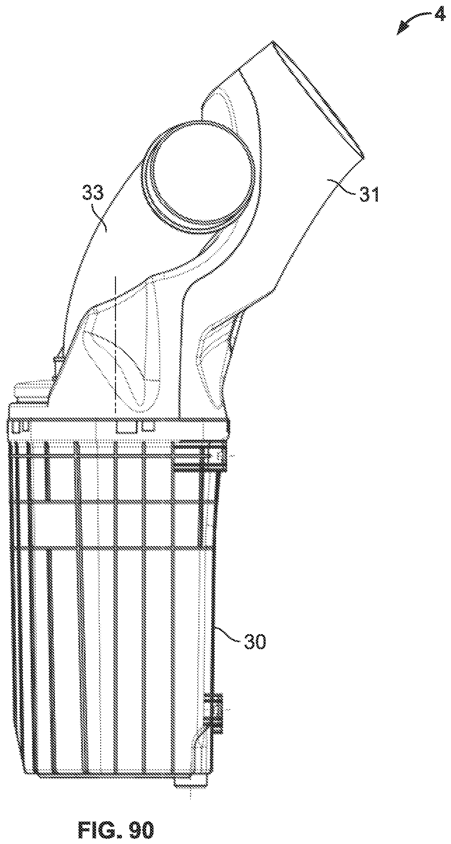

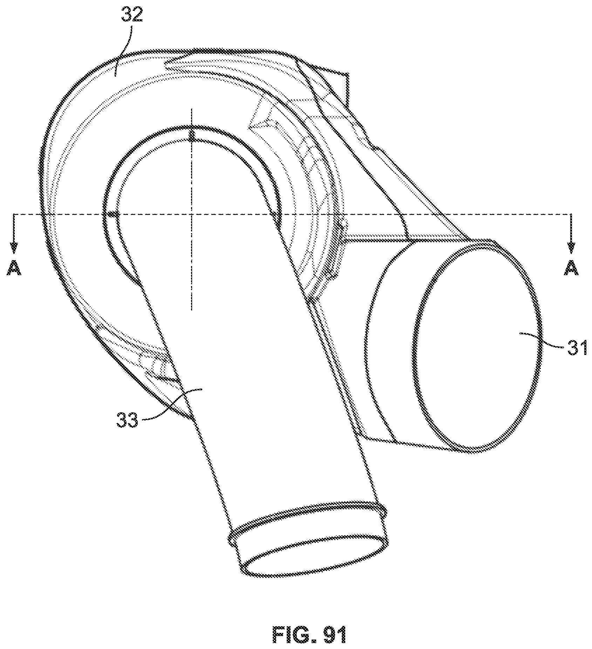

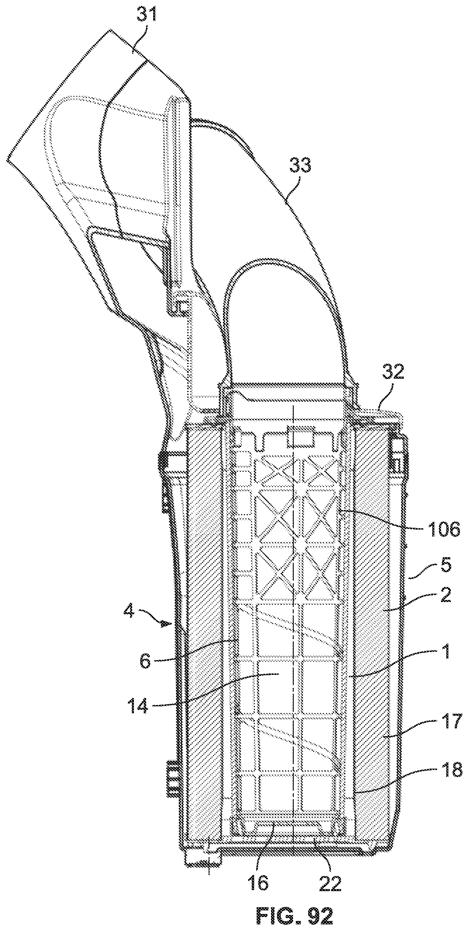

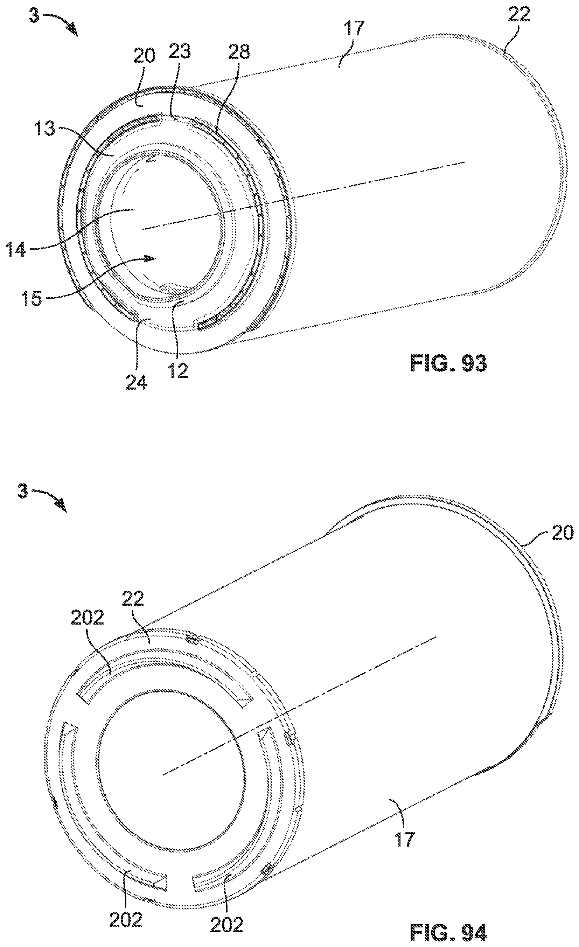

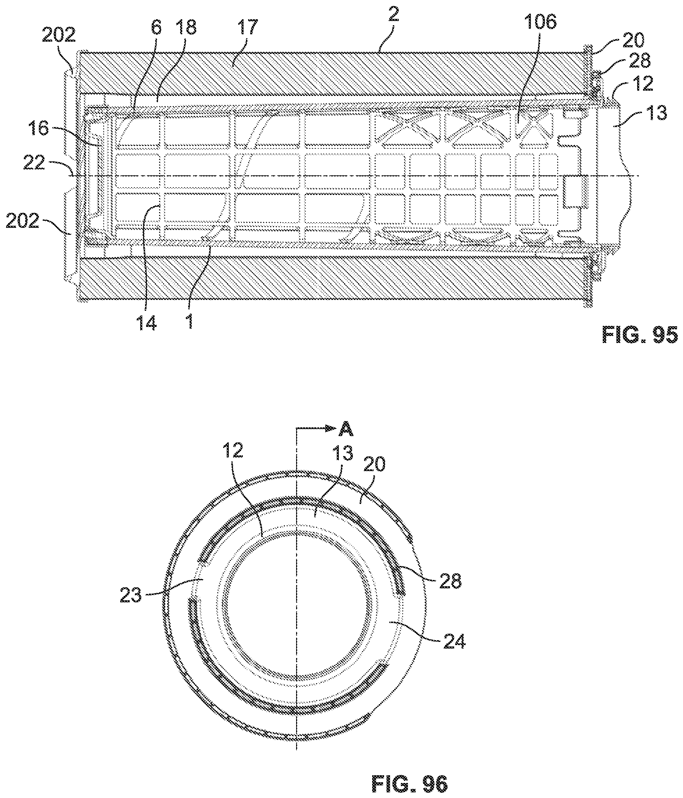

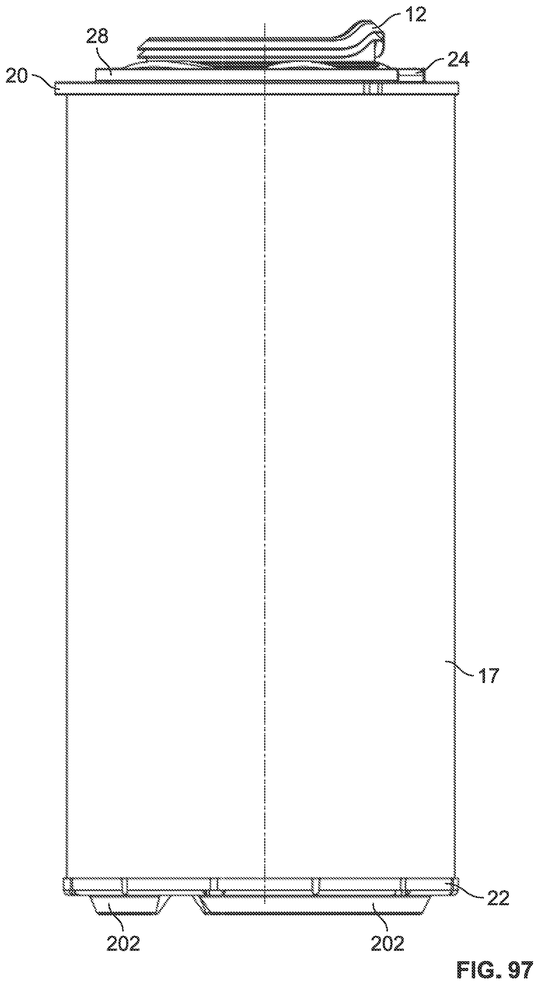

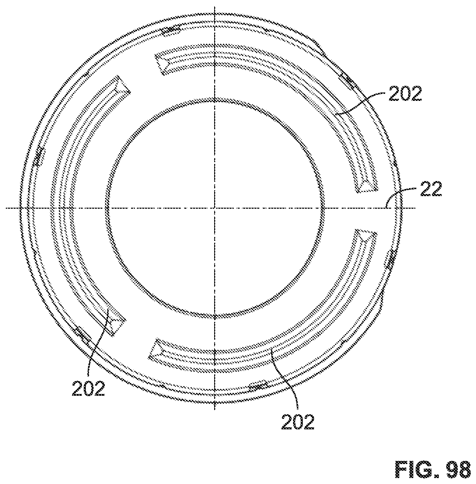

Fig. 90 to 92 show a further embodiment of a filter assembly according to the disclosure. In this filter assembly, a filter system 3 according to the disclosure is used, said filter system 3 being shown in Fig. 93 to 99. The filter assembly of Fig. 90 to 92 and the filter system 3 of Fig. 93 to 99 use the embodiment of a safety filter element 1 according to the disclosure as shown in Fig. 82 to 89 and the embodiment of a main filter element 2 according to the disclosure as shown in Fig. 74 to 81.

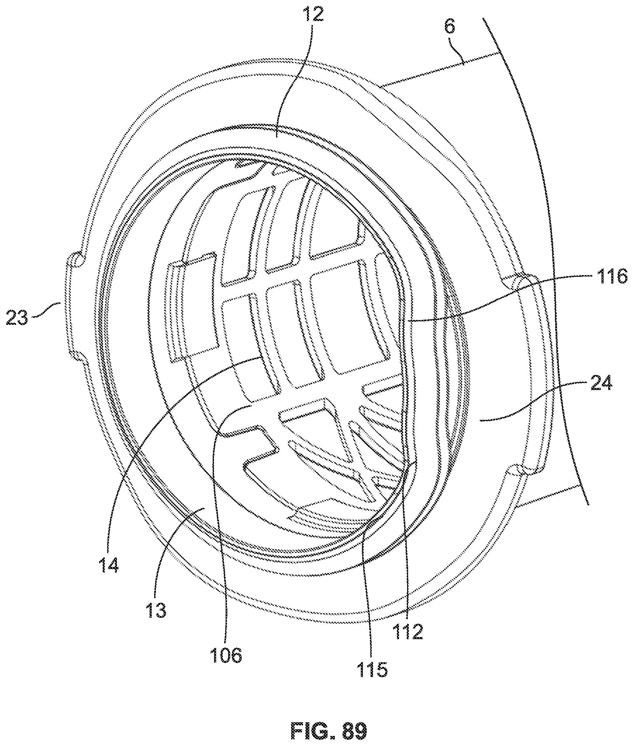

The safety filter element 1 of Fig. 82 to 89 has a support cage 106 that supports the safety filter media 6 from the inside. As can best be seen from Fig. 89, the support cage 106 is attached the safety filter element endcap 13 and extends away from the safety filter element endcap 13 into the safety filter element inner space 14.

The safety filter element circumferential surface 7 in the embodiment of Fig. 82 to 89 is ring-shaped and comprises a surface section 8 that is arranged such that the normal vector N to the surface section 8 is orientated parallel to the axis A. The sealing component 11 is provided by a wall-like sealing structure that encircles the safety filter media 6 like a ring. The housing sealing component 12 is a dual lip seal. As can best be seen in Fig. 89, the design of the housing sealing component 12 of the embodiment of Fig. 82 to 89 is similar to the design of the sealing component 11 in the embodiment of Fig. 1 to 21, with a surface section 112 that is offset from the remainder of the surface sections and adjoined to said remainder by slanted surface sections 115, 116.

The main filter element 2 of Fig. 74 to 81, like the embodiment shown in Fig. 51, has ledges 202 arranged on the main filter element endcap 22.

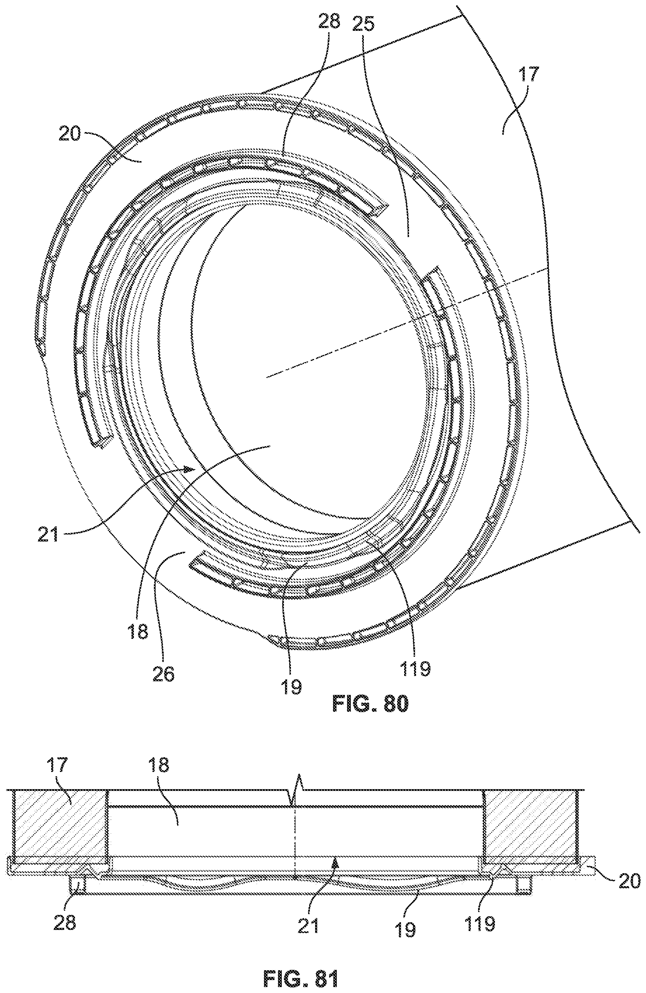

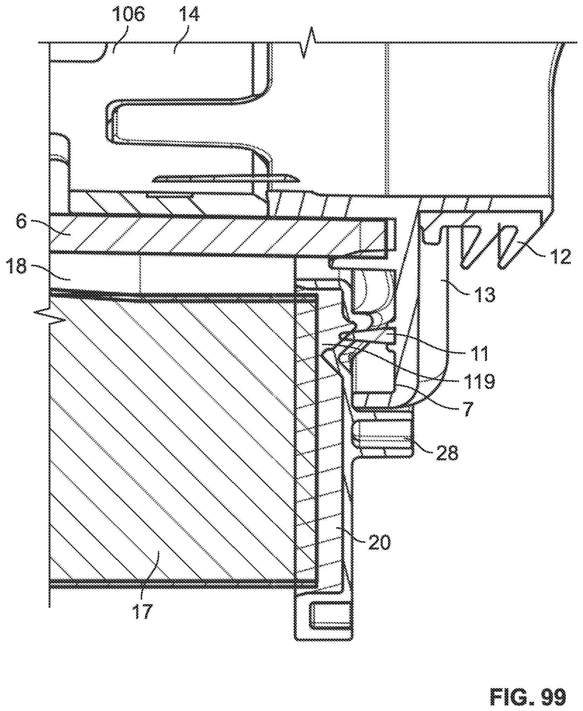

As can best be seen in Fig. 80 and 81, the main filter element circumferential surface 19 is provided by a material 119 arranged on the main filter element endcap 20. Fig. 99 shows how the sealing component 11 interacts with the material 119 that forms the main filter element circumferential surface 19.

In the embodiment of the filter assembly 4 as shown in Fig. 90, 91, 92, 100, the inlet tube 31 and the outlet tube 32 are both arranged at the top of the housing. In this design, the central housing part is cup shaped and is closed by the first housing lid at the top. No second housing lid is provided. The inlet tube 31 by its specific three-dimensional design guides fluid to be filtered into the space between inward facing surface of the central housing part 30 and the outward facing surface of the main filter element 2.

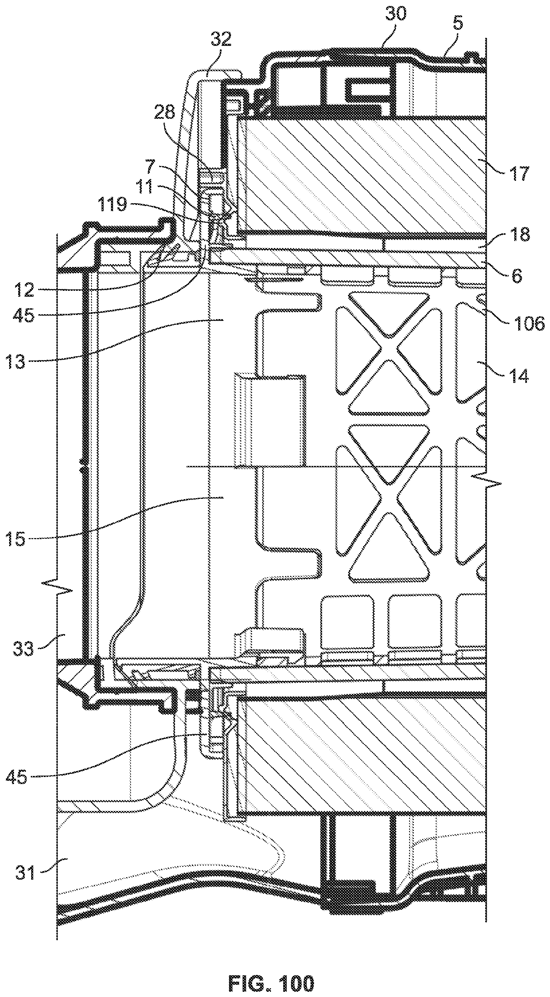

As can best seen from Fig. 100, the presence of the safety filter element 1 determines the placement of the first housing lid 32, because the first housing lid 32 rests on the radially protruding wall 45 of the safety filter element 1. If the safety filter element 1 would be missing, the first housing lid 32 would slide deeper onto the central housing part 30. This misalignment can be made to be noticed by the user, for example if the attachment means for the first housing lid 32 (not shown) can only engage, if the first housing lid 32 is in the position shown in Fig. 100 but not deeper on the central housing part 30.

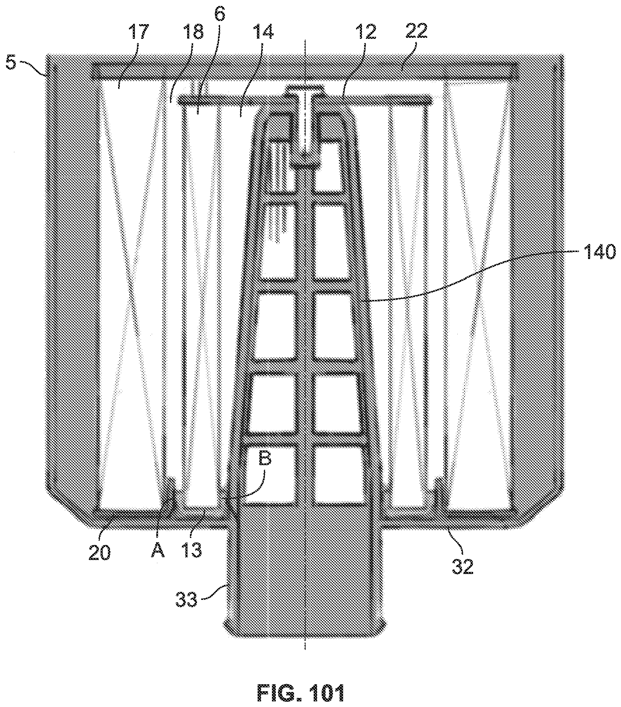

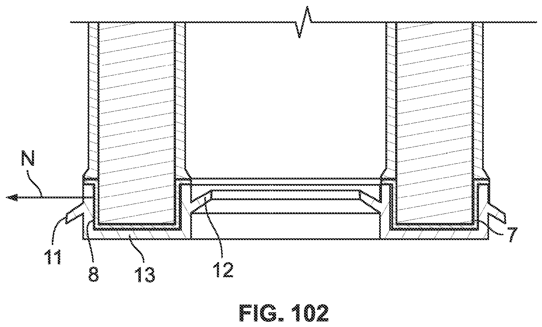

The embodiment shown in Fig. 101 and 102, which has not been claimed, shows that the safety filter element 1 can be attached to a support structure 140 that is part of the housing 5, for example part of the first housing lid 32. The safety filter element 1 is attached with its safety filter element endcap 16 to the support structure 140.

As can best be seen from Fig. 102, the safety filter element has a ring-shaped safety filter element circumferential surface 7 that has a surface sections 8 that is arranged such that the normal vector N to the surface section 8 is orientated to point to the outside of the safety filter element 1. A sealing component 11 forming a lip seal extends along the safety filter element circumferential surface 7. A housing sealing component 12, also provided by a lip seal, seals against the support structure 140 of the housing 5.

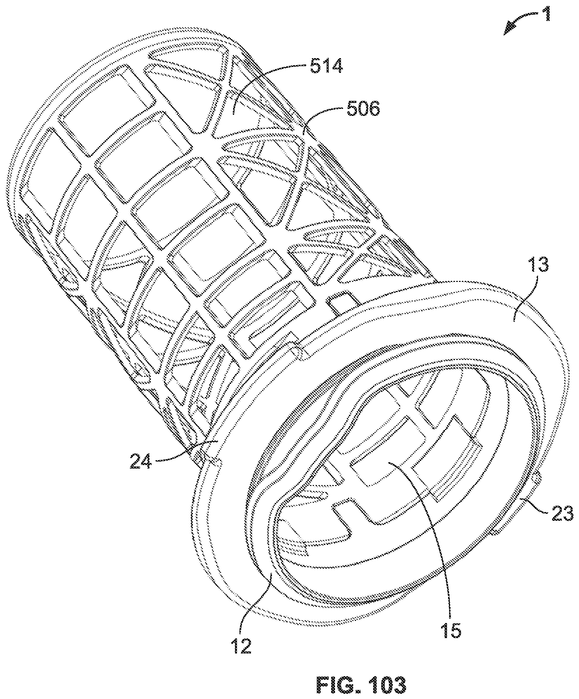

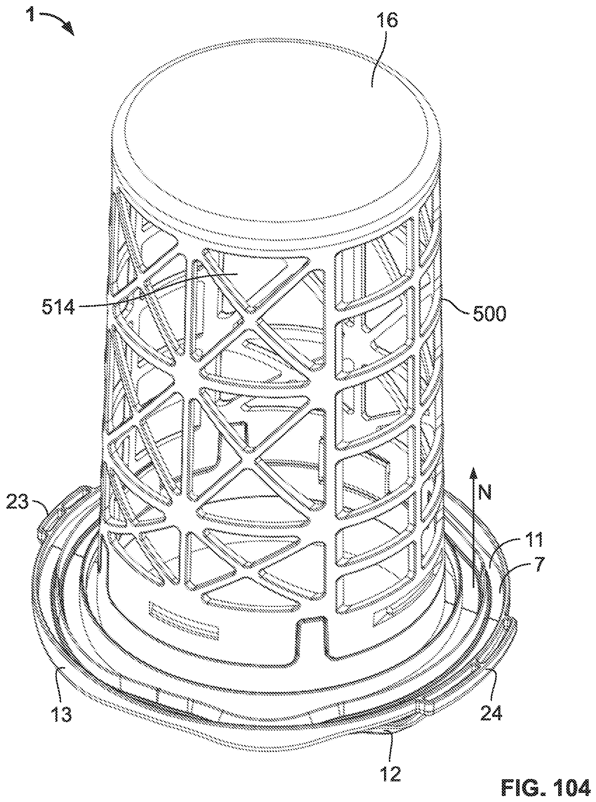

Fig. 103 and 104 show that a safety filter element 1 according to the disclosure can have a safety cage 506, whereby the safety cage 506 has a safety cage inner space 514. Such embodiments can be called "tool catcher" because a safety filter element 1 in the design of Fig. 103 and 104 primarily are used to "filter" and tools falling into the housing 5 out and to prevent them from leaving the housing via the outlet opening 15. Thereby the safety filter element prevents any object arranged downstream of the safety filter element 1 to be damaged by a tool. In a modification of the design shown in Fig. 103 and 104, a safety filter media (not shown in Fig. 103, 104) can be put over the safety cage 506. This would make the design shown in Fig. 103 and 104 into a design similar to the one shown in Fig. 82 to 89.

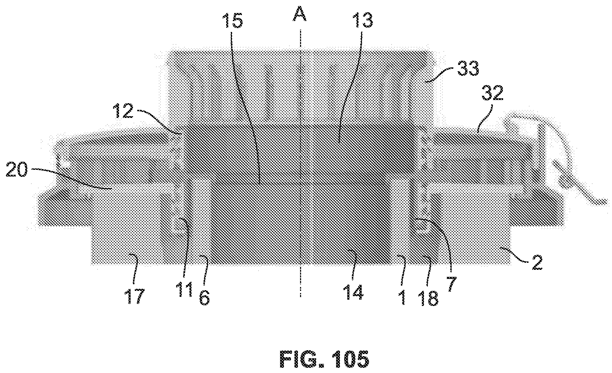

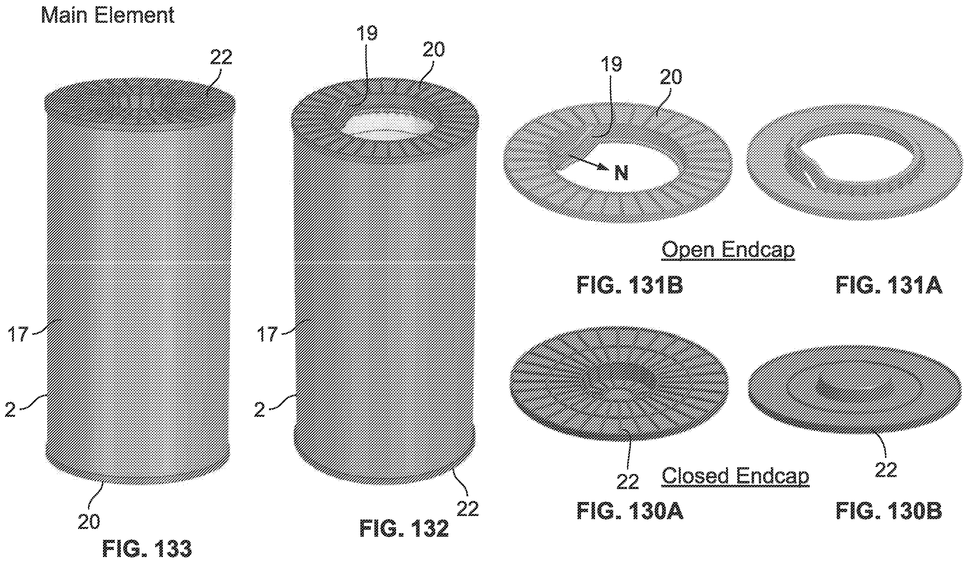

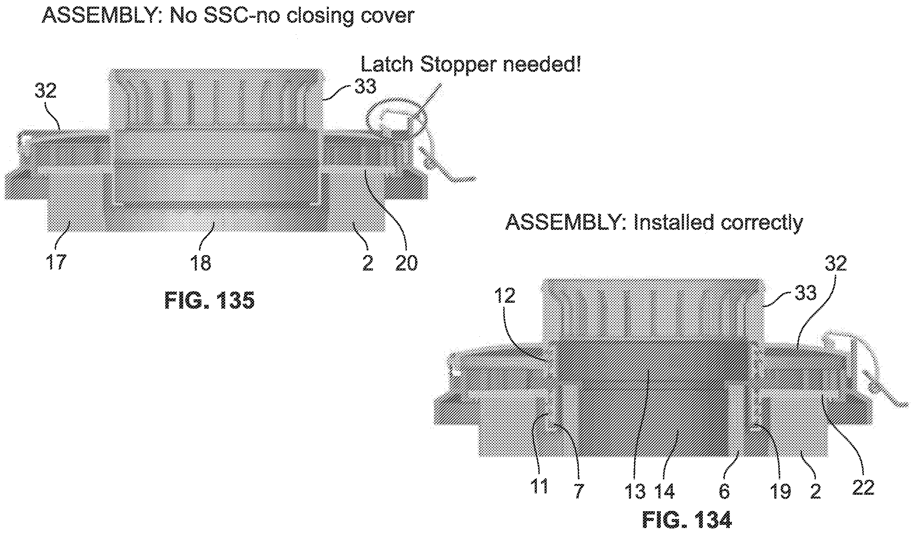

In a preferred embodiment shown in FIG. 105, 133, 134, the main (or primary), shown as having pink endcaps, and the safety (or secondary), shown as having a green endcap, filter elements are shown as installed in an air cleaner housing shown in orange. The cover, shown as blue, also contains the clean-air outlet which connects to the turbo via a duct and is removably attached onto the main air cleaner body or housing.

Two sets of seals are shown in the embodiment below in yellow. Both sets are fixed to or carried by the safety element endcap. The main element has a sealing surface only and does not carry or have any seals fixed to it. The first seal or set of seals on the safety prevent dirty air from passing between the safety and the cover. The second seal or set of seals prevents dirty air from passing between the safety and the main element.

A third seal or set of seals (not shown) is also possible in which the third set would prevent dirty air from passing between the safety and the air cleaner body or cover which would provide an additional back up seal.

In the embodiment shown in Fig. 105, 134,135, the seals (e.g., flexible or compressible members that can create a seal when pressed against a separate component) are outwardly directed thermoplastic elastomer seals in a wiper configuration. The seals could be any suitable sealing material and could seal either inwardly, outwardly, axially, or in a pinch configuration. The seals can be round or non-round and can deviate from an axial plan (e.g., have a wave or step-type configuration).

The safety outlet, the main element sealing surface, and the cover can each be either round or non-round. For example, any of the aforementioned components could have an irregular shape that would require a specific installation orientation (e.g., single fold symmetry or some other asymmetric shape). The asymmetry could be achieved as a result of the seals or sealing surface being non-round or by some axial deviation in the seal or sealing perimeter (e.g., one or more of a non-symmetrical wave, an undulation, and a stepped configuration) or both non-round and with axial deviation in the sealing perimeter.

In the embodiment shown in Fig. 105, 134, 135, the media for the main element is pleated. Other media configurations for the main and/or safety elements are possible such as, for example, fluted, corrugated, or a media wrap are possible. The media can be cellulose or synthetic and may or may not have additional layers such as a support layer, a liner, or other filter layers to enhance filtration such as fine fiber or nanofiber.

While the first set of seals and second set of seals shown in FIG. 105, 134, 135 are aligned vertically, they may also be offset (e.g., when the circumferential outer surface of the endcap has a different sized diameter at different portions along the length of the endcap. Also, although the first and second sets of seals shown in FIG. 105, 134, 154 are shown as appearing symmetrical, the seals in the first and/or second set may be asymmetric (e.g., as a result of asymmetry of the safety outlet, the main element sealing surface, and/or the cover).

Having described the preferred aspects and implementations of the present disclosure, modifications and equivalents of the disclosed concepts may readily occur to one skilled in the art. However, it is intended that such modifications and equivalents be included within the scope of the claims which are appended hereto.

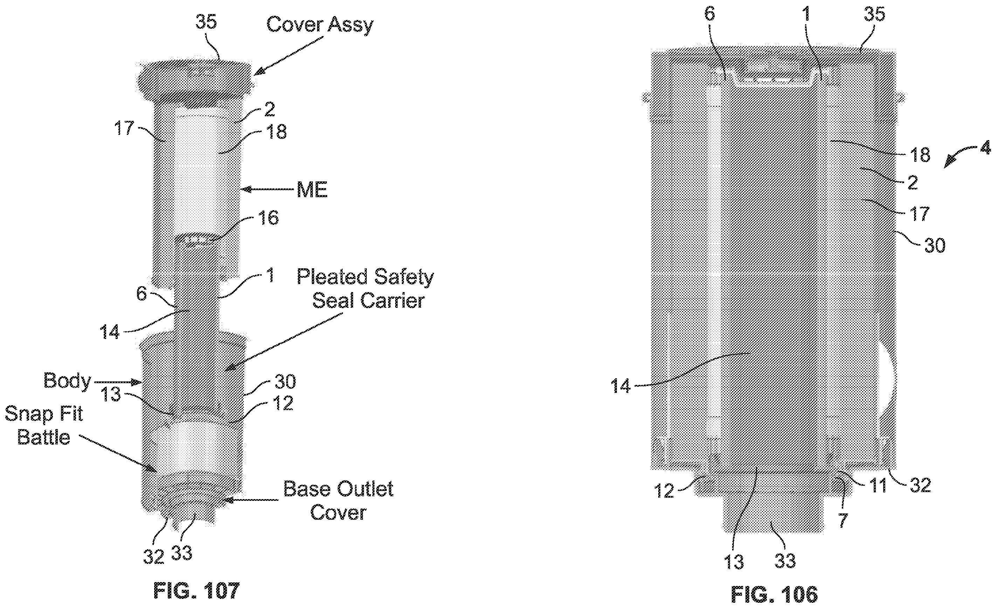

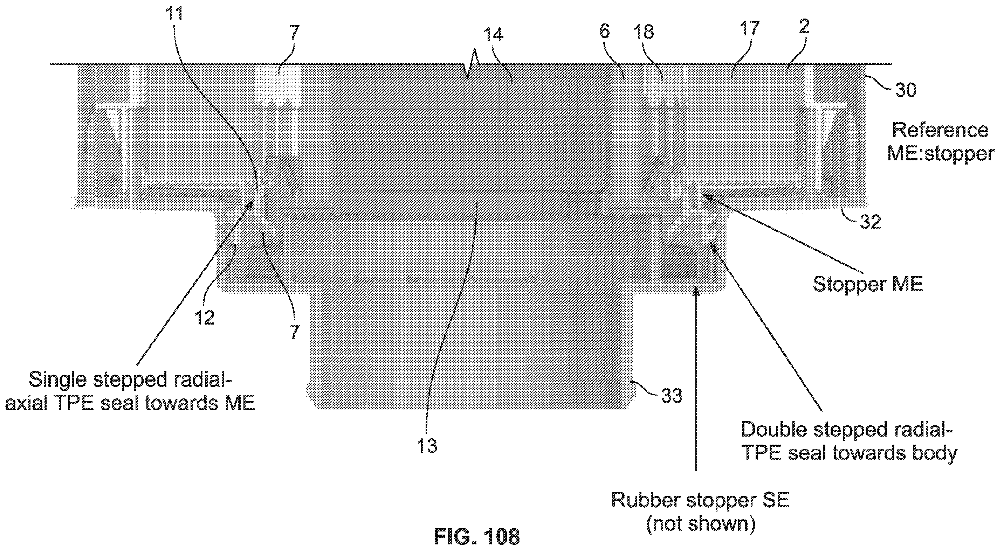

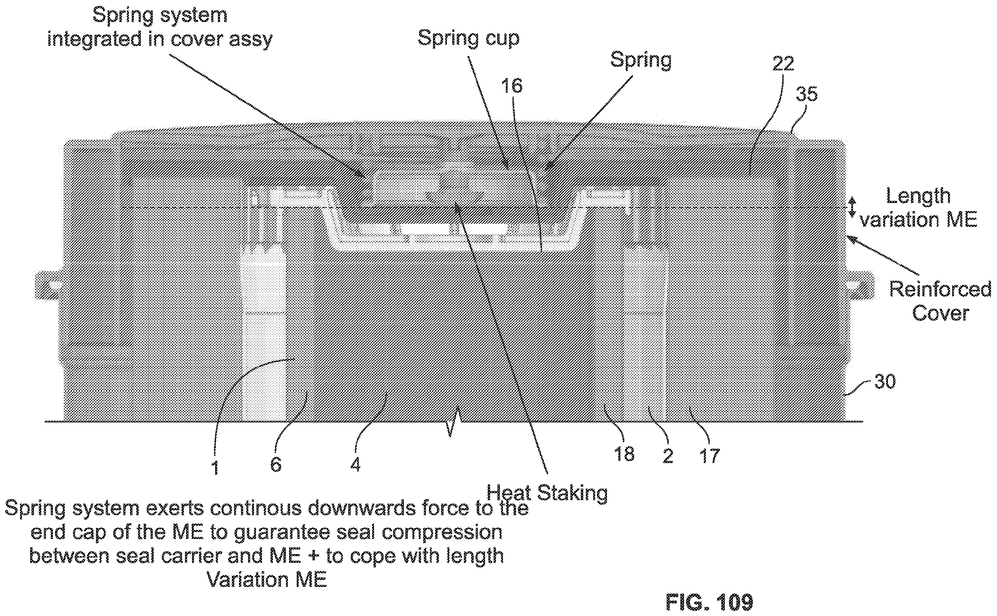

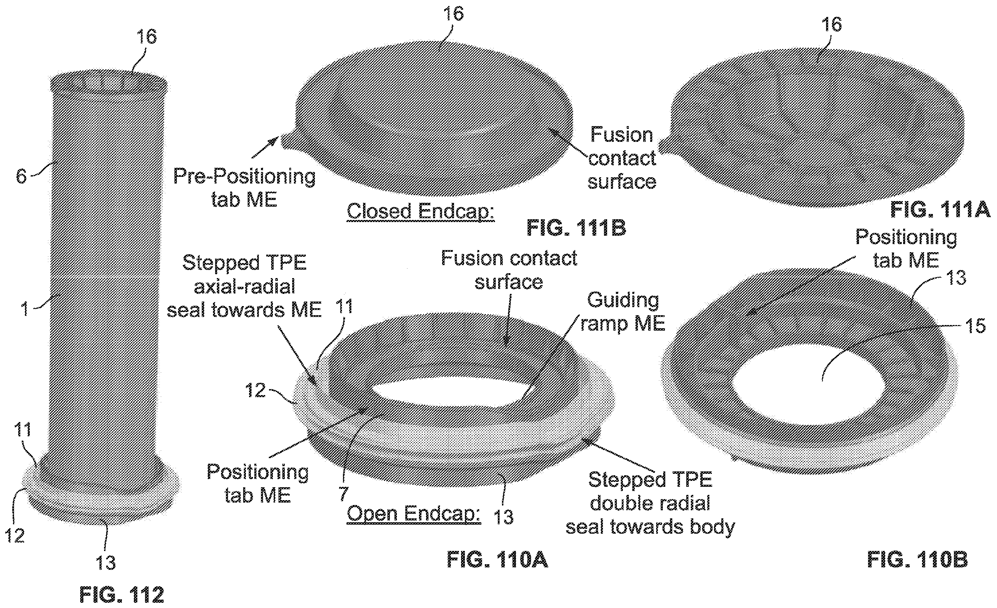

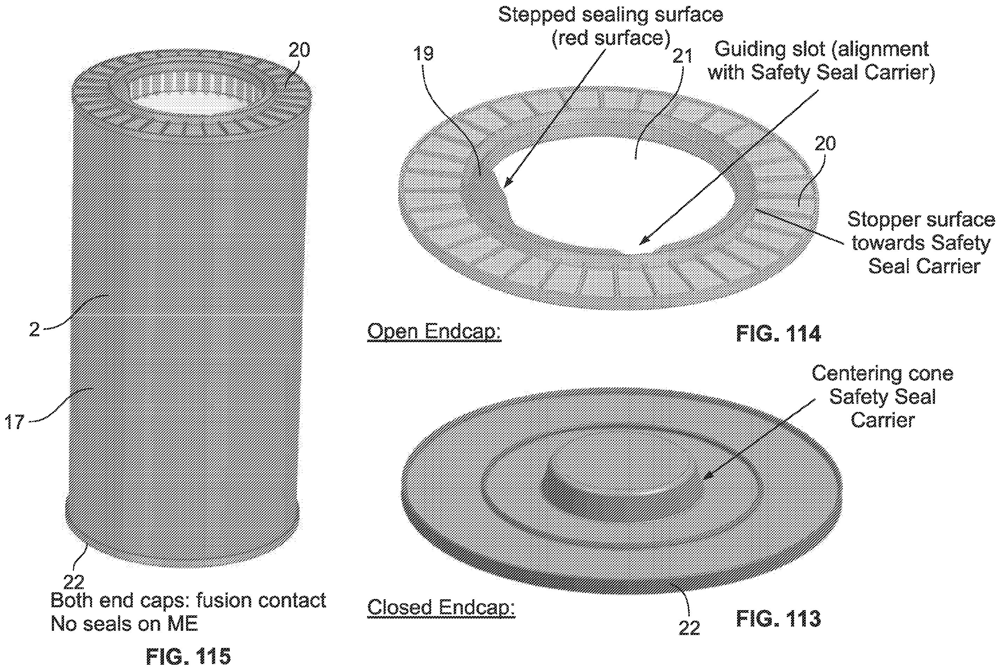

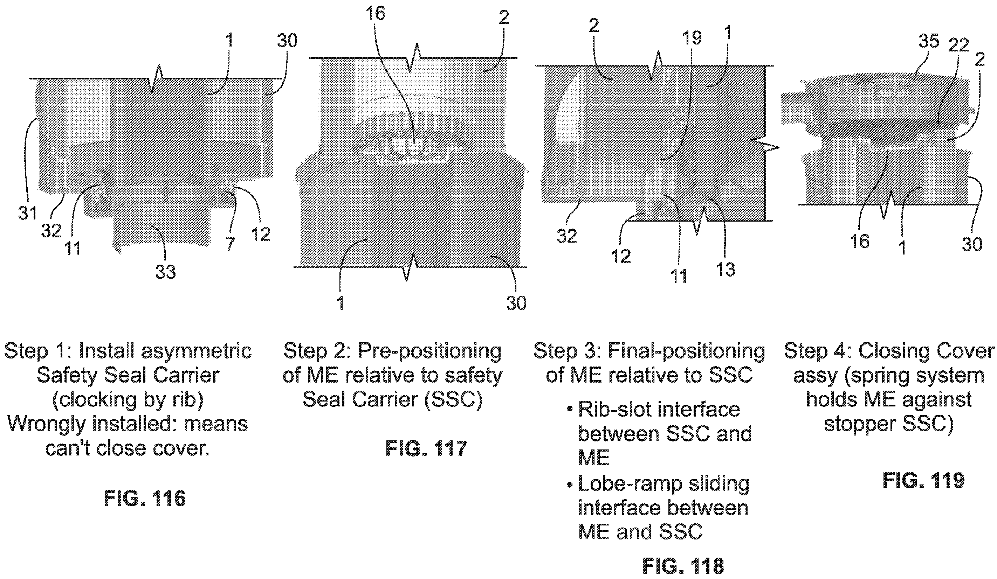

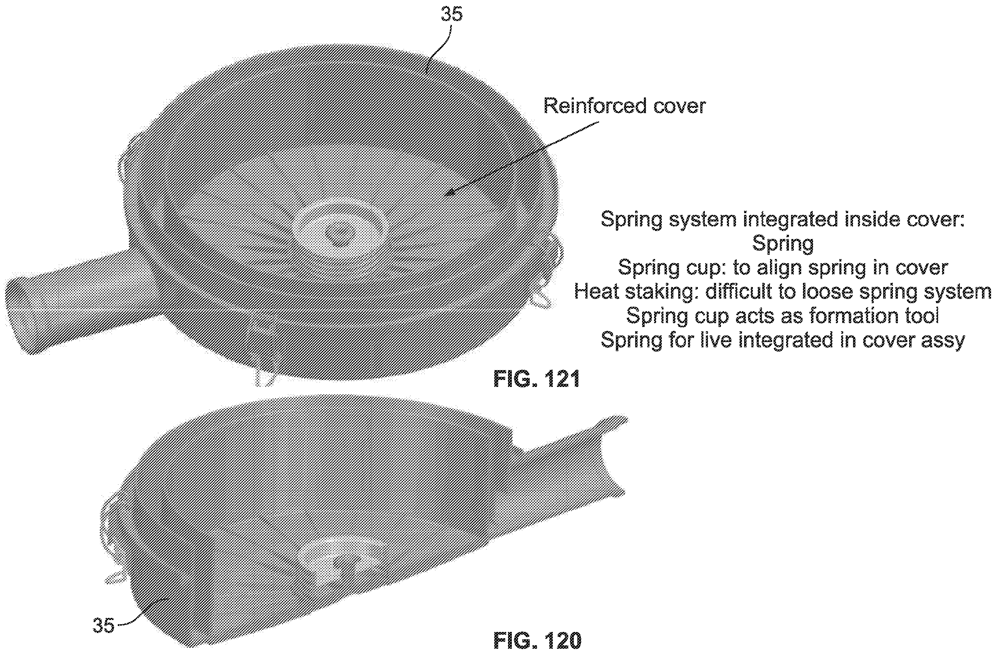

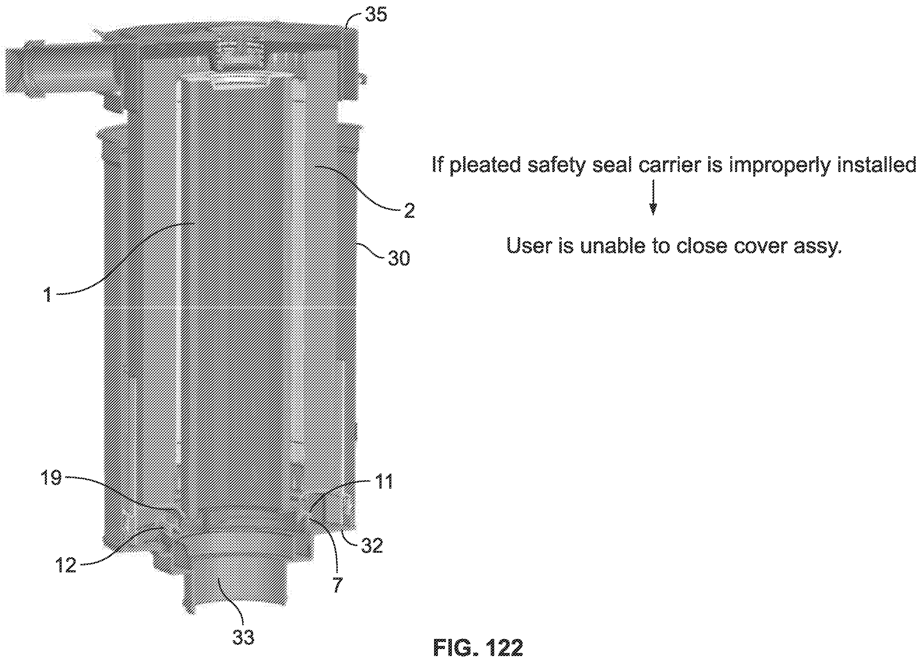

Fig. 106 to 122 shows a further embodiment of a filter assembly according to the disclosure, whereby the same reference numerals describe the same parts as for the embodiments described above. Fig. 116 to Fig. 119 show a sequence on how the main filter element of a filter assembly according to the disclosure can be installed.

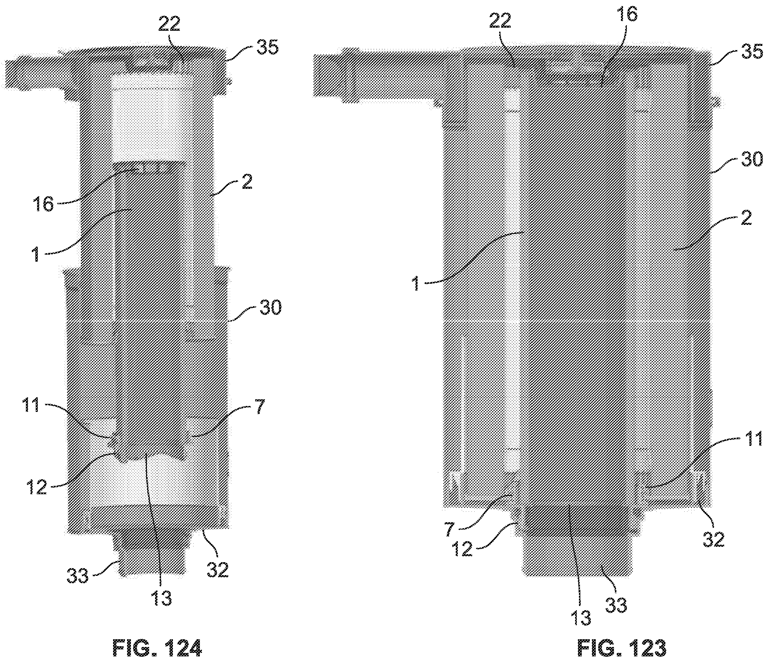

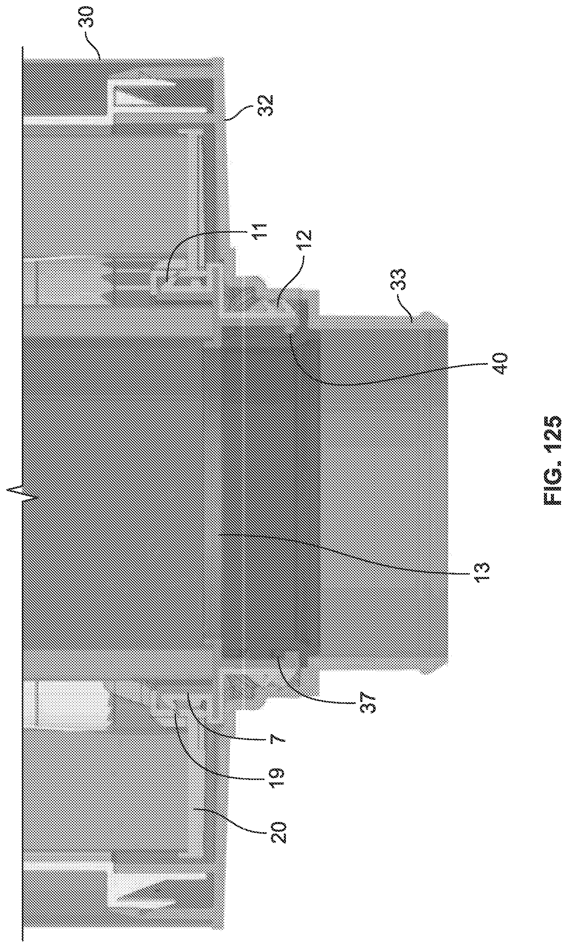

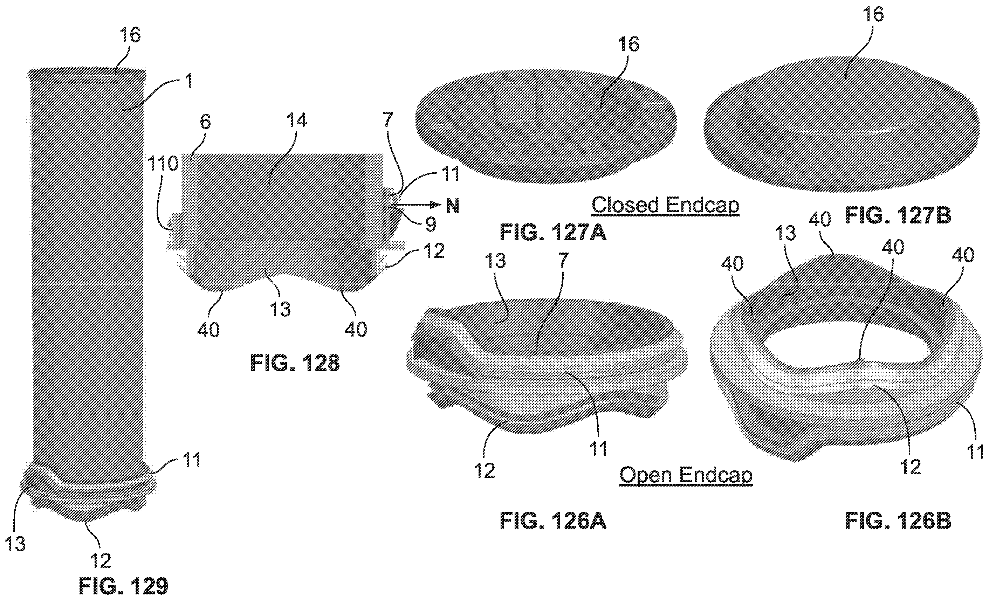

Fig. 123 to 133 shows a further embodiment of a filter assembly according to the disclosure, whereby the same reference numerals describe the same parts as for the embodiments described above.

## Claims

1. A safety filter element (1) suitably to be used in a filter assembly, said safety filter element (1) extending along an axis (A) and comprising:
• a safety filter media (6), whereby the safety filter media (6) at least partially surrounds a safety filter media inner space (14);
• at least one safety filter element endcap (13), whereby the at least one safety filter element endcap (13) has an outlet opening (15) that leads to the safety filter media inner space (14)
wherein the at least one safety filter element endcap (13) comprises a safety filter element circumferential support structure, said safety filter element circumferential support structure being a safety filter element circumferential surface (7), whereby a sealing component (11) is arranged on the safety filter element circumferential support surface and extends along the safety filter element circumferential support surface,
whereby the at least one safety filter element endcap (13) additionally comprises a housing sealing component (12), and
wherein the safety filter element circumferential support surface forms a contour shape with a single-fold rotational symmetry construed as a contour shape configured such that when rotating the closed-loop surface along axis (A), only after a rotation of 360° the contour shape matches up with the initial contour shape when starting the rotation: and wherein the safety filter element endcap has a circular rim that encircles the longitudinal axis (A) of the safety filter element, whereby
• the safety filter element circumferential support structure being provided above the circular rim or on an upward facing surface of the rim; and
• the housing sealing component (12) being provided below the circular rim or on a downward facing surface of the rim.

2. The safety filter element (1) according to claim 1, wherein the safety filter element circumferential support structure is a safety filter element circumferential surface (7) comprising several surface sections (8,9,10,110), whereby at least one of the surface sections (8,9,10,110) is arranged such that a normal vector (N) to the surface section (8,9,10,110) is orientated (a) along the axis (A), or (b) parallel to the axis (A), or (c) to point to the outside of the safety filter element (1).

3. The safety filter element of any one of claims 1 or 2, wherein the safety filter element circumferential support structure is a safety filter element circumferential surface (7) comprising several surface sections (8,9,10,110), and wherein:
• the several surface sections that make up the safety filter element circumferential surface are (a) arranged in the same plane, such that the safety filter element circumferential surface is arranged in said plane, or (b) designed to jointly form the outer surface of a cone, such that the safety filter element circumferential surface is designed to form the outer surface of a cone, or (c) designed to jointly form the outer surface of a cylinder, such that the safety filter element circumferential surface is designed to form the outer surface of a cylinder.

4. The safety filter element of any one of claims 1 to 3, wherein the safety filter element circumferential support structure is a safety filter element circumferential surface (7) comprising several surface sections (8,9,10,110), and wherein
a **first surface section** that belongs to the several surface sections that make up the safety filter element circumferential surface is (a) arranged in a plane, such that at least that part of the safety filter element circumferential surface that is made up of the first surface section is arranged in said plane, or (2) designed to form a section of the outer surface of a cone, such that at least that part of the safety filter element circumferential surface that is made up of the first surface section is designed to form a section of the outer surface of a cone, or (3) designed to form a section of the outer surface of a cylinder, such that at least that part of the safety filter element circumferential surface that is made up of the first surface section is designed to form a section of the outer surface of a cylinder, and
a **second surface section** that belongs to the several surface sections that make up the safety filter element circumferential surface is (1) arranged in a different plane, or (2) designed to form a section of the outer surface of a different cone, or (3) designed to form a section of the outer surface of a different cylinder.

5. The safety filter element of any one of claims 1 to 4, wherein said housing sealing component (12) is arranged on and extends along a housing sealing element circumferential support structure, said housing sealing element circumferential support structure being a housing sealing element circumferential surface, and wherein said housing sealing element circumferential surface is undulating between peaks and valleys.

6. The safety filter element of any one of claims 1 to 4, wherein said housing sealing component (12) is arranged on and extends along a housing sealing element circumferential support structure, said housing sealing element circumferential support structure being a housing sealing element circumferential surface, and wherein said housing sealing element circumferential surface forms a contour shape with a single-fold rotational symmetry.

7. The safety filter element of any one of claims 1 to 6, wherein the sealing component (11) and/or the housing sealing component (12) is a lip seal.

8. A tool catcher for use in a filter assembly, said tool catcher (1) extending along an axis (A) and comprising:
• a safety cage (506), whereby the safety cage (506) has a safety cage inner space (514);
• at least one tool catcher endcap (13), whereby the at least one tool catcher endcap (13) has an outlet opening (15) that leads to the safety cage inner space (514)
wherein the at least one tool catcher endcap (13) comprises a circumferential support structure, said support structure being a circumferential surface (7), whereby a sealing component (11) is arranged on the circumferential support surface and extends along the circumferential support surface,
whereby the tool catcher endcap (13) additionally comprises a housing sealing component (12),
wherein the tool catcher circumferential support surface forms a contour shape with a single-fold rotational symmetry, construed as a contour shape configured such that when rotating the closed-loop surface along axis (A), only after a rotation of 360° the contour shape matches up with the initial contour shape when starting the rotation; and
whereby the tool catcher endcap has a circular rim that encircles the longitudinal axis (A) of the tool catcher,
• the tool catcher circumferential support structure being provided above the circular rim or on an upward facing surface of the rim; and
• the housing sealing component being provided below the circular rim or on a downward facing surface of the rim.

9. A filter system comprising a safety filter element (1) according to any one of claims 1 to 7 and a main filter element (2) comprising a main filter media (17), wherein the main filter media (17) has a main filter media inner space (18)
wherein the main filter element has a main filter element circumferential surface, whereby the sealing component of the safety filter element is in sealing contact with the main filter element circumferential surface.

10. The filter system of claim 9, wherein the main filter element comprises:
• a main filter element circumferential surface, said main filter element circumferential surface comprising several surface sections, whereby at least one of the surface sections is arranged such that the normal vector to the surface section is orientated (a) along the longitudinal axis, or (b) parallel to the longitudinal axis, or (c) towards the longitudinal axis.

11. The filter system of any one of claims 9 to 10, wherein a main filter element endcap (20) is provided that is arranged on one end of the main filter media (17) and wherein the main filter element circumferential surface (19) is arranged on the main filter element endcap (20).

12. The filter system of any one of claims 9 to 11, wherein the safety filter element has a first protrusion that projects radially and has a second protrusion that projects radially, whereby the first protrusion is smaller than the second protrusion; and
whereby the main filter element has a first recess and has a second recess, whereby the first recess can accommodate the first protrusion but not the second protrusion and the second recess can accommodate the second protrusion.

13. The filter system of any one of claims 9 to 12, wherein the safety filter element has a radially extending safety filter element abutment surface and the main filter element has a main filter element abutment surface that can come into contact with the safety filter element abutment surface, the abutment of the main filter element abutment surface with the safety filter element abutment surface limiting the relative movement of the main filter element relative to the safety filter element along the longitudinal axis.

14. The filter system of any of claims 9 to 13, wherein a housing engagement arrangement is provided between the safety filter element and the housing, wherein the engagement arrangement has a first protrusion arranged on either the safety filter element or the housing, and wherein the engagement arrangement has a bayonet channel arranged on that part of the safety filter element or the housing that the protrusion is not arranged on, whereby the protrusion can engage the bayonet channel to exchangeably connect the safety filter element to the housing in a bayonet manner.

## Patentansprüche

1. Sicherheitsfilterelement (1), das zweckmäßig in einer Filterbaugruppe zu verwenden ist, wobei sich das Sicherheitsfilterelement (1) entlang einer Achse (A) erstreckt und Folgendes umfasst:
- ein Sicherheitsfiltermedium (6), wobei das Sicherheitsfiltermedium (6) zumindest teilweise einen Sicherheitsfiltermedien-Innenraum (14) umgibt,
- mindestens eine Sicherheitsfilterelement-Endkappe (13), wobei die mindestens eine Sicherheitsfilterelement-Endkappe (13) eine Auslassöffnung (15) aufweist, die zu dem Sicherheitsfiltermedien-Innenraum (14) führt,
wobei die mindestens eine Sicherheitsfilterelement-Endkappe (13) eine Sicherheitsfilterelement-Umfangsstützstruktur umfasst, wobei die Sicherheitsfilterelement-Umfangsstützstruktur eine Sicherheitsfilterelement-Umfangsfläche (7) ist, wobei eine Abdichtungskomponente (11) an der Sicherheitsfilterelement-Umfangsstützfläche angeordnet ist und sich entlang der Sicherheitsfilterelement-Umfangsstützfläche erstreckt,
wobei die mindestens eine Sicherheitsfilterelement-Endkappe (13) außerdem eine Gehäuseabdichtungskomponente (12) umfasst und
wobei die Sicherheitsfilterelement-Umfangsstützfläche eine Umrissform mit einer einfachen Rotationssymmetrie bildet, die als eine Umrissform aufzufassen ist, die derart konfiguriert ist, dass beim Drehen der endlosen Oberfläche entlang der Achse (A) erst nach einer Drehung von 360° die Umrissform mit der anfänglichen Umrissform beim Beginnen der Drehung übereinstimmt, und
wobei die Sicherheitsfilterelement-Endkappe einen kreisförmigen Rand aufweist, der die Längsachse (A) des Sicherheitsfilterelements umschließt, wobei
- die Sicherheitsfilterelement-Umfangsstützstruktur oberhalb des kreisförmigen Randes oder an einer nach oben weisenden Oberfläche des Randes bereitgestellt wird und
- die Gehäuseabdichtungskomponente (12) unterhalb des kreisförmigen Randes oder an einer nach unten weisenden Oberfläche des Randes bereitgestellt wird.

2. Sicherheitsfilterelement (1) nach Anspruch 1, wobei die Sicherheitsfilterelement-Umfangsstützstruktur eine Sicherheitsfilterelement-Umfangsfläche (7) ist, die mehrere Oberflächensektionen (8, 9, 10, 110) umfasst, wobei mindestens eine von den Oberflächensektionen (8. 9. 10, 110) derart angeordnet ist, dass ein Normalenvektor (N) zu der Oberflächensektion (8, 9, 10, 110) (a) entlang der Achse (A) oder (b) parallel zu der Achse (A) oder (c) so, dass er zu der Außenseite des Sicherheitsfilterelements (1) zeigt, ausgerichtet ist.

3. Sicherheitsfilterelement (1) nach einem der Ansprüche 1 oder 2, wobei die Sicherheitsfilterelement-Umfangsstützstruktur eine Sicherheitsfilterelement-Umfangsfläche (7) ist, die mehrere Oberflächensektionen (8, 9, 10, 110) umfasst, und wobei:
- die mehreren Oberflächensektionen, welche die Sicherheitsfilterelement-Umfangsfläche ausmachen, (a) derart in derselben Ebene angeordnet sind, dass die Sicherheitsfilterelement-Umfangsfläche in der Ebene angeordnet ist, oder (b) so gestaltet sind, dass sie gemeinsam derart die Außenfläche eines Kegels bilden, dass die Sicherheitsfilterelement-Umfangsfläche so gestaltet ist, dass sie die Außenfläche eines Kegels bildet, oder (c) so gestaltet sind, dass sie gemeinsam derart die Außenfläche eines Zylinders bilden, dass die Sicherheitsfilterelement-Umfangsfläche so gestaltet ist, dass sie die Außenfläche eines Zylinders bildet.

4. Sicherheitsfilterelement nach einem der Ansprüche 1 bis 3, wobei die Sicherheitsfilterelement-Umfangsstützstruktur eine Sicherheitsfilterelement-Umfangsfläche (7) ist, die mehrere Oberflächensektionen (8, 9, 10, 110) umfasst, und wobei
eine erste Oberflächensektion, die zu den mehreren Oberflächensektionen, welche die Sicherheitsfilterelement-Umfangsfläche ausmachen, gehört, (a) derart in einer Ebene angeordnet ist, dass zumindest derjenige Teil der Sicherheitsfilterelement-Umfangsfläche, der aus der ersten Oberflächensektion besteht, in der Ebene angeordnet ist, oder (2) so gestaltet ist, dass sie derart eine Sektion der Außenfläche eines Kegels bildet, dass zumindest derjenige Teil der Sicherheitsfilterelement-Umfangsfläche, der aus der ersten Oberflächensektion besteht, so gestaltet ist, dass er eine Sektion der Außenfläche eines Kegels bildet, oder (3) so gestaltet ist, dass sie derart eine Sektion der Außenfläche eines Zylinders bildet, dass zumindest derjenige Teil der Sicherheitsfilterelement-Umfangsfläche, der aus der ersten Oberflächensektion besteht, so gestaltet ist, dass er eine Sektion der Außenfläche eines Zylinders bildet, und
eine zweite Oberflächensektion, die zu den mehreren Oberflächensektionen, welche die Sicherheitsfilterelement-Umfangsfläche ausmachen, gehört, (1) in einer anderen Ebene angeordnet ist oder (2) so gestaltet ist, dass sie eine Sektion der Außenfläche eines anderen Kegels bildet, oder (3) so gestaltet ist, dass sie eine Sektion der Außenfläche eines anderen Zylinders bildet.

5. Sicherheitsfilterelement nach einem der Ansprüche 1 bis 4, wobei die Gehäuseabdichtungskomponente (12) an einer Gehäuseabdichtungselement-Umfangsstützstruktur angeordnet ist und sich entlang derselben erstreckt, wobei die Gehäuseabdichtungselement-Umfangsstützstruktur eine Gehäuseabdichtungselement-Umfangsfläche ist und wobei sich die Gehäuseabdichtungselement-Umfangsfläche zwischen Spitzen und Tälern wellt.

6. Sicherheitsfilterelement nach einem der Ansprüche 1 bis 4, wobei die Gehäuseabdichtungskomponente (12) an einer Gehäuseabdichtungselement-Umfangsstützstruktur angeordnet ist und sich entlang derselben erstreckt, wobei die Gehäuseabdichtungselement-Umfangsstützstruktur eine Gehäuseabdichtungselement-Umfangsfläche ist und wobei die Gehäuseabdichtungselement-Umfangsfläche eine Umrissform mit einer einfachen Rotationssymmetrie bildet.

7. Sicherheitsfilterelement nach einem der Ansprüche 1 bis 6, wobei die Abdichtungskomponente (11) und/oder die Gehäuseabdichtungskomponente (12) eine Lippendichtung ist.

8. Werkzeug-Fangeinrichtung zur Verwendung in einer Filterbaugruppe, wobei sich die Werkzeug-Fangeinrichtung (1) entlang einer Achse (A) erstreckt und Folgendes umfasst:
- einen Sicherheitskäfig (506), wobei der Sicherheitskäfig (506) einen Sicherheitskäfig-Innenraum (514) aufweist,
- mindestens eine Werkzeug-Fangeinrichtungsendkappe (13), wobei die mindestens eine Werkzeug-Fangeinrichtungsendkappe (13) eine Auslassöffnung (15) aufweist, die zu dem Sicherheitskäfig-Innenraum (514) führt,
wobei die mindestens eine Werkzeug-Fangeinrichtungsendkappe (13) eine Umfangsstützstruktur umfasst, wobei die Stützstruktur eine Umfangsfläche (7) ist, wobei eine Abdichtungskomponente (11) an der Umfangsstützfläche angeordnet ist und sich entlang der Umfangsstützfläche erstreckt,
wobei die Werkzeug-Fangeinrichtungsendkappe (13) außerdem eine Gehäuseabdichtungskomponente (12) umfasst,
wobei die Umfangsstützfläche der Werkzeug-Fangeinrichtung eine Umrissform mit einer einfachen Rotationssymmetrie bildet, die als eine Umrissform aufzufassen ist, die derart konfiguriert ist, dass beim Drehen der endlosen Oberfläche entlang der Achse (A) erst nach einer Drehung von 360° die Umrissform mit der anfänglichen Umrissform beim Beginnen der Drehung übereinstimmt, und
wobei die Werkzeug-Fangeinrichtungsendkappe einen kreisförmigen Rand aufweist, der die Längsachse (A) der Werkzeug-Fangeinrichtung umschließt, wobei
- die Umfangsstützstruktur der Werkzeug-Fangeinrichtung oberhalb des kreisförmigen Randes oder an einer nach oben weisenden Oberfläche des Randes bereitgestellt wird und
- die Gehäuseabdichtungskomponente unterhalb des kreisförmigen Randes oder an einer nach unten weisenden Oberfläche des Randes bereitgestellt wird.

9. Filtersystem, umfassend ein Sicherheitsfilterelement (1) nach einem der Ansprüche 1 bis 7 und ein Hauptfilterelement (2), das ein Hauptfiltermedium (17) umfasst, wobei das Hauptfiltermedium (17) einen Hauptfiltermedien-Innenraum (18) aufweist,
wobei das Hauptfilterelement eine Hauptfilterelement-Umfangsfläche aufweist, wobei sich die Abdichtungskomponente des Hauptfilterelements in abdichtendem Kontakt mit der Hauptfilterelement-Umfangsfläche befindet.

10. Filtersystem nach Anspruch 9, wobei das Hauptfilterelement Folgendes umfasst:
- eine Hauptfilterelement-Umfangsfläche, wobei die Hauptfilterelement-Umfangsfläche mehrere Oberflächensektionen umfasst, wobei mindestens eine von den Oberflächensektionen derart angeordnet ist, dass der Normalenvektor zu der Oberflächensektion (a) entlang der Längsachse oder (b) parallel zu der Längsachse oder (c) hin zu der Längsachse ausgerichtet ist.

11. Filtersystem nach einem der Ansprüche 9 bis 10, wobei eine Hauptfilterelement-Endkappe (20) bereitgestellt wird, die an einem Ende des Hauptfiltermediums (17) angeordnet ist, und wobei die Hauptfilterelement-Umfangsfläche (19) an der Hauptfilterelement-Endkappe (20) angeordnet ist.

12. Filtersystem nach einem der Ansprüche 9 bis 11, wobei das Sicherheitsfilterelement einen ersten Vorsprung, der in Radialrichtung vorspringt, aufweist und einen zweiten Vorsprung, der in Radialrichtung vorspringt, aufweist, wobei der erste Vorsprung kleiner ist als der zweite Vorsprung, und
wobei das Hauptfilterelement eine erste Aussparung aufweist und eine zweite Aussparung aufweist, wobei die erste Aussparung den ersten Vorsprung, aber nicht den zweiten Vorsprung, aufnehmen kann und die zweite Aussparung den zweiten Vorsprung aufnehmen kann.

13. Filtersystem nach einem der Ansprüche 9 bis 12, wobei das Sicherheitsfilterelement eine sich in Radialrichtung erstreckende Sicherheitsfilterelement-Anlagefläche aufweist und das Hauptfilterelement eine Hauptfilterelement-Anlagefläche, die mit der Sicherheitsfilterelement-Anlagefläche in Kontakt kommen kann, aufweist, wobei das Anliegen der Hauptfilterelement-Anlagefläche mit der Sicherheitsfilterelement-Anlagefläche die relative Bewegung des Hauptfilterelements im Verhältnis zu dem Sicherheitsfilterelement entlang der Längsachse begrenzt.

14. Filtersystem nach einem der Ansprüche 9 bis 13, wobei eine Gehäuse-Eingriffsanordnung zwischen dem Sicherheitsfilterelement und dem Gehäuse bereitgestellt wird, wobei die Eingriffsanordnung einen ersten Vorsprung aufweist, der an entweder dem Sicherheitsfilterelement oder dem Gehäuse angeordnet ist, und wobei die Eingriffsanordnung einen Bajonettkanal aufweist, der an demjenigen Teil von dem Sicherheitsfilterelements oder dem Gehäuse angeordnet ist, an dem der Vorsprung nicht angeordnet ist, wobei der Vorsprung den Bajonettkanal in Eingriff nehmen kann, um auf eine Bajonettweise das Sicherheitsfilterelement auswechselbar mit dem Gehäuse zu verbinden.

## Revendications

1. Élément de filtration de sécurité (1) approprié pour être utilisé dans un ensemble de filtration, ledit élément de filtration de sécurité (1) s'étendant le long d'un axe (A) et comprenant :
• un média de filtration de sécurité (6), de sorte que le média de filtration de sécurité (6) entoure au moins partiellement un espace intérieur de média de filtration de sécurité (14) ;
• au moins un capuchon d'extrémité d'élément de filtration de sécurité (13), de sorte que l'au moins un capuchon d'extrémité d'élément de filtration de sécurité (13) présente une ouverture de sortie (15) qui conduit à l'espace intérieur de média de filtration de sécurité (14),
dans lequel l'au moins un capuchon d'extrémité d'élément de filtration de sécurité (13) comprend une structure de support circonférentielle d'élément de filtration de sécurité, ladite structure de support circonférentielle d'élément de filtration de sécurité étant une surface circonférentielle d'élément de filtration de sécurité (7), de sorte qu'un composant d'étanchéité (11) est agencé sur la surface de support circonférentielle d'élément de filtration de sécurité et s'étend le long de la surface de support circonférentielle d'élément de filtration de sécurité,
de sorte que l'au moins un capuchon d'extrémité d'élément de filtration de sécurité (13) comprend de plus un composant d'étanchéité de logement (12), et
dans lequel la surface de support circonférentielle d'élément de filtration de sécurité forme une forme de contour avec une symétrie de rotation à un seul pli construite comme une forme de contour configurée de sorte que lors de la rotation de la surface en boucle fermée le long de l'axe (A), la forme de contour ne correspond à la forme de contour initiale au démarrage de la rotation qu'après une rotation de 360° ; et
dans lequel le capuchon d'extrémité d'élément de filtration de sécurité présente un rebord circulaire qui encercle l'axe longitudinal (A) de l'élément de filtration de sécurité, de sorte que
• la structure de support circonférentielle d'élément de filtration de sécurité est disposée au-dessus du rebord circulaire ou sur une surface orientée vers le haut du rebord ; et
• le composant d'étanchéité de logement (12) est disposé en dessous du rebord circulaire ou sur une surface orientée vers le bas du rebord.

2. Élément de filtration de sécurité (1) selon la revendication 1, dans lequel la structure de support circonférentielle d'élément de filtration de sécurité est une surface circonférentielle d'élément de filtration de sécurité (7) comprenant plusieurs sections de surface (8, 9, 10, 110), de sorte qu'au moins une des sections de surface (8, 9, 10, 110) est agencée de sorte qu'un vecteur normal (N) à la section de surface (8, 9, 10, 110) est orienté (a) le long de l'axe (A), ou (b) parallèlement à l'axe (A), ou (c) pour pointer vers l'extérieur de l'élément de filtration de sécurité (1).

3. Élément de filtration de sécurité selon l'une quelconque des revendications 1 ou 2, dans lequel la structure de support circonférentielle d'élément de filtration de sécurité est une surface circonférentielle d'élément de filtration de sécurité (7) comprenant plusieurs sections de surface (8, 9, 10, 110), et dans lequel :
• les plusieurs sections de surface qui constituent la surface circonférentielle d'élément de filtration de sécurité sont (a) agencées dans le même plan, de sorte que la surface circonférentielle d'élément de filtration de sécurité est agencée dans ledit plan, ou (b) conçues pour former conjointement la surface extérieure d'un cône, de sorte que la surface circonférentielle d'élément de filtration de sécurité est conçue pour former la surface extérieure d'un cône, ou (c) conçues pour former conjointement la surface extérieure d'un cylindre, de sorte que la surface circonférentielle d'élément de filtration de sécurité est conçue pour former la surface extérieure d'un cylindre.

4. Élément de filtration de sécurité selon l'une quelconque des revendications 1 à 3, dans lequel la structure de support circonférentielle d'élément de filtration de sécurité est une surface circonférentielle d'élément de filtration de sécurité (7) comprenant plusieurs sections de surface (8, 9, 10, 110), et dans lequel
une **première section de surface** qui appartient aux plusieurs sections de surface qui constituent la surface circonférentielle d'élément de filtration de sécurité est (a) agencée dans un plan, de sorte qu'au moins cette partie de la surface circonférentielle d'élément de filtration de sécurité qui est constituée de la première section de surface est agencée dans ledit plan, ou (2) conçue pour former une section de la surface extérieure d'un cône, de sorte qu'au moins cette partie de la surface circonférentielle d'élément de filtration de sécurité qui est constituée de la première section de surface est conçue pour former une section de la surface extérieure d'un cône, ou (3) conçue pour former une section de la surface extérieure d'un cylindre, de sorte qu'au moins cette partie de la surface circonférentielle d'élément de filtration de sécurité qui est constituée de la première section de surface est conçue pour former une section de la surface extérieure d'un cylindre, et
une **seconde section de surface** qui appartient aux plusieurs sections de surface qui constituent la surface circonférentielle d'élément de filtration de sécurité est (1) agencée dans un plan différent, ou (2) conçue pour former une section de la surface extérieure d'un cône différent, ou (3) conçue pour former une section de la surface extérieure d'un cylindre différent.

5. Élément de filtration de sécurité selon l'une quelconque des revendications 1 à 4, dans lequel ledit composant d'étanchéité de logement (12) est agencé sur et s'étend le long d'une structure de support circonférentielle d'élément d'étanchéité de logement, ladite structure de support circonférentielle d'élément d'étanchéité de logement étant une surface circonférentielle d'élément d'étanchéité de logement, et dans lequel ladite surface circonférentielle d'élément d'étanchéité de logement ondule entre des pics et des vallées.

6. Élément de filtration de sécurité selon l'une quelconque des revendications 1 à 4, dans lequel ledit composant d'étanchéité de logement (12) est agencé sur et s'étend le long d'une structure de support circonférentielle d'élément d'étanchéité de logement, ladite structure de support circonférentielle d'élément d'étanchéité de logement étant une surface circonférentielle d'élément d'étanchéité de logement, et dans lequel ladite surface circonférentielle d'élément d'étanchéité de logement forme une forme de contour avec une symétrie de rotation à un seul pli.

7. Élément de filtration de sécurité selon l'une quelconque des revendications 1 à 6, dans lequel le composant d'étanchéité (11) et/ou le composant d'étanchéité de logement (12) est un joint à lèvre.

8. Attrape-outil pour utilisation dans un ensemble de filtration, ledit attrape-outil (1) s'étendant le long d'un axe (A) et comprenant :
• une cage de sécurité (506), de sorte que la cage de sécurité (506) présente un espace intérieur de cage de sécurité (514) ;
• au moins un capuchon d'extrémité d'attrape-outil (13), dans lequel l'au moins un capuchon d'extrémité d'attrape-outil (13) présente une ouverture de sortie (15) qui conduit à l'espace intérieur de cage de sécurité (514), dans lequel l'au moins un capuchon d'extrémité d'attrape-outil (13) comprend une structure de support circonférentielle, ladite structure de support étant une surface circonférentielle (7), de sorte qu'un composant d'étanchéité (11) est agencé sur la surface de support circonférentielle et s'étend le long de la surface de support circonférentielle,
de sorte que le capuchon d'extrémité d'attrape-outil (13) comprend de plus un composant d'étanchéité de logement (12),
dans lequel la surface de support circonférentielle d'attrape-outil forme une forme de contour avec une symétrie de rotation à un seul pli, construite comme une forme de contour configurée de sorte que lors de la rotation de la surface en boucle fermée le long de l'axe (A), la forme de contour ne correspond à la forme de contour initiale au démarrage de la rotation qu'après une rotation de 360° ; et
de sorte que le capuchon d'extrémité d'attrape-outil présente un rebord circulaire qui encercle l'axe longitudinal (A) de l'attrape-outil,
• la structure de support circonférentielle d'attrape-outil étant disposée au-dessus du rebord circulaire ou sur une surface orientée vers le haut du rebord ; et
• le composant d'étanchéité de logement étant disposé en dessous du rebord circulaire ou sur une surface orientée vers le bas du rebord.

9. Système de filtration comprenant un élément de filtration de sécurité (1) selon l'une quelconque des revendications 1 à 7 et un élément de filtration principal (2) comprenant un média de filtration principal (17), dans lequel le média de filtration principal (17) présente un espace intérieur de média de filtration principal (18),
dans lequel l'élément de filtration principal présente une surface circonférentielle d'élément de filtration principal, de sorte que le composant d'étanchéité de l'élément de filtration de sécurité est en contact d'étanchéité avec la surface circonférentielle d'élément de filtration principal.

10. Système de filtration selon la revendication 9, dans lequel l'élément de filtration principal comprend :
• une surface circonférentielle d'élément de filtration principal, ladite surface circonférentielle d'élément de filtration principal comprenant plusieurs sections de surface, de sorte qu'au moins une des sections de surface est agencée de sorte que le vecteur normal à la section de surface est orienté (a) le long de l'axe longitudinal, ou (b) parallèlement à l'axe longitudinal, ou (c) vers l'axe longitudinal.

11. Système de filtration selon l'une quelconque des revendications 9 à 10, dans lequel un capuchon d'extrémité d'élément de filtration principal (20) est prévu qui est agencé sur une extrémité particulière du média de filtration principal (17) et dans lequel la surface circonférentielle d'élément de filtration principal (19) est agencée sur le capuchon d'extrémité d'élément de filtration principal (20).

12. Système de filtration selon l'une quelconque des revendications 9 à 11, dans lequel l'élément de filtration de sécurité présente une première protubérance qui fait saillie de façon radiale et présente une seconde protubérance qui fait saillie de façon radiale, de sorte que la première protubérance est plus petite que la seconde protubérance ; et
de sorte que l'élément de filtration principal présente un premier évidement et présente un second évidement, de sorte que le premier évidement peut accueillir la première protubérance mais pas la seconde protubérance et le second évidement peut accueillir la seconde protubérance.

13. Système de filtration selon l'une quelconque des revendications 9 à 12, dans lequel l'élément de filtration de sécurité présente une surface de butée d'élément de filtration de sécurité s'étendant de façon radiale et l'élément de filtration principal présente une surface de butée d'élément de filtration principal qui peut entrer en contact avec la surface de butée d'élément de filtration de sécurité, la butée de la surface de butée d'élément de filtration principal avec la surface de butée d'élément de filtration de sécurité limitant le mouvement relatif de l'élément de filtration principal par rapport à l'élément de filtration de sécurité le long de l'axe longitudinal.

14. Système de filtration selon l'une quelconque des revendications 9 à 13, dans lequel un agencement de mise en prise de logement est prévu entre l'élément de filtration de sécurité et le logement, dans lequel l'agencement de mise en prise présente une première protubérance agencée soit sur l'élément de filtration de sécurité soit sur le logement, et dans lequel l'agencement de mise en prise présente un canal à baïonnette agencé sur cette partie de l'élément de filtration de sécurité ou du logement sur laquelle la protubérance n'est pas agencée, de sorte que la protubérance peut mettre en prise le canal à baïonnette pour connecter de manière interchangeable l'élément de filtration de sécurité au logement d'une manière à baïonnette.
